(19) **Europäisches Patentamt / European Patent Office / Office européen des brevets**

(11) **EP 4 787 862 A1**

(12) **EUROPEAN PATENT APPLICATION**
published in accordance with Art. 153(4) EPC

(43) Date of publication:
05.08.2026 Bulletin 2026/32

(21) Application number: 24873076.4

(22) Date of filing: 30.09.2024

(51) International Patent Classification (IPC):
H04N 19/597 *(2014.01)*     H04N 19/30 *(2014.01)*
H04N 19/119 *(2014.01)*

(52) Cooperative Patent Classification (CPC):
H04N 19/119; H04N 19/30; H04N 19/597

(86) International application number:
PCT/KR2024/014876

(87) International publication number:
WO 2025/071369 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 US 202363540957 P

(71) Applicant: LG Electronics Inc.
Yeongdeungpo-gu
Seoul 07336 (KR)

(72) Inventors:
• PARK, Hanje
  Seoul 06772 (KR)
• BYEON, Joohyung
  Seoul 01891 (KR)
• SIM, Donggyu
  Seoul 02874 (KR)

(74) Representative: Jung, Minkyu
Wuesthoff & Wuesthoff
Patentanwälte und Rechtsanwalt PartG mbB
Schweigerstraße 2
81541 München (DE)

(54) **MESH DATA TRANSMISSION DEVICE, MESH DATA TRANSMISSION METHOD, MESH DATA RECEPTION DEVICE, AND MESH DATA RECEPTION METHOD**

(57)    A decoding method according to embodiments may comprise: a base mesh processing step of reconstructing a base mesh from a base mesh bitstream; a displacement information processing step of reconstructing displacement information from a displacement vector bitstream; a reconstruction step of reconstructing a mesh on the basis of the base mesh and the displacement information; and a texture map processing step of reconstructing a texture map from a texture map bitstream.

# FIG. 22

*sps_packing_method = 0*

(a)

*sps_packing_method = 1*

(b)

[ ] : MCTS (or subpicture)

[ ] : CTU

## Description

### TECHNICAL FIELD

Embodiments provide a method for providing 3D content to provide a user with various services such as virtual reality (VR), augmented reality (AR), mixed reality (MR), and self-driving services.

### BACKGROUND

Point cloud data or mesh data in 3D content is a set of points in 3D space. However, it is difficult to create point cloud data or mesh data due to the large amount of points in 3D space.

In other words, a large throughput is required to transmit and receive 3D data with a considerable number of points, such as a point cloud or mesh data.

### DISCLOSURE

### Technical Problem

An object of the present disclosure is to provide an apparatus and method for efficiently transmitting and receiving mesh data to resolve the aforementioned issue.

Another object of the present disclosure is to provide an apparatus and method to address the latency and encoding/decoding complexity of mesh data.

Another object of the present disclosure is to provide an apparatus and method for efficiently performing encoding and decoding of displacement vectors.

Embodiments are not limited to the above-described objects, and the scope of the embodiments may be extended to other objects that can be inferred by those skilled in the art based on the entire contents of the present disclosure.

### Technical Solution

To achieve the above object and other advantages, according to embodiments, a decoding method may include receiving a bitstream including mesh data, and decoding the mesh data.

According to embodiments, the decoding of the mesh data may include base mesh processing for reconstructing a base mesh from a base mesh bitstream included in the bitstream, displacement information processing for reconstructing displacement information from a displacement vector bitstream included in the bitstream, reconstruction for reconstructing a mesh based on the base mesh and the displacement information, and texture map processing for reconstructing a texture map from a texture map bitstream included in the bitstream.

According to embodiments, the displacement information processing may include decoding the displacement vector bitstream into displacement information, and performing reverse packing on at least one packing unit in which some of the decoded displacement information is packed based on a target level of the mesh to be reconstructed.

According to embodiments, the at least one packing unit may be configured in a rectangular area, and widths of the at least one packing unit may be all the same.

According to embodiments, the bitstream may include information for identifying a start position of the at least one packing unit or information for identifying an order of the reverse packing.

According to embodiments, a decoding device may include a receiver configured to receive a bitstream including mesh data, and a decoder configured to decode the mesh data.

According to embodiments, the decoder may include a base mesh processor configured to reconstruct a base mesh from a base mesh bitstream included in the bitstream, a displacement information processor configured to reconstruct displacement information from a displacement vector bitstream included in the bitstream, a reconstructor configured to reconstruct a mesh based on the base mesh and the displacement information, and a texture map processor configured to reconstruct a texture map from a texture map bitstream included in the bitstream.

According to embodiments, the displacement information processor may include a displacement information decoder configured to decode the displacement vector bitstream into displacement information, and a displacement information reverse packer configured to perform reverse packing on at least one packing unit in which some of the decoded displacement information is packed based on a target level of the mesh to be reconstructed.

According to embodiments, the at least one packing unit may be configured in a rectangular area, and widths of the at least one packing unit may be all the same.

According to embodiments, the bitstream may include information for identifying a start position of the at least one packing unit or information for identifying an order of the reverse packing.

According to embodiments, the encoding method may include encoding mesh data and transmitting a bitstream including the encoded mesh data.

According to embodiments, the encoding may include base mesh processing for generating a base mesh bitstream by encoding a base mesh generated by simplifying an original mesh, displacement information processing for generating a displacement vector bitstream by encoding displacement information generated based on the base mesh, mesh reconstructing for reconstructing a mesh based on the encoded base mesh and the encoded displacement information, and texture map processing for generating a texture map bitstream by encoding a texture map generated based on the original mesh and the reconstructed mesh.

According to embodiments, the displacement information processing may include configuring a packing unit for each subdivision level and performing packing with the packing unit for displacement information for each subdivision level, and encoding displacement information packed into the packing unit.

According to embodiments, the packing unit may be configured in a rectangular area, and widths of respective packing units may be the same.

According to embodiments, the bitstream may include information for identifying a start position of the at least one packing unit or information for identifying an order of the packing.

According to embodiments, a computer program stored on a computer-readable recording medium may be combined with a computer, which is hardware, to perform the method.

## Advantageous Effects

According to embodiments, a mesh data transmission method, a mesh data transmission device, a mesh data reception method, and a mesh data reception device may provide a three-dimensional (3D) service with high quality.

According to embodiments, a mesh data transmission method, a mesh data transmission device, a mesh data reception method, and a mesh data reception device may achieve various video codec methods.

According to embodiments, a mesh data transmission method, a mesh data transmission device, a mesh data reception method, and a mesh data reception device may provide a general-purpose 3D content such as autonomous driving services.

According to embodiments, a mesh data transmission method, a mesh data transmission device, a mesh data reception method, and a mesh data reception device may perform packing/unpacking by configuring a packing unit for each subdivision level, and thus enable decoding of a specific LoD region in a decoder to perform efficient partial access or scalable processes.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process for V-MESH data according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process for V-MESH data according to embodiments;
FIG. 12 illustrates an inter-frame decoding process for V-MESH data according to embodiments;
FIG. 13 illustrates a transmission apparatus according to embodiments;
FIG. 14 illustrates a reception apparatus according to embodiments;
FIG. 15 illustrates another example of a transmission apparatus according to the embodiments;
FIG. 16 is a block diagram showing an example of a displacement vector encoder according to embodiments;

FIG. 17 is a diagram showing an example of a displacement vector transform coefficient structure according to embodiments;

FIG. 18 is a diagram showing an example of packing displacement vector transform coefficients according to embodiments;

FIG. 19 is a diagram showing an example of packing displacement vector transform coefficient blocks for each LoD according to embodiments;

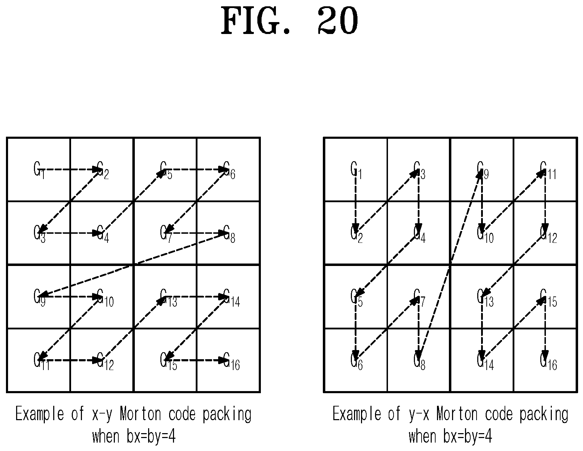

(a) and (b) of FIG. 20 are diagrams showing examples of a packing method of displacement vector transform coefficients within a displacement vector transform coefficient block according to embodiments;

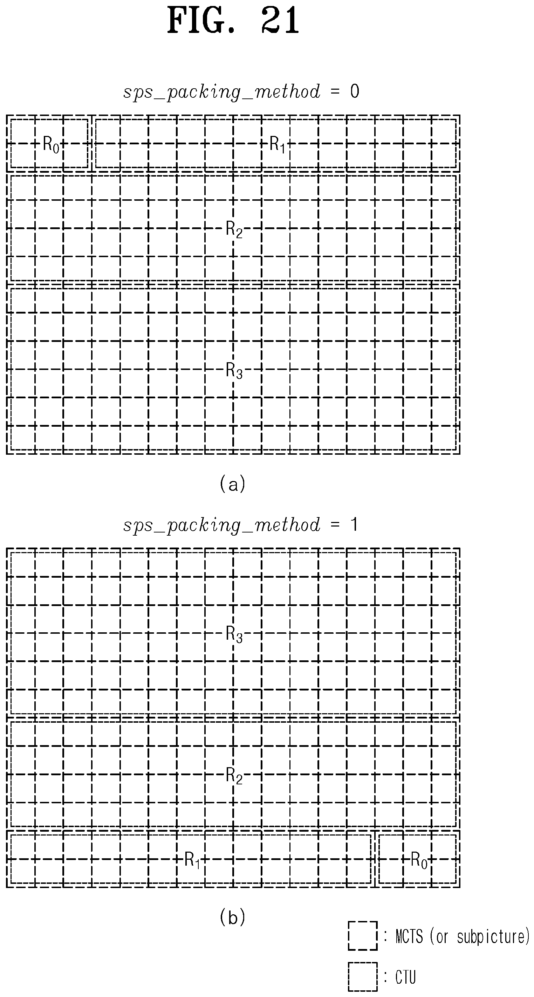

(a) and (b) of FIG. 21 are diagrams showing another example of packing displacement vector transform coefficient blocks by subdivision level according to embodiments;

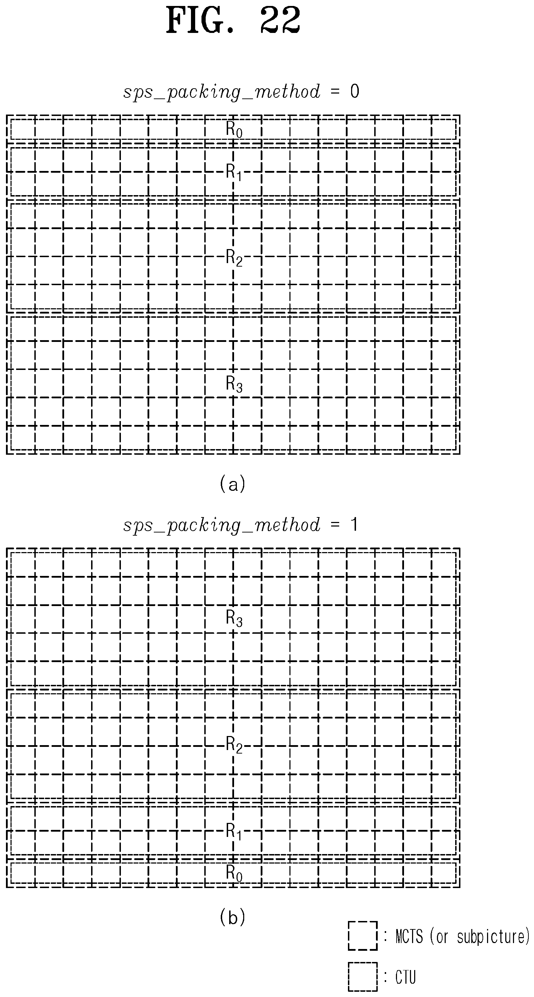

(a) and (b) of FIG. 22 are diagrams showing another example of packing displacement vector transform coefficient blocks by subdivision level according to embodiments;

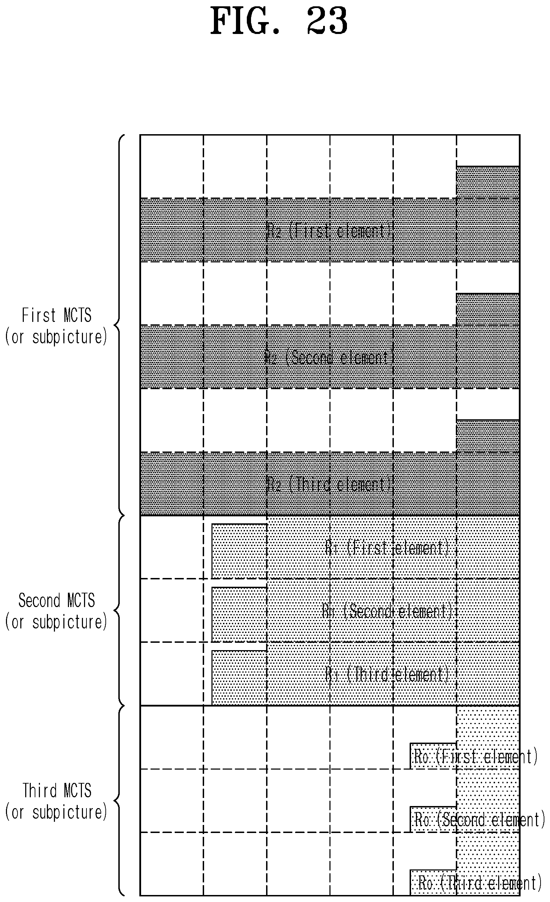

FIG. 23 is a diagram showing an example in which a 3D displacement vector for each subdivision level is configured in one packing unit according to embodiments;

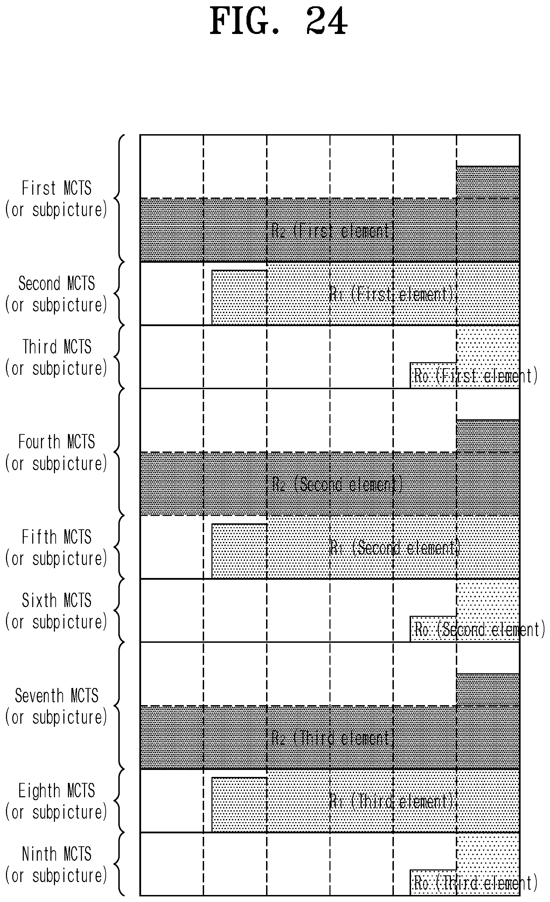

FIG. 24 is a diagram showing an example in which a 3D displacement vector is configured in MCTS (or subpicture) for each element at each subdivision level according to embodiments;

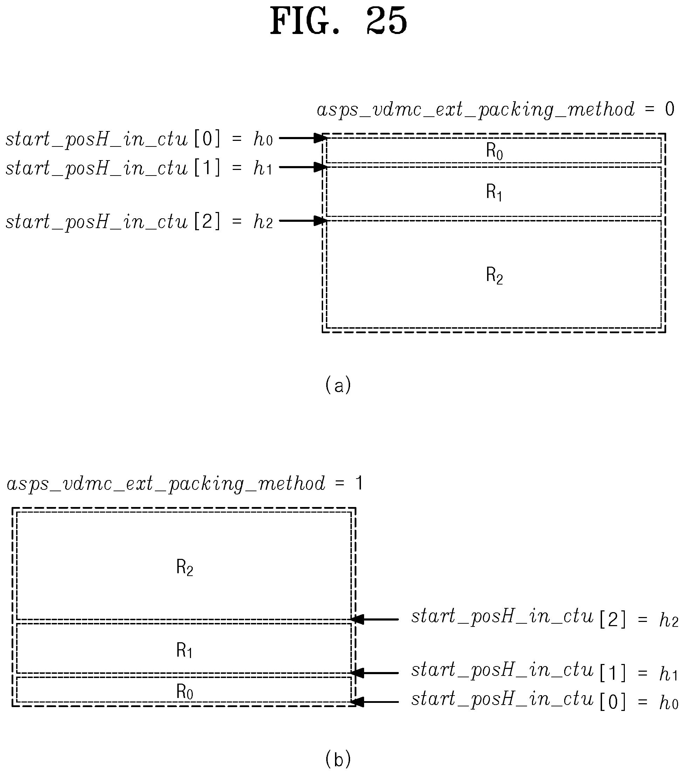

(a) and (b) of FIG. 25 are diagrams showing another example of packing displacement vector transform coefficient blocks by subdivision level according to embodiments;

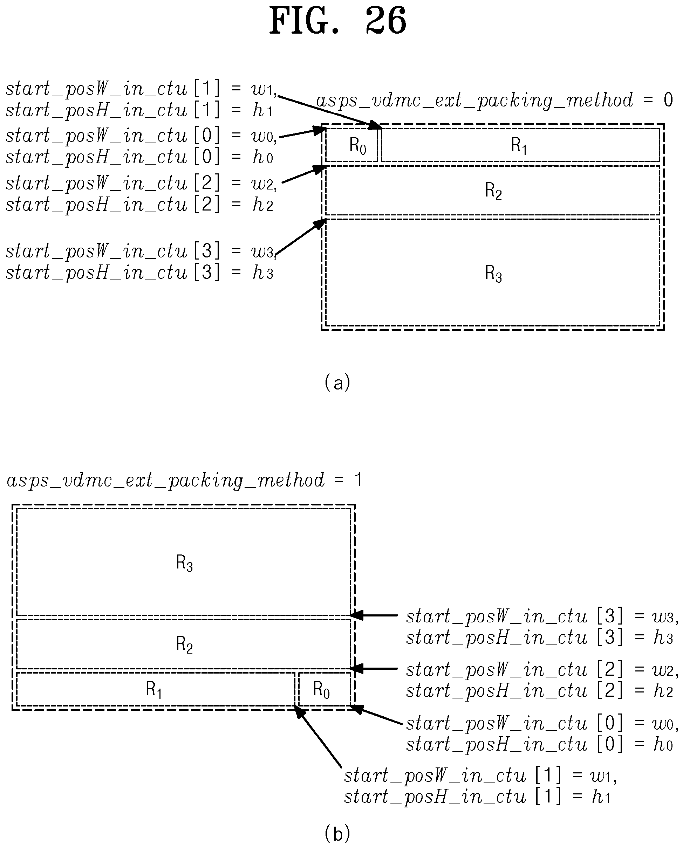

(a) and (b) of FIG. 26 are diagrams showing another example of packing displacement vector transform coefficient blocks by subdivision level according to embodiments;

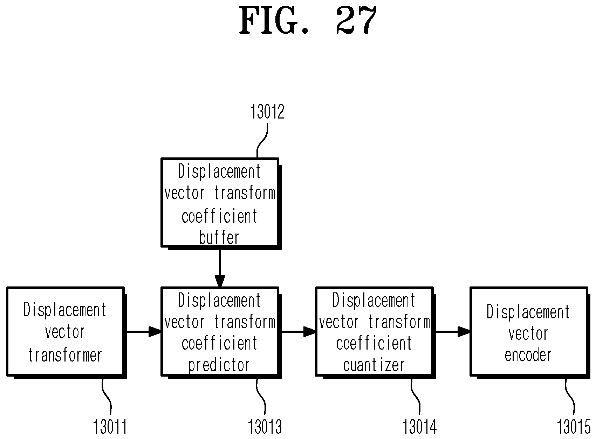

FIG. 27 is a block diagram showing another example of a displacement vector encoder according to embodiments;

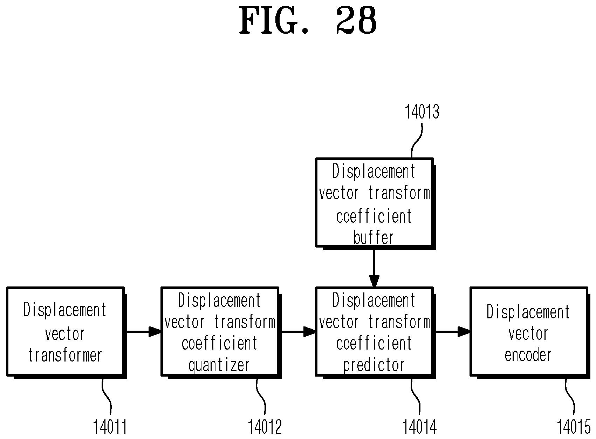

FIG. 28 is a block diagram showing another example of a displacement vector encoder according to embodiments;

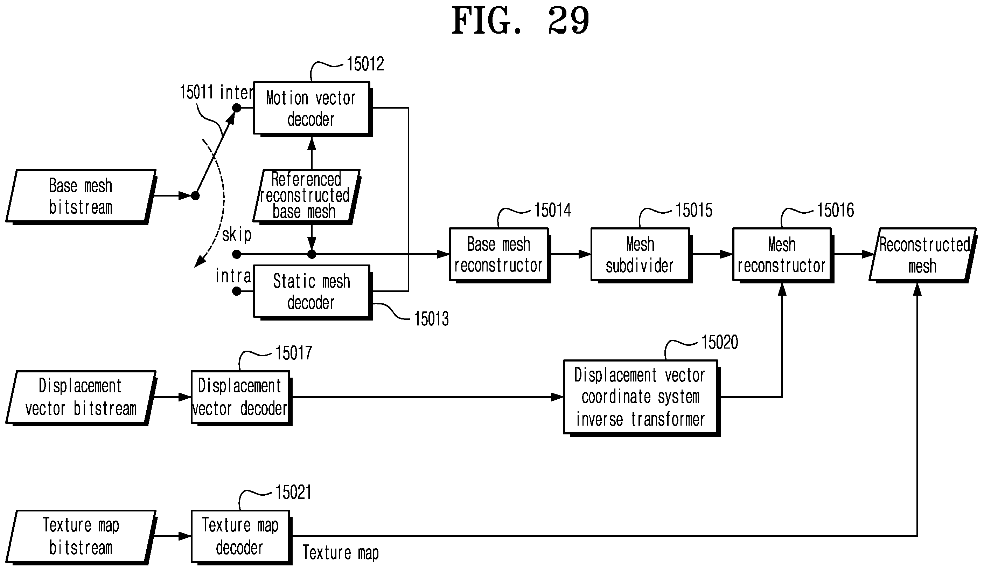

FIG. 29 is a diagram showing a reception device according to embodiments;

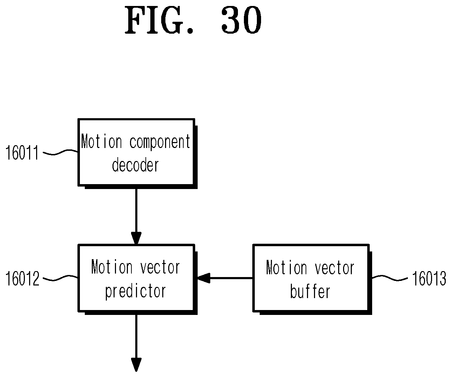

FIG. 30 is a detailed block diagram showing an example of a motion vector decoder according to embodiments;

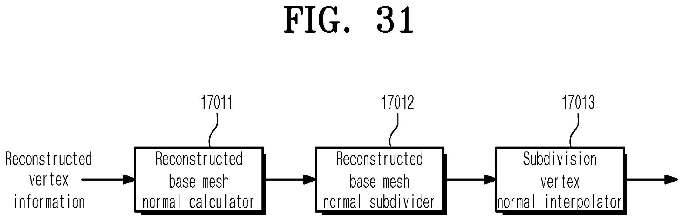

FIG. 31 is a detailed block diagram showing an example of a displacement vector coordinate system inverse transformer according to embodiments;

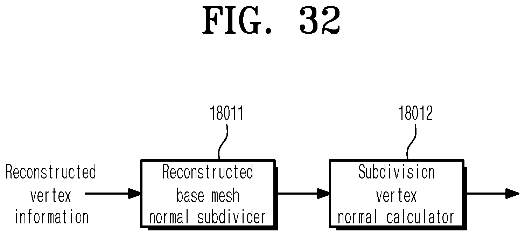

FIG. 32 is a detailed block diagram showing another example of a displacement vector coordinate system inverse transformer according to embodiments;

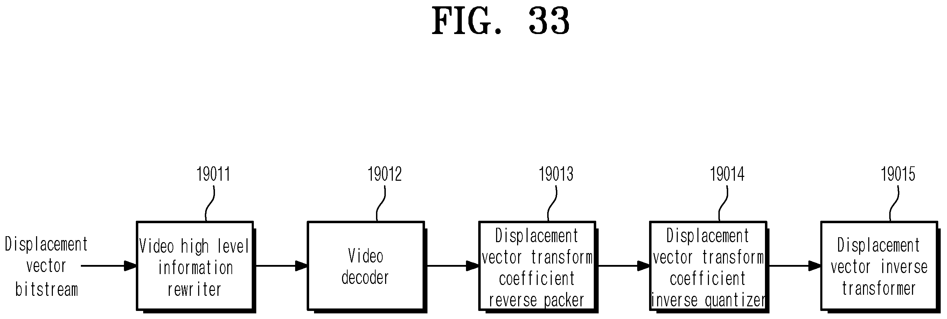

FIG. 33 is a block diagram showing an example of a displacement vector decoder according to embodiments;

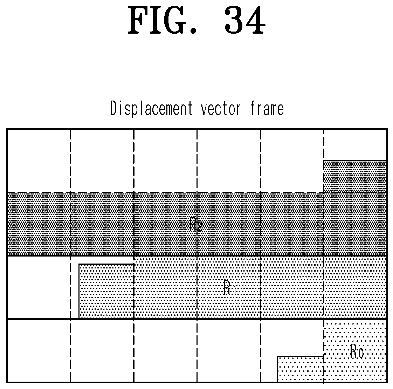

FIG. 34 is a diagram showing an example of a displacement vector frame in which displacement data is packed by subdivision level according to embodiments;

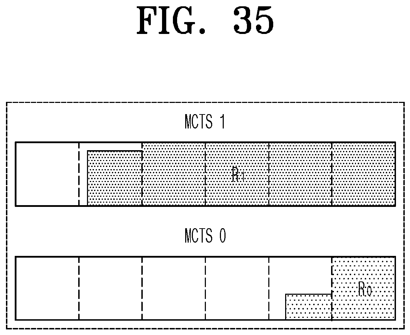

FIG. 35 is a diagram showing an example of an MCTS configuration for each subdivision level according to embodiments;

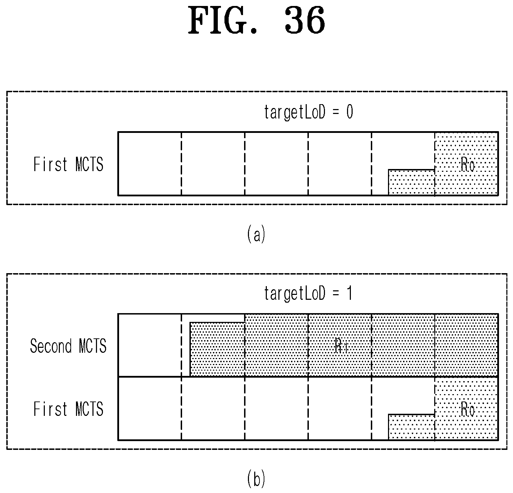

(a) and (b) of FIG. 36 are diagrams showing examples of displacement vector MCTS decoding according to a target LoD;

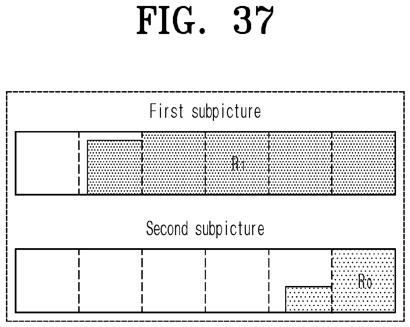

FIG. 37 is a diagram showing an example of a subpicture configuration for each subdivision level according to embodiments;

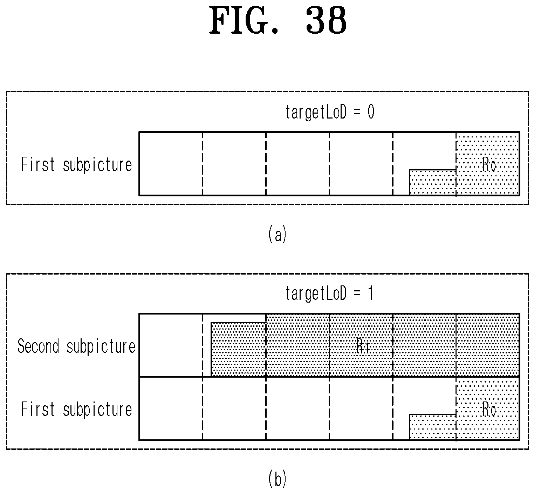

(a) and (b) of FIG. 38 are diagrams showing examples of displacement vector subpicture decoding according to a target LoD;

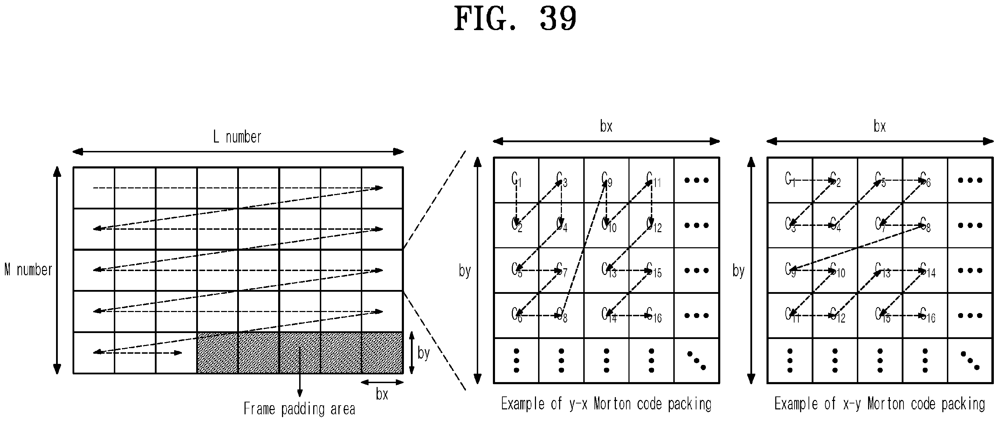

FIG. 39 is a diagram showing examples of a method of packing displacement vector coefficients within a displacement vector coefficient block according to embodiments;

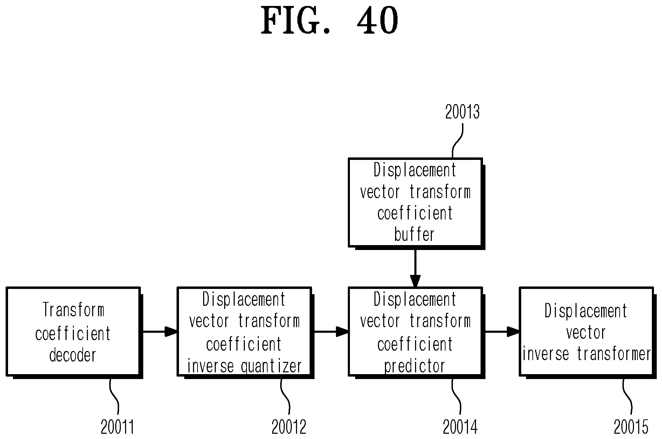

FIG. 40 is a block diagram showing another example of a displacement vector decoder according to embodiments;

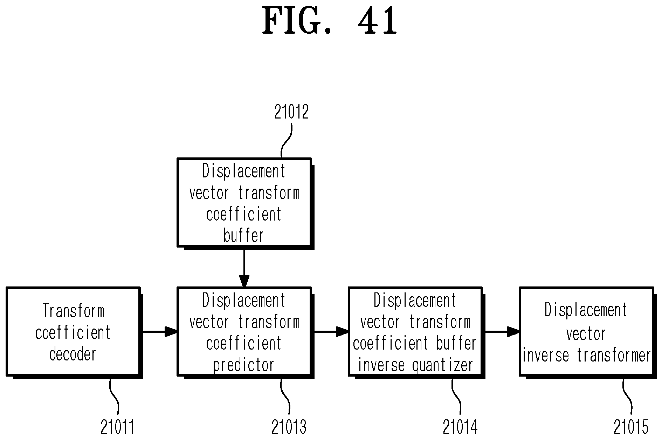

FIG. 41 is a block diagram showing another example of a displacement vector decoder according to embodiments;

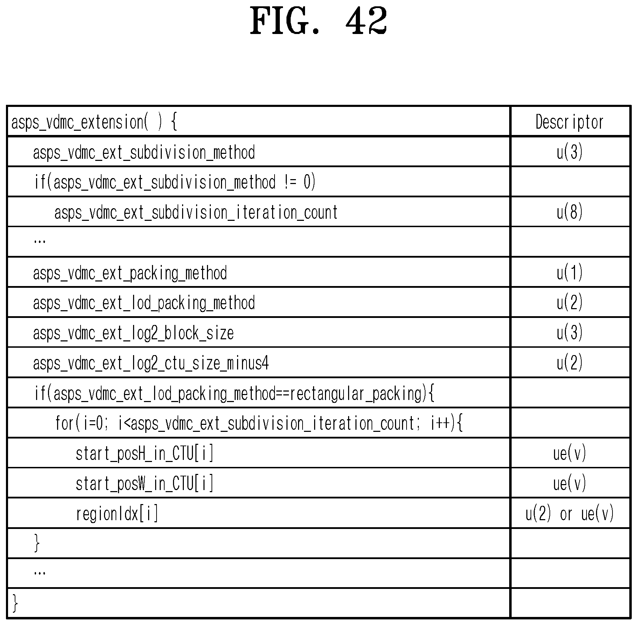

FIG. 42 is a diagram showing an example of the structure of an atlas sequence parameter set (ASPS) among signaling information in a bitstream according to embodiments;

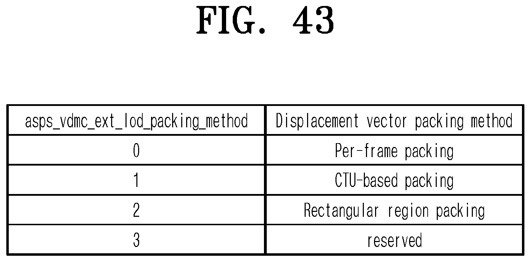

FIG. 43 is a table showing examples of a displacement vector packing method according to embodiments;

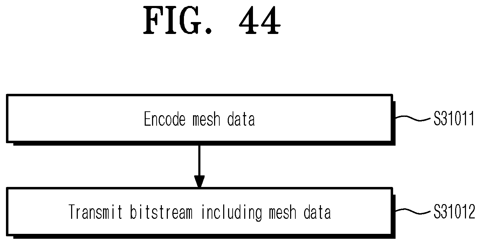

FIG. 44 is a flowchart showing an example of a transmitting method according to embodiments; and

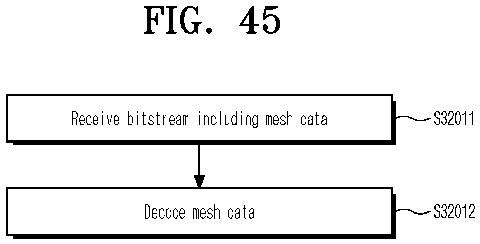

FIG. 45 is a flowchart showing an example of a receiving method according to embodiments.

## DETAILED DESCRIPTION

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

With recent advancements in 3D data modeling and rendering technologies, research on generating and processing 3D data has been actively conducted across various fields, including virtual reality (VR), augmented reality (AR), autonomous driving, computer-aided design (CAD)/computer-aided manufacturing (CAM), and geographic information systems (GIS). 3D data may be represented as a point cloud or a mesh depending on the representation format. A mesh is composed of geometry information indicating the coordinates of each vertex or point, connectivity information indicating connections between vertices, a texture map representing color information about the mesh surface as 2D image data, and texture coordinates indicating the mapping information between the surface of the mesh and the texture map. In the present disclosure, a mesh is defined as a dynamic mesh when at least one of the elements constituting the mesh changes over time, and is defined as a static mesh when it does not change.

Dynamic mesh data involves significantly larger amounts of data of elements to represent the mesh compared to 2D image data. As a result, techniques for efficiently compressing a large amount of mesh data have been developed to store and transmit the data.

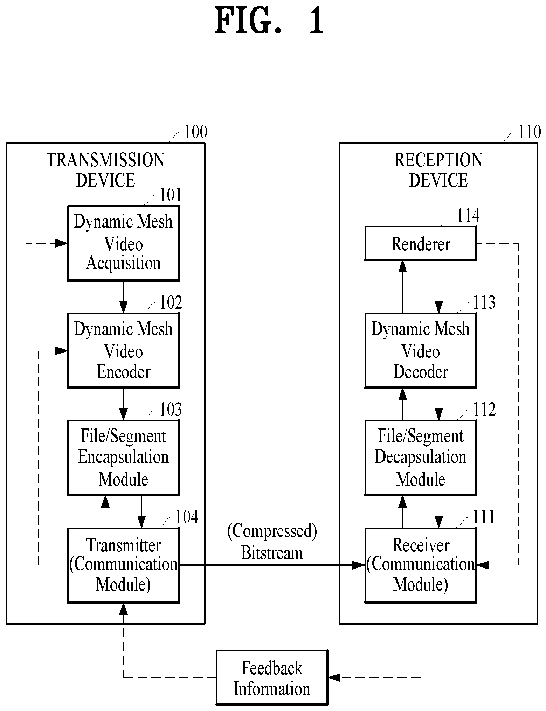

FIG. 1 illustrates a system for providing dynamic mesh content according to embodiments.

The system in FIG. 1 includes a transmission apparatus 100 and a reception apparatus 110. The transmission apparatus 100 may include a mesh video acquisition unit (or part) 101, a mesh video encoder 102, a file/segment encapsulator 103, and a transmitter 104. The reception apparatus 110 may include a receiver 111, a file/segment decapsulator 112, a mesh video decoder 113, and a renderer 114. Each component in FIG. 1 may correspond to hardware, software, a processor, and/or a combination thereof. In the following description, a mesh data transmission apparatus according to embodiments may be interpreted as referring to a 3D data transmission apparatus or transmission apparatus 100, or as referring to a mesh video encoder (hereinafter, encoder) 102. A mesh data reception apparatus according to embodiments may be interpreted as referring to a 3D data reception apparatus or reception apparatus 110, or as referring to a mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique for point cloud data. Point cloud data is data that has color information in the coordinates (X, Y, Z) of vertices (or points). In the present disclosure, vertex coordinates (i.e., position information) are referred to as geometry information, color information about vertices is referred to as attribute information. The geometry information and attribute information are together referred to as vertex information or point cloud data. Mesh data refers to vertex information including inter-vertex connectivity information. Content may be originally created in the form of mesh data. Alternatively, connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a mesh video. The generated mesh video may be transmitted through a series of operations, and the receiving side may process the received data back into a mesh video for rendering. Through this process, the mesh video may be provided to the user, allowing the user to utilize the mesh content interactively according to their intent.

As shown in FIG. 1, a mesh compression system may include a transmission apparatus 100 and a reception apparatus 110. The transmission apparatus 100 may encode the mesh video to output a bitstream, which may be delivered to the reception apparatus 110 over a digital storage medium or a network in the form of file or streaming (streaming segments). The digital storage medium may include various storage media such as USB, SD, CD, DVD, Blu-ray, HDD, and SSD.

In the transmission apparatus 100, the encoder may be referred to as a mesh video/image/picture/frame encoding device. In the reception apparatus 110, the decoder may be referred to as a mesh video/image/picture/frame decoding device. A transmitter may be included in the mesh video encoder, and a receiver may be included in the mesh video decoder. The renderer 114 may include a display, and the renderer and/or display may be configured as separate devices or external components. The transmission apparatus 100 and reception apparatus 110 may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinate related to mesh vertices, referred to as UV coordinates or texture coordinates, related to related to the vertices of the mesh. A mesh contains a 2D attribute map, which may be used to store high-resolution attribute information such as texture, normal, and displacement. Here, the displacement may be used interchangeably with displacement information or a displacement vector.

The mesh video acquisition unit 101 may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder 102 may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/-frames/pictures. The mesh video encoder 102 may perform a Video-based Dynamic Mesh (V-Mesh) compression procedure. For compression and coding efficiency, the mesh video encoder 102 may perform a series of procedures such as prediction, transformation, quantization, and entropy coding. Encoded data (encoded video/image information) may be output in the form of a bitstream.

The file/segment encapsulation module 103 may encapsulate encoded mesh video data and/or mesh video-related metadata in the form of a file or the like. The mesh video-related metadata may be received from a metadata processor. The metadata processing unit may be included in the mesh video encoder 102, or may be configured as a separate component/module. The file/segment encapsulation module 103 may encapsulate the data into a file format such as ISOBMFF or process the same into forms such as DASH segments. According to embodiments, the file/segment encapsulator 103 may include the mesh video-related metadata in the file format. For example, the mesh video metadata may be included in boxes at various levels in the ISOBMFF file format, or as data on separate tracks in the file. In some embodiments, the file/segment encapsulator 103 may encapsulate the mesh video-related metadata into a file.

The transmission processor may apply processing to the encapsulated mesh video data for transmission based on the file format. The transmission processor may be included in the transmitter 104 or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter 104 may transmit the encoded video/image information or data output in bitstream form to the receiver 111 of the reception apparatus 110 over a digital storage medium or network in the form of a file or streaming. The digital storage medium may include various storage media such as USB, SD, CD, DVD, Blu-ray, HDD, and SSD. The transmitter 104 may include an element to generate a media file through a predetermined file format, and may include an element for transmission over a broadcast/communication network. The receiver 111 may extract the bitstream and deliver the same to a decoding device.

The receiver 111 may receive the mesh video data transmitted by the mesh data transmission apparatus. Depending on the channel for transmission, the receiver 111 may receive the mesh video data over a broadcast network or a broadband network, or may receive the mesh video data over a digital storage medium.

The reception processor may perform processing on the received mesh video data according to the transmission protocol. The reception processor may be included in the receiver 111, or may be configured as a separate component/module. To correspond to the processing performed for transmission on the transmitting side, the reception processor may perform the reverse process to the operations of the transmission processor described above. The reception processor may deliver the acquired mesh video data to the file/segment decapsulator 112 and the acquired mesh video-related metadata to the metadata parser. The mesh video-related metadata acquired by the reception processor may be in the form of a signaling table.

The file/segment decapsulator 112 may decapsulate mesh video data in the form of files received from the reception processor. The file/segment decapsulator 112 may decapsulate the files according to ISOBMFF or the like to acquire a mesh video bitstream or mesh video-related metadata (metadata bitstream). The acquired mesh video bitstream may be delivered to the mesh video decoder 113, and the acquired mesh video-related metadata (metadata bitstream) may be delivered to the metadata processor. The mesh video bitstream may include metadata (metadata bitstream). The metadata processor may be included in the mesh video decoder 113, or may be configured as a separate component/-

module. The mesh video-related metadata acquired by the file/segment decapsulator 112 may be in the form of boxes or tracks in the file format. The file/segment decapsulator 112 may receive metadata required for decapsulation from the metadata processor, when necessary. The mesh video-related metadata may be delivered to the mesh video decoder 113 for use in the mesh video decoding procedure, or to the renderer 114 for use in the mesh video rendering procedure.

The mesh video decoder 113 may receive the input bitstream and perform the reverse operation corresponding to the operation of the mesh video encoder 102 to decode the video/images. The decoded mesh video/images may be displayed through the display of the renderer 114. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to embodiments of dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an M×N block may include a set (or array) of samples (or a sample array) or transform coefficients composed of M columns and N rows.

As described above, the encoding process of FIG. 1 is performed as follows.

In other words, the compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video. The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

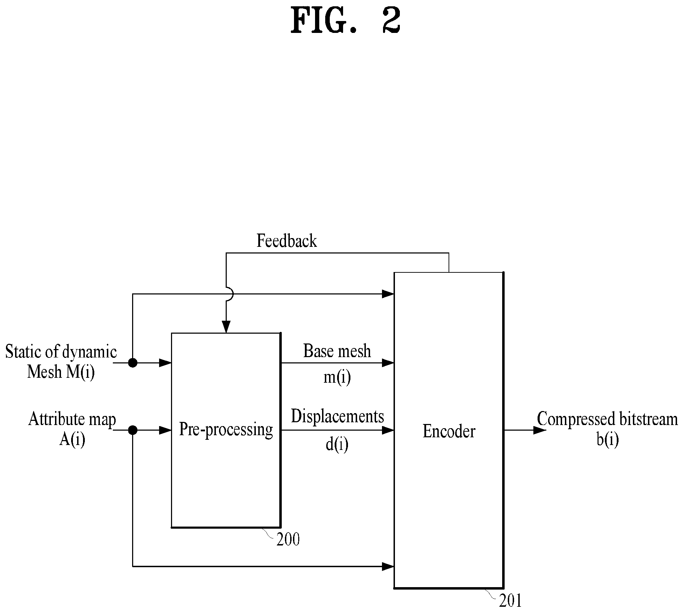

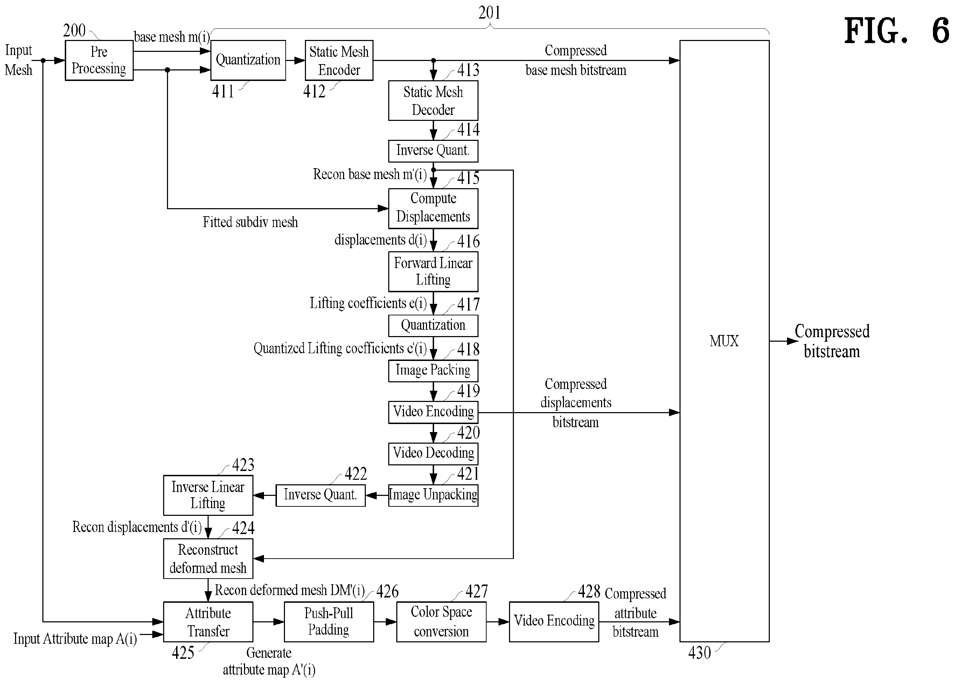

A method of encoding mesh position information (or vertex position information) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The mesh video encoder 102 of FIG. 1 may include a pre-processor 200 and an encoder 201, as shown in FIG. 2. Also, the transmission apparatus of FIG. 1 may be broadly referred to as an encoder, and the mesh video encoder 102 of FIG. 1 may be referred to as an encoder. The V-Mesh compression method may include pre-processing 200 and encoding 201, as shown in FIG. 2. The pre-processor 200 of FIG. 2 may be positioned at the front end of the encoder 201 of FIG. 2. The pre-processor 200 and encoder 201 of FIG. 2 may be referred to as a single encoder.

The pre-processor 200 may receive a static of dynamic mesh (M(i)) and/or an attribute map (A(i)). The pre-processor 200 may generate a base mesh m(i) and/or displacements d(i) through pre-processing. The pre-processor 200 may receive feedback information from the encoder 201, and may generate the base mesh and/or displacements based on the feedback information.

The encoder 201 may receive the base mesh m(i), the displacements d(i), the static of dynamic mesh M(i), and/or the attribute map A(i). In the present disclosure, at least one of the base mesh m(i), the displacements d(i), the static of dynamic mesh M(i), and/or the attribute map A(i) may be referred to herein as mesh-related data. The encoder 201 may encode the mesh-related data to generate a compressed bitstream.

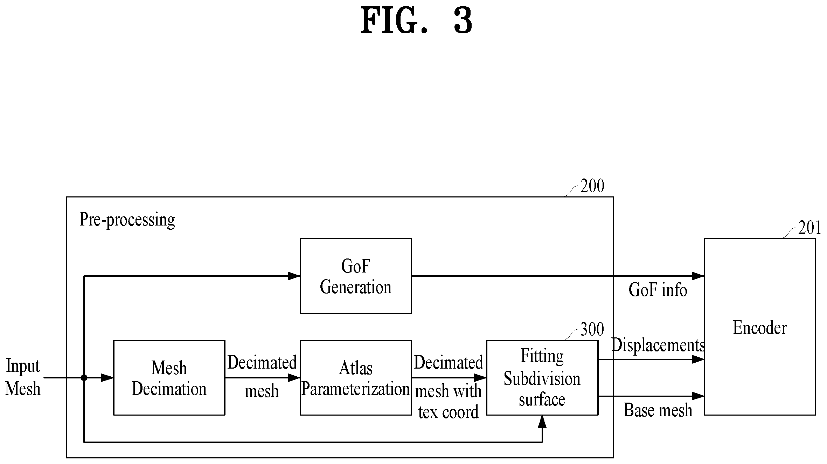

FIG. 3 illustrates pre-processing in V-MESH compression according to embodiments.

FIG. 3 illustrates the configuration and operation of the pre-processor of FIG. 2. In FIG. 3, the input mesh may include a static of dynamic mesh M(i) and/or attribute map A(i). The input mesh may also include 3D coordinates of vertices constituting the mesh, normal information about each vertex, mapping information for mapping the mesh surface to a 2D plane, and connectivity information between the vertices constituting the surface.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface (300). According to embodiments, the GoF generation may be referred to as a GoF generation process or a GoF generator, the mesh decimation may be referred to as a mesh simplification process or the mesh decimation part, the UV parameterization may be referred to as a UV parameterization process or the UV parameterization part, and the fitting subdivision surface may be referred to as a fitting subdivision surface process or a fitting subdivision surface part. The pre-processor 200 may generate displacements and/or a base mesh from the received input mesh, and deliver the same to the encoder 201. The pre-processor 200 may deliver GoF information related to the GoF generation to the encoder 201.

Hereinafter, each operation of FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, the encoder 201 may perform inter frame encoding. Otherwise, it performs intra frame encoding for the frame.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UVAtlas tool. This process generates mapping information indicating where each vertex of the decimated mesh may be mapped to on the 2D image. The mapping information is expressed and stored as texture coordinates, and the final base mesh is generated through this process.

Fitting subdivision surface (300): A process of performing subdivision on the decimated mesh (i.e., a decimated mesh with texture coordinates). The displacements and base mesh generated by this process are output to the encoder 201. A user-defined method, such as the mid-edge method, may be applied as the subdivision method. A fitting process is performed such that the input mesh and the subdivided mesh become similar to each other. The mesh on which the fitting process is performed will be referred to herein as the fitted subdivided mesh.

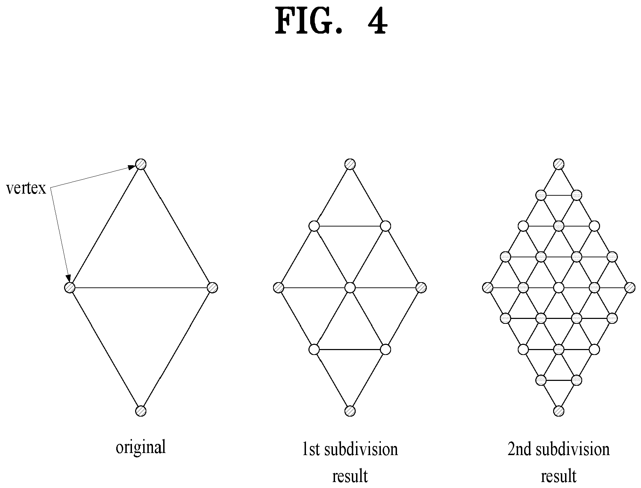

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices. Then, the fitting process is performed to make the input mesh and the sub-mesh similar to each other, resulting in a fitted subdivided mesh.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

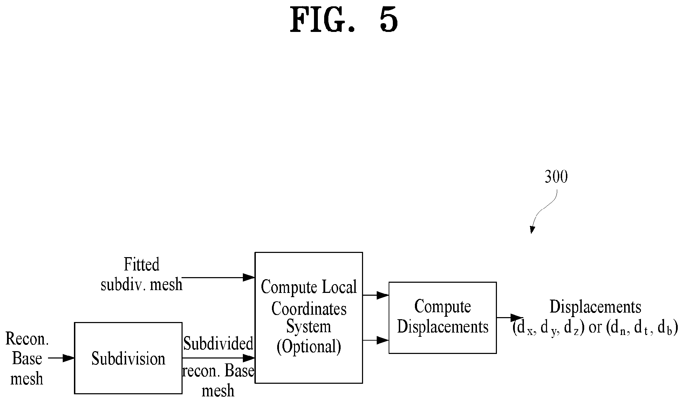

FIG. 5 illustrates a displacement generation process according to embodiments. The displacement generation process of FIG. 5 may be performed by the pre-processor 200, or may be performed by the encoder 201.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may perform a subdivision on the reconstructed base mesh to generate a subdivided reconstructed base mesh. Here, the reconstruction of the base mesh may be performed by the pre-processor 200, or may be performed by the encoder 201. The local coordinate system calculator may receive the fitted subdivided mesh and the subdivided reconstructed base mesh, and may transform the coordinate system related to the mesh to a local coordinate system based on the received meshes. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The mesh data transmission method and apparatus according to embodiments may encode the mesh data as follows. Mesh data is a term that includes point cloud data. Point cloud data (which may be referred to as a point cloud for short) according to embodiments may refer to data including vertex coordinates (also referred to as geometry information) and color information (also referred to as attribute information). In addition, a geometry image, an attribute image, an occupancy map, and auxiliary information (also referred to as patch information) generated through patch generation and packing based on vertex coordinates and color information may also be referred to as point cloud data. Therefore, point cloud data including connectivity information may be referred to as mesh data. The terms point cloud and mesh data may be used interchangeably herein.

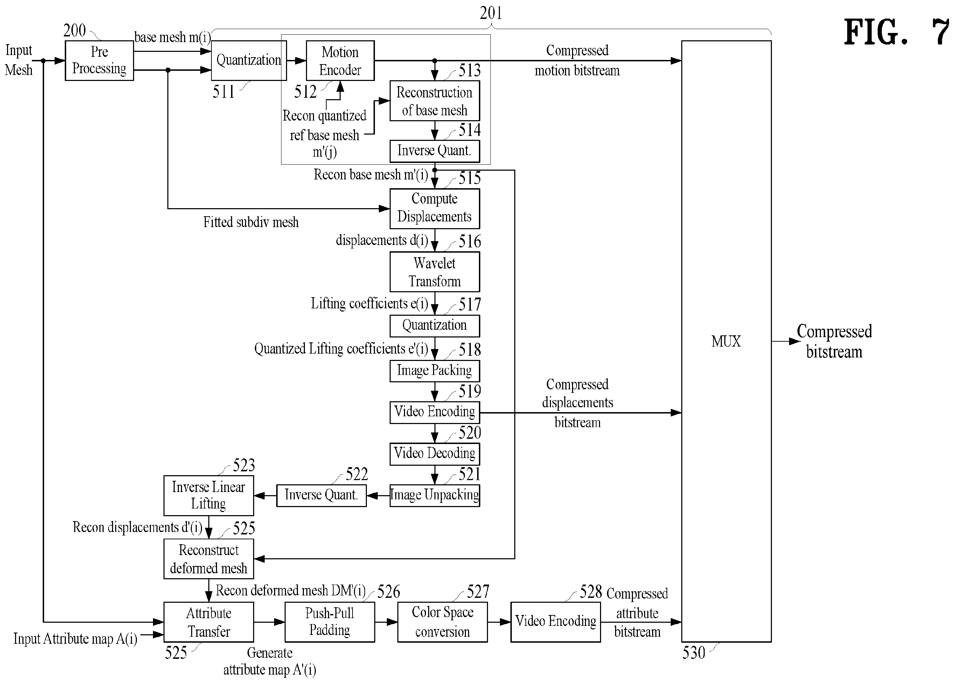

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments. Each component for the intra-frame encoding process of FIG. 6 corresponds to hardware, software, a processor, and/or a combination thereof.

The encoding process of FIG. 6 details the encoding of the mesh video encoder 102 of FIG. 1. That is, it represents the configuration of the mesh video encoder 102 when the encoding of FIG. 1 is intra-frame encoding. The encoder of FIG. 6 may include a pre-processor 200 and/or an encoder 201. The pre-processor 200 and encoder 201 of FIG. 6 may correspond to the pre-processor 200 and encoder 201 of FIG. 3.

The pre-processor 200 may receive an input mesh and perform the pre-processing described above. A base mesh and/or a fitted subdivided mesh may be generated through the pre-processing.

The quantizer 411 of the encoder 201 may quantize the base mesh and/or the fitted subdivided mesh. The static mesh encoder 412 may encode the static mesh (i.e., the quantized base mesh) and generate a bitstream containing the encoded base mesh (i.e., a compressed base mesh bitstream). The static mesh decoder 413 may decode the encoded static mesh (i.e., the encoded base mesh). The inverse quantizer 414 may inversely quantize the quantized static mesh (i.e., base mesh) and output a reconstructed (restored) base mesh. The displacement calculator 415 may generate a displacement or displacements based on the reconstructed static mesh (i.e., base mesh) and the fitted subdivided mesh. According to embodiments, the displacement calculator 415 subdivides the reconstructed base mesh and then calculates a displacement, which is the difference in position of each vertex between the subdivided base mesh and the fitted subdivided mesh. In other words, the displacement is a displacement vector that is the difference in position between the vertices in the two meshes when the fitted subdivided mesh is similar to the original mesh. The forward linear lifter 416 may perform a lifting transform on the input displacements to generate lifting coefficients (also referred to as a transform coefficient). The quantizer 417 may quantize the lifting coefficients. The image packer 418 may pack the image based on the quantized lifting coefficients. The video encoder 419 may encode the packed image. That is, the quantized lifting coefficients are packed into a frame as a 2D image by the image packer 418, compressed by the video encoder 419, and output as a displacement bitstream (i.e., a compressed displacement bitstream).

The video decoder 420 decodes the compressed displacement bitstream. The image unpacker 421 may perform unpacking on the decoded displacement frame to output quantized lifting coefficients. The inverse quantizer 422 may inversely quantize the quantized lifting coefficients. The inverse linear lifting unit 423 applies inverse lifting to the inversely quantized lifting coefficients to generate reconstructed displacements. The mesh reconstructor 424 restores the reconstructed and deformed mesh based on the reconstructed displacements output from the inverse linear lifting unit 423 and the reconstructed base mesh (also referred to as the subdivided reconstructed base mesh) output from the inverse quantizer 414. The reconstructed and deformed mesh is referred to herein as the reconstructed deformed mesh.

The attribute transfer 425 receives an input mesh and/or an input attribute map and regenerates an attribute map based on the reconstructed deformed mesh. The attribute map refers to a texture map corresponding to attribute information among the mesh data components. In the present disclosure, the terms attribute map and texture map may be used interchangeably. The push-pull padding unit 426 may pad data to the attribute map based on a push-pull method. The color space converter 427 may convert the space of the color components of the attribute map. For example, the attribute map may be converted from an RGB color space to a YUV color space. The video encoder 428 may encode the attribute map to output a compressed attribute bitstream.

The multiplexer 430 may multiplex the compressed base mesh bitstream, the compressed displacement bitstream, and the compressed attribute bitstream to generate a compressed bitstream.

In FIG. 6, the displacement calculator 415 may be included in the pre-processor 200. Additionally, at least one of the quantizer 411, the static mesh encoder 412, the static mesh decoder 413, or the inverse quantizer 414 may be included in the pre-processor 200.

As described in FIG. 6, the intra frame encoding method includes base mesh encoding (also referred to as static mesh encoding). That is, when intra frame encoding is performed on the current input mesh frame, the base mesh generated during the pre-processing of the pre-processor 200 may be quantized by the quantizer 411 and then encoded by the static mesh encoder 412 using a static mesh compression technique. In the V-Mesh compression method, for example, the Draco technique is applied to encode the base mesh, and the vertex position information, mapping information (texture coordinates), vertex connectivity information, and the like related to the base mesh are subject to compression.

The encoder in FIG. 6 compresses the base mesh, displacements, and attributes in a frame to generate a bitstream, while the encoder in FIG. 7 compresses the motion, displacements, and attributes between the current frame and a reference frame to generate a bitstream.

FIG. 7 illustrates an inter-frame encoding process in a V-MESH compression method according to embodiments. Each component for the inter-frame encoding process of FIG. 7 corresponds to hardware, software, a processor, and/or a combination thereof.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201. The pre-processor 200 and encoder 201 of FIG. 7 may correspond to the pre-processor 200 and encoder 201 of FIG. 3.

For the components of the encoding operation of FIG. 7 that correspond to the encoding operation of FIG. 6, refers to the description of FIG. 6. That is, the operations of the quantizer 511, displacement calculator 515, wavelet transformer 516, quantizer 517, image packer 518, video encoder 519, video decoder 520, image unpacker 521, inverse quantizer 522, and inverse wavelet transformer 523, mesh reconstructor 524, attribute transfer 525, push-pull padding 526, color space converter 527, video encoder 528, and multiplexer 530 in FIG. 7 are the same as or similar to the operations of the quantizer 411, static mesh encoder 412, static mesh decoder 413, and inverse quantizer 414, displacement calculator 415, forward linear lifting unit 416, quantizer 417, image packer 418, video encoder 419, video decoder 420, image unpacker 421, inverse quantizer 422, inverse linear lifting unit 423, and mesh reconstructor 424, attribute transfer 425, push-pull padding 426, color space converter 427, video encoder 428, and multiplexer 430 in FIG. 6 described above, and are therefore not described in detail in relation to FIG. 7 to avoid redundancy.

In FIG. 7, for inter-frame-based encoding, the motion encoder 512 may obtain and encode a motion vector between the reconstructed quantized reference base mesh and the quantized current base mesh, and output a compressed motion bitstream. The motion encoder 512 may be referred to as a motion vector encoder. The base mesh reconstructor 513 may reconstruct a base mesh based on the reconstructed quantized reference base mesh and the encoded motion vectors. The reconstructed base mesh is inversely quantized by the inverse quantizer 514 and output to the displacement calculator 515.

In FIG. 7, the displacement calculator 515 may be included in the pre-processor 200. Additionally, at least one of the quantizer 511, motion encoder 512, base mesh reconstructor 513, or inverse quantizer 514 may be included in the pre-processor 200.

As described with reference to FIG. 7, the inter-frame encoding method may include motion field encoding (also referred to as motion vector encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field (or motion vector) may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of the residual motion field may be encoded using entropy coding. Except for the motion field encoding in the inter frame encoding, the process of encoding the displacements and attribute map is the same as the structure of the intra frame encoding method except for the base mesh encoding.

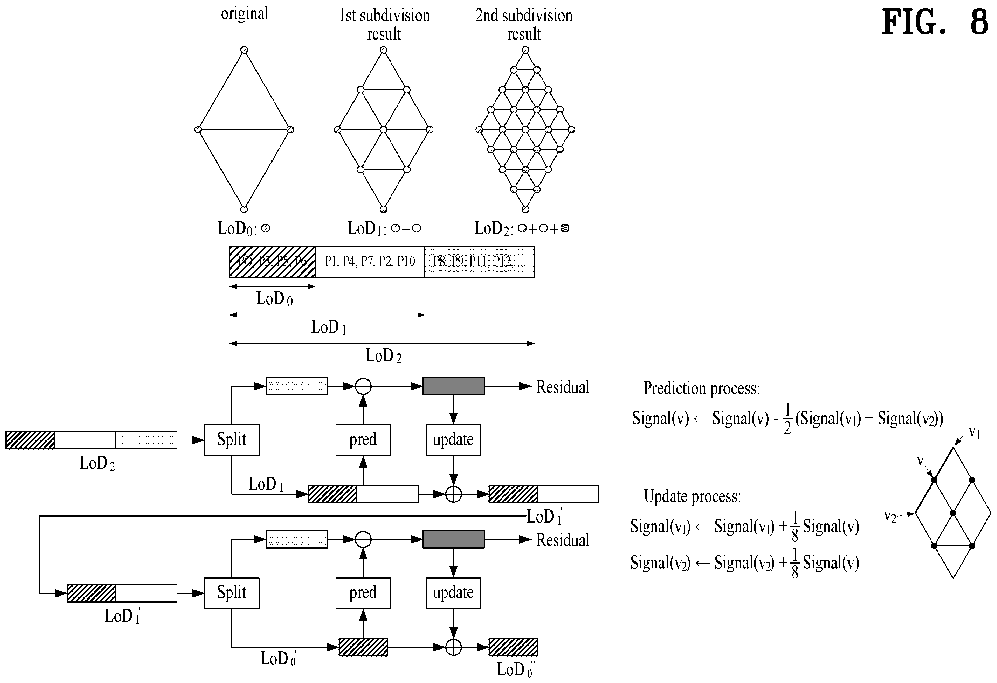

FIG. 8 illustrates a lifting transform process for displacements according to embodiments.

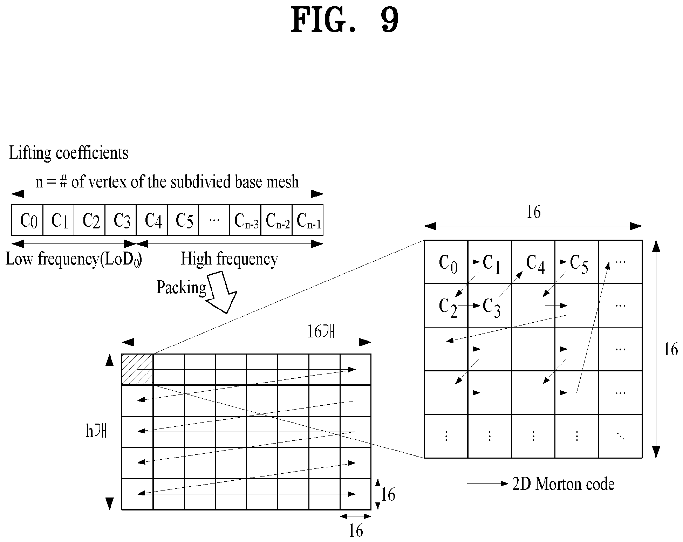

FIG. 9 illustrates a process of packing transform coefficients (also referred to as lifting coefficients) into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface (see 415 in FIG. 6 or 515 in FIG. 7). A data transform process, such as a wavelet transform, may be applied to the displacement information for effective encoding (see 416 in FIG. 6, or 516 in FIG. 7).

FIG. 8 illustrates the process of transforming displacement information by the forward linear lifting unit 416 of FIG. 6 or the wavelet transformer 516 of FIG. 7 using the lifting transform. For example, a linear wavelet-based lifting transform may be performed. The transform coefficients generated through the transform process are quantized by the quantizer 417 (or 517) and

then packed into a 2D image by the image packer 418 (or 518), as shown in FIG. 9. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded by the video encoder 419 (or 519) using a conventional video compression codec.

Referring to FIG. 8, the base mesh (original) may include vertices and edges for LoD0. A first subdivision mesh generated by splitting (or subdividing) the base mesh includes vertices generated by further splitting (or subdividing) the edges of the base mesh. The first subdivision mesh contains vertices for LoD0 and vertices for LoD1. LoD1 includes subdivided vertices and vertices from the base mesh (LoD0). The first subdivision mesh may be split (or subdivided) to generate a second subdivision mesh. The second subdivision mesh contains LoD2. LoD2 includes a base mesh vertex (LoD0), LoD1 containing vertices further split (or subdivided) from LoD0, and LoD2 containing vertices further split (or subdivided) from LoD1. LoD is a level of detail that indicates how detailed the mesh data content is. As the index of the level increases, the distance between vertices is shortened, and the level of detail rises. In other words, as the value of LoD decreases, the detail of the mesh data content is degraded. As the value of LoD increases, the detail of the mesh data content is enhanced. LoD N contains the vertices contained in LoD N-1. In the case where the mesh (or vertex) is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated through the residual. In the present disclosure, vertex and point may be used interchangeably. The LoDs may be defined in the subdivision of the base mesh. According to embodiments, the subdivision of the base mesh may be performed by the pre-processor 200 or may be performed by a separate component/module.

Referring to FIG. 9, a vertex has a transform coefficient (also referred to as a lifting coefficient) generated through lifting transform. The transform coefficient of the vertex related to the lifting transform may be packed into an image by the image packer 418 (or 518) and then encoded by the video encoder 419 (or 519).

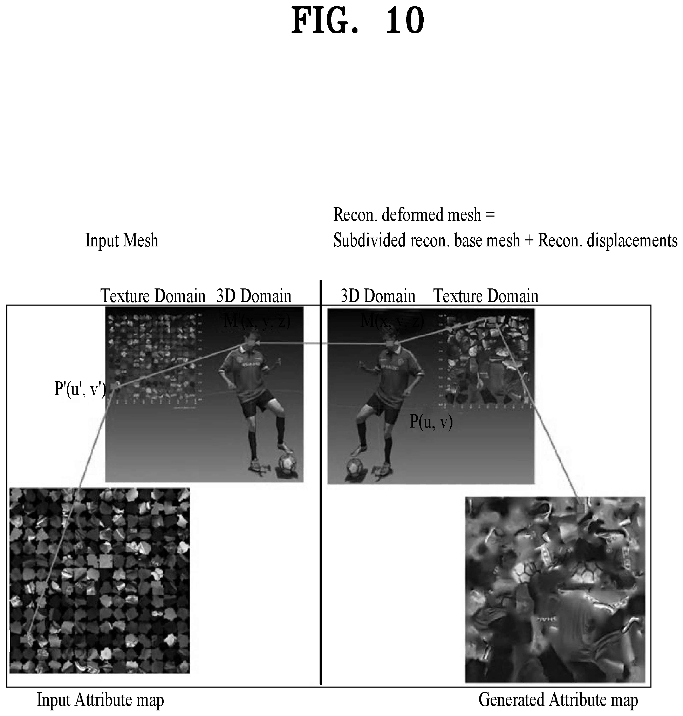

FIG. 10 illustrates an attribute transfer process in a V-MESH compression method according to embodiments.

According to embodiments, FIG. 10 illustrates a detailed operation of the attribute transfer 425 (or 525) in the encoding of FIGS. 6, 7, etc.

The encoding according to the embodiments includes attribute map encoding. According to embodiments, the attribute map encoding may be performed by the video encoder 428 of FIG. 6 or the video encoder 528 of FIG. 7.

According to embodiments, in the present disclosure, the encoder compresses information about the input mesh through base mesh encoding (i.e., intra-encoding), motion field encoding (i.e., inter-encoding), and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is re-generated through the attribute transfer process of the attribute transfer 425 (or 525).

According to embodiments, the attribute transfer 425 (or 525) first checks, for every point P(u, v) in the 2D texture domain, whether the corresponding vertex is within a texture triangle of the Recon. deformed mesh. When the corresponding vertex is in the texture triangle T, the attribute transfer calculates the barycentric coordinates $(\alpha, \beta, \gamma)$ of P(u, v) according to the triangle T. Then, it calculates the 3D coordinates M(x, y, z) of P(u, v) based on the 3D vertex positions of the triangle T and $(\alpha, \beta, \gamma)$. The vertex coordinates M'(x', y', z') that corresponds to the closest position to the calculated M(x, y, z) and a triangle T' containing this vertex are searched for in the input mesh domain. Then, the barycentric coordinates $(\alpha', \beta', \gamma')$ of M'(x', y', z') in the triangle T' are calculated. The texture coordinates (u', v') are calculated based on the texture coordinates corresponding to the three vertices of triangle T' and $(\alpha', \beta', \gamma')$, and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm of the push-pull padding 426 (or 526).

The new attribute map generated by the attribute transfer 425 (or 525) is bundled into GoFs to construct an attribute map video, which is compressed using a video codec of the video encoder 428 (or 528).

A reference relationship between the input mesh, the input attribute map, the reconstructed deformed mesh, and the reconstructed attribute map is shown may be seen from FIG. 10.

The decoding process of FIG. 1 may perform the reverse of the encoding process of FIG. 1. Specifically, the decoding process is performed as disclosed below.

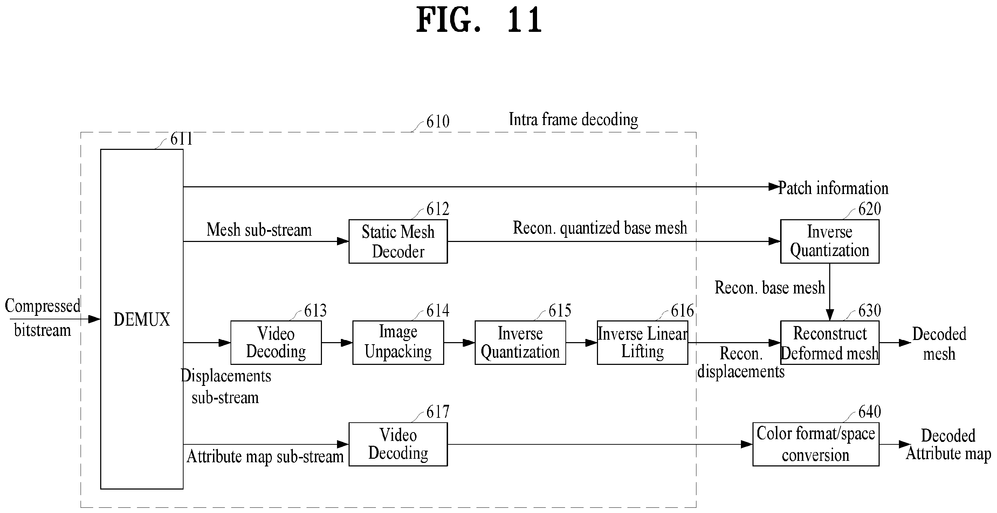

FIG. 11 shows the intra-frame decoding (or intra decoding) process of the V-Mesh technology according to embodiments.

FIG. 11 illustrates the configuration and operation of the mesh video decoder 113 of the reception apparatus of FIG. 1. Additionally, FIG. 11 illustrates that the mesh data may be reconstructed by performing a reverse process to the intra-frame encoding process of FIG. 6. Each component for the intra-frame decoding process of FIG. 11 corresponds to hardware, software, and/or a combination thereof.

First, the bitstream (i.e., compressed bitstream) received and input to the demultiplexer 611 of the intra-frame decoder 610 may be separated into a mesh sub-stream, a displacement sub-stream, an attribute map sub-stream, and a sub-stream containing patch information about the mesh, such as V-PCC/V3C. The term V-PCC (Video-based Point Cloud Compression) used in the present disclosure may have the same meaning as V3C (Visual Volumetric Video-based Coding). The two terms may be used interchangeably. Accordingly, in the present disclosure, the term V-PCC may be interpreted as V3C.

According to embodiments, the mesh sub-stream may be input to and decoded by a static mesh decoder 612, the displacement sub-stream may be input to and decoded by the video decoder 613, and the attribute map sub-stream may be input to and decoded by the video decoder 617.

According to embodiments, the mesh sub-stream may be decoded through the decoder 612 of a static mesh codec used in the encoding such as, for example, Google Draco, to reconstruct connectivity information, vertex geometry information, vertex texture coordinates, and the like related to the result of the decoding, a recon. quantized base mesh, e.g., reconstructed base mesh.

According to embodiments, the displacement sub-stream may be decoded into a displacement video through the decoder 613 of the video compression codec used in the encoding. Then, image unpacking is performed by the image unpacker 614, inverse quantization is performed by the inverse quantizer 615, and inverse transform is performed by the inverse linear lifting unit 616 to reconstruct the displacement information about each vertex (i.e., Recon. displacements).

According to embodiments, the base mesh reconstructed by the static mesh decoder 612 is inversely quantized by the inverse quantizer 620 and output to the mesh reconstructor 630. The mesh reconstructor 630 reconstructs a reconstructed deformed mesh (i.e., a decoded mesh) based on the reconstructed displacements output from the inverse linear lifting unit 616 and the reconstructed base mesh output from the inverse quantizer 620. In other words, the inversely quantized reconstructed base mesh is combined with the reconstructed displacement information to generate a final decoded mesh. In the present disclosure, the final decoded mesh is referred to as a reconstructed deformed mesh.

According to embodiments, the attribute map sub-stream is decoded by the decoder 617 corresponding to the video compression codec used in the encoding, and then a final attribute map (i.e., a decoded attribute map) is reconstructed by the color transformer 640 through color format transform, color space conversion, and the like.

According to embodiments, the reconstructed decoded mesh and decoded attribute map may be utilized at the receiving side as final mesh data that may be utilized by a user.

Referring to FIG. 11, the received compressed bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

As described above, the decoder of FIG. 11 performs intra-frame decoding as follows. The static mesh decoder 612 decodes the mesh sub-stream to generate a reconstructed quantized base mesh, and the inverse quantizer 620 applies the quantization parameters of the quantizer in reverse to generate a reconstructed base mesh. The video decoder 613 decodes the displacement sub-stream, the image unpacker 614 unpacks the image of the decoded displacement video, and the inverse quantizer 615 inversely quantizes the quantized image. The inverse linear lifting unit 616 applies a lifting transform in the reverse process of the encoder to generate a reconstructed displacement. The mesh reconstructor 630 generates a reconstructed deformed mesh based on the reconstructed base mesh and the reconstructed displacement. The video decoder 617 decodes the attribute map sub-stream, and the color transformer 640 transforms the color format and/or space of the decoded attribute map to generate a decoded attribute map.

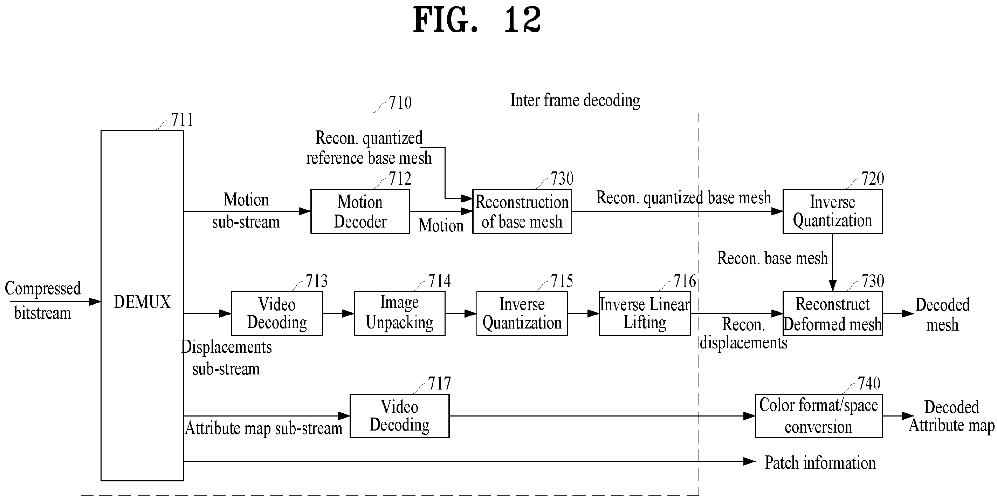

FIG. 12 illustrates an inter-frame decoding (or inter-decoding) process of V-Mesh technology.

FIG. 12 illustrates the configuration and operation of the mesh video decoder 113 of the reception apparatus of FIG. 1. In FIG. 12, mesh data may be reconstructed by performing a reverse process to the inter-frame encoding process of FIG. 7. Each component for the intra-frame decoding process of FIG. 12 corresponds to hardware, software, and/or a combination thereof.

First, the bitstream received and input to the demultiplexer 711 of the intra-frame decoder 710 may be separated into a motion sub-stream (also referred to as a motion vector sub-stream), a displacement sub-stream, an attribute map sub-stream, and a sub-stream containing patch information about the mesh, such as V3C/V-PCC.

According to embodiments, the motion sub-stream may be input to and decoded by the motion decoder 712, the displacement sub-stream may be input to and decoded by the video decoder 713, and the attribute map sub-stream may be input to and decoded by the video decoder 717.

According to embodiments, the motion sub-stream is decoded by the motion decoder 712 through entropy decoding and inverse prediction to reconstruct motion information (also referred to as motion vector information). The base mesh reconstructor 718 combines the reconstructed motion information with a pre-reconstructed and stored reference base mesh to generate a reconstructed quantized base mesh for the current frame. The inverse quantizer 720 applies inverse quantization to the reconstructed quantized base mesh to generate a reconstructed base mesh. The video decoder 713 decodes the displacement sub-stream, the image unpacker 714 unpacks the image of the decoded displacement video, and the inverse quantizer 715 inversely quantizes the quantized image. The inverse linear lifting unit 716 applies a lifting transform in the reverse process of the encoder to generate a reconstructed displacement. The mesh reconstructor 730 generates a reconstructed deformed mesh, i.e., a final decoded mesh, based on the reconstructed base mesh and the reconstructed displacement.

According to embodiments, the video decoder 717 decodes the attribute map sub-stream in the same way as the intra-decoding, and the color transformer 740 transforms the color format and/or space of the decoded attribute map to generate a decoded attribute map. The decoded mesh and decoded attribute map may be utilized at the receiving side as the final mesh data that may be utilized by the user.

Referring to FIG. 12, the bitstream contains motion information (also referred to as motion vectors), displacements, and an attribute map. The process of FIG. 12 further includes decoding the inter-frame motion information because inter-frame decoding is performed. A reconstructed base mesh is generated by decoding the motion information and generating a reconstructed quantized base mesh for the motion information based on the reference base mesh. For the operations in FIG. 12 that are the same as those in FIG. 11, refer to the description of FIG. 11.

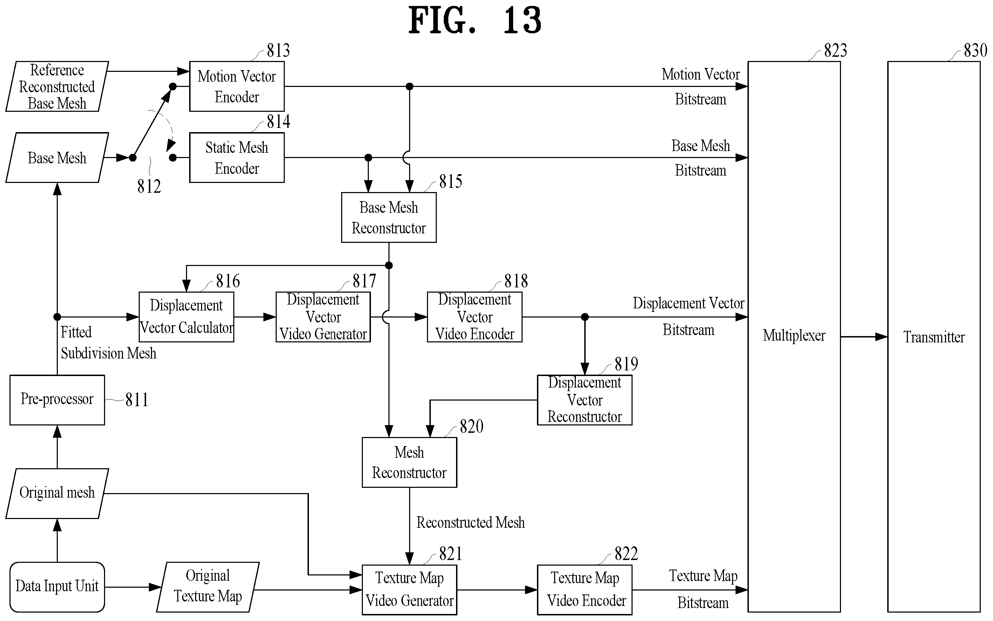

FIG. 13 illustrates a mesh data transmission apparatus according to embodiments.

FIG. 13 corresponds to the transmission apparatus 100 or mesh video encoder 102 of FIG. 1, the encoder (pre-processor and encoder) of FIG. 2, 6, or 7, and/or the corresponding transmission encoding device. Each component of FIG. 13 corresponds to hardware, software, a processor, and/or a combination thereof.

The process of operations at the transmitting end for compressing and transmitting dynamic mesh data using a V-Mesh compression technique may be configured as shown in FIG. 13. The transmission apparatus of FIG. 13 may perform intra-frame encoding (also referred to as intra-encoding or intra-picture encoding) and/or inter-frame encoding (also referred to as inter-encoding or inter-picture encoding).

The pre-processor 811 receives the original mesh and generates a decimated mesh (or base mesh) and a fitted subdivided (or subdivision) mesh. The decimation may be performed based on a target number of vertices or a target number of polygons constituting the mesh. Parameterization may be performed on the decimated mesh to generate texture coordinates and texture connectivity information per vertex. For example, the parameterization is a process of mapping a 3D curved surface into a texture domain for the decimated mesh. When the parameterization is performed using the UVAtlas tool, mapping information indicating where each vertex of the decimated mesh may be mapped to on the 2D image is generated. The mapping information is expressed and stored as texture coordinates, and the final base mesh is generated through this process. The mesh information may be quantized from a floating-point form to a fixed-point form. The result is the base mesh, which may be output to a motion vector encoder 813 or a static mesh encoder 814 through a switching unit 812. The pre-processor 811 may perform a mesh subdivision on the base mesh to generate additional vertices. Depending on the subdivision method, vertex connectivity information including the additional vertices, texture coordinates, and connectivity information about the texture coordinates may be generated. The pre-processor 811 may generate a fitted subdivided mesh by adjusting vertex positions such that the subdivided mesh becomes similar to the original mesh.

According to embodiments, when inter-frame encoding (inter-encoding) is performed on the mesh frame, the base mesh is output to the motion vector encoder 813 through the switching unit 812. When intra-frame encoding (intra-encoding) is performed on the mesh frame, the base mesh is output to the static mesh encoder 814 through the switching unit 812. The motion vector encoder 813 may be referred to as a motion encoder.

For example, when intra-encoding (intra-frame encoding) is performed on the mesh frame, the base mesh may be compressed through the static mesh encoder 814. In this case, the connectivity information, vertex geometry information, vertex texture information, normal information, and the like related to the base mesh may be encoded. The base mesh bitstream generated through the encoding is transmitted to the multiplexer 823.

As another example, when inter-encoding (inter-frame encoding) is performed on the mesh frame, the motion vector encoder 813 may receive as input a base mesh and a reference reconstructed base mesh (or a reconstructed quantized reference base mesh), compute a motion vector between the two meshes, and encode the value thereof. Further, the motion vector encoder 813 may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer 823.

The base mesh reconstructor 815 may receive the base mesh encoded by the static mesh encoder 814 or the motion vector encoded by the motion vector encoder 813, and may generate a reconstructed base mesh. For example, the base mesh reconstructor 815 may perform static mesh decoding on the base mesh encoded by the static mesh encoder 814 to reconstruct the base mesh. In this case, quantization may be applied before the static mesh decoding, and inverse quantization may be applied after the static mesh decoding. In another example, the base mesh reconstructor 815 may reconstruct the base mesh based on the reconstructed quantized reference base mesh and the motion vector encoded by the motion vector encoder 813. The reconstructed base mesh is output to the displacement calculator (or displacement vector calculator) 816 and the mesh reconstructor 820.

The displacement calculator 816 may perform mesh subdivision on the reconstructed base mesh. The displacement calculator 816 may calculate a displacement vector, which is the value of the difference in vertex positions between the subdivided reconstructed base mesh and the fitted subdivision (or subdivided) mesh generated by the pre-processor 811. In this case, displacement vectors as many as vertices in the subdivided mesh may be calculated. The displacement calculator 816 may transform the displacement vectors calculated in the 3D Cartesian coordinate system to a local coordinate system based on the normal vector of each vertex.

The displacement vector video generator 817 may include a linear lifting part, a quantizer, and an image packer.

That is, in displacement vector video generator 817, the linear lifting unit may transform the displacement vectors for effective encoding. According to embodiments, the transform may be lifting transform, wavelet transform, or the like. In addition, the quantizer may perform quantization on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image by the image packer. The displacement vector video generator 817 may generate a displacement vector video by grouping the packed 2D images for each frame. A displacement vector video may be generated for each group of frames (GoF) of the input mesh.

The displacement vector video encoder 818 may encode the generated displacement vector video using a video compression codec. The generated displacement vector video bitstream is transmitted to the multiplexer 823.

The displacement vector reconstructor 819 may include a video decoder, an image unpacker, an inverse quantizer, and an inverse linear lifting part. That is, in the displacement vector reconstructor 819, the encoded displacement vector is decoded by the video decoder, image unpacking is performed by the image unpacker, inverse quantization is performed by the inverse quantizer, and inverse transform is performed by the inverse linear lifting unit to reconstruct displacement vectors. The reconstructed displacement vectors are output to the mesh reconstructor 820. The mesh reconstructor 820 reconstructs a deformed mesh based on the base mesh reconstructed by the base mesh reconstructor 815 and the displacement vectors reconstructed by the displacement vector reconstructor 819. The reconstructed mesh (also referred to as the reconstructed deformed mesh) has reconstructed vertices, inter-vertex connectivity information, texture coordinates, and inter-texture coordinate connectivity information.

The texture map video generator 821 may re-generate a texture map based on the texture map (or attribute map) of the original mesh and the reconstructed deformed mesh output from the mesh reconstructor 820. According to embodiments, the texture map video generator 821 may assign the vertex-by-vertex color information in the texture map of the original mesh to the texture coordinates of the reconstructed deformed mesh. According to embodiments, the texture map video generator 821 may generate a texture map video by grouping the frame-level re-generated texture maps into GoFs.

The generated texture map video may be encoded by the texture map video encoder 822 using a video compression codec. A texture map video bitstream generated through the encoding is transmitted to the multiplexer 823.

The multiplexer 823 multiplexes the motion vector bitstream (in the case of, for example, inter-encoding), the base mesh bitstream (in the case of, for example, intra-encoding), the displacement vector bitstream, and the texture map bitstream into a single bitstream. The single bitstream may be transmitted to the receiving side through the transmitter 824. Alternatively, for the motion vector bitstream, the base mesh bitstream, the displacement vector bitstream, and the texture map bitstream, a file with one or more track data may be generated or the bitstreams may be encapsulated into segments and transmitted to the receiving side through the transmitter 824.

Referring to FIG. 13, the transmitter (encoder) may encode the mesh in an intra-frame or inter-frame manner. According to intra-encoding, the transmission apparatus may generate a base mesh, displacement vectors (or displacements), and a texture map (or attribute map). According to inter-encoding, the transmission apparatus may generate a motion vector (or motion), displacement vectors (or displacements), and a texture map (or attribute map). The texture map acquired from the data input unit is generated and encoded based on the reconstructed mesh. The displacements are generated and encoded based on the differences in vertex positions between the base mesh and the segmented (or subdivided) mesh. More specifically, the displacement is a difference in position between the fitted subdivided mesh and the subdivided reconstructed base mesh, i.e., the difference in vertex position between the two meshes. The base mesh is generated by decimating the original mesh through pre-processing and encoding the decimated mesh. For the motion, a motion vector is generated for the mesh in the current frame based on the reference base mesh in the previous frame.

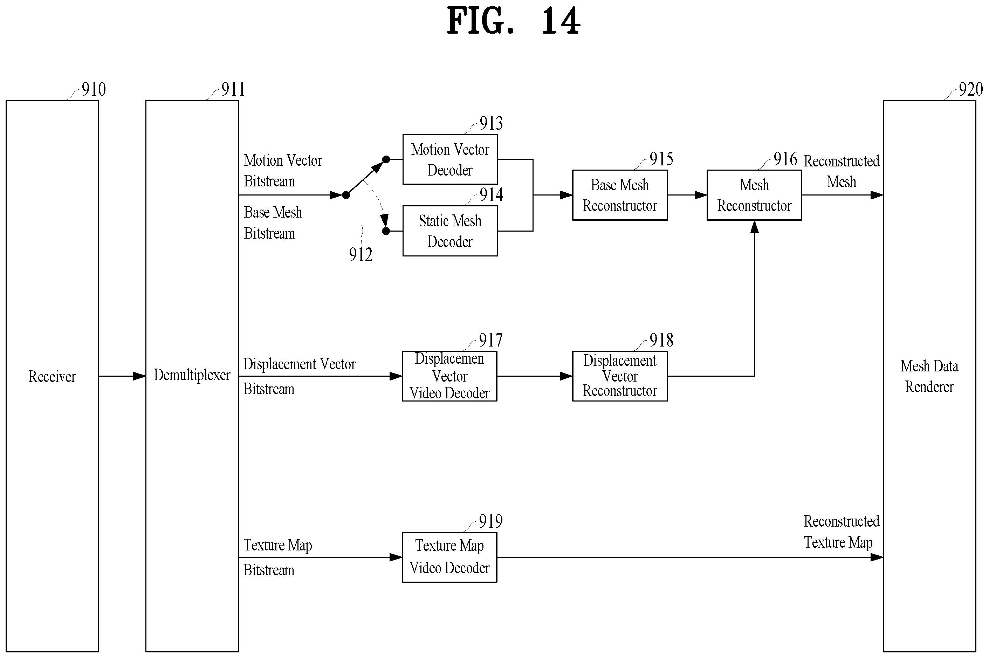

FIG. 14 illustrates a mesh data reception apparatus according to embodiments.

FIG. 14 corresponds to the reception apparatus 110 or mesh video decoder 113 of FIG. 1, the decoder of FIG. 11 or 12, and/or a corresponding reception decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of mesh data received by the receiver 910 is subjected to file/segment decapsulation and then demultiplexed by the demultiplexer 911 into a compressed motion vector bitstream (e.g., inter-decoding) or base mesh bitstream (e.g., intra-decoding), a displacement vector bitstream, and a texture map bitstream. For example, when the current mesh is inter-frame encoded (i.e., inter-encoded), the motion vector bitstream is received, demultiplexed, and then output to the motion vector decoder 913 through the switching unit 912. In another example, when the current mesh is intra-frame encoded (i.e., intra-encoded), the base mesh bitstream is received, demultiplexed, and output to the static mesh decoder 914 through the switching unit 912. Here, the motion vector decoder 913 may be referred to as a motion decoder.

According to embodiments, in the case where inter-frame encoding is applied to the current mesh based on the frame header information, the motion vector decoder 913 may decode the motion vector bitstream. According to embodiments, the motion vector decoder 913 may use the previously decoded motion vector as a predictor and add the same to the residual motion vector decoded from the bitstream to reconstruct the final motion vector.

According to embodiments, in the case where intra-frame encoding is applied to the current mesh based on the frame header information, the static mesh decoder 914 may decode the base mesh bitstream to reconstruct connectivity information, vertex geometry information, texture coordinates, normal information, and the like related to the base mesh.

According to embodiments, the base mesh reconstructor 915 may reconstruct the current base mesh based on the decoded motion vectors or the decoded base mesh. For example, in the case where inter-frame encoding is applied to the current mesh, the base mesh reconstructor 915 may add the decoded motion vectors to the reference base mesh and perform inverse quantization to generate a reconstructed base mesh. In another example, in the case where intra-frame encoding is applied to the current mesh, the base mesh reconstructor 915 may perform inverse quantization on the base mesh decoded by the static mesh decoder 914 to generate a reconstructed base mesh.

According to embodiments, the displacement vector video decoder 917 may decode the displacement vector bitstream as a video bitstream using a video codec.

According to embodiments, the displacement vector reconstructor 918 extracts displacement vector transform coefficients from the decoded displacement vector video, and applies inverse quantization and inverse transform to the extracted displacement vector transform coefficients to reconstruct displacement vectors. To this end, the displacement vector reconstructor 918 may include an image unpacker, an inverse quantizer, and an inverse linear lifting part. If the reconstructed displacement vectors are values in a local coordinate system, inverse transform to the Cartesian coordinate system may be performed.

The mesh reconstructor 916 may subdivide the reconstructed base mesh to generate additional vertices. Through the subdivision, vertex connectivity information including the additional vertices, texture coordinates, and connectivity information about the texture coordinates may be generated. In this case, the mesh reconstructor 916 may combine the subdivided reconstructed base mesh with the reconstructed displacement vectors to generate a final reconstructed mesh (also referred to as a reconstructed deformed mesh).

According to embodiments, the texture map video decoder 919 may decode the texture map bitstream as a video bitstream using a video codec to reconstruct a texture map. The reconstructed texture map has color information about each vertex in the reconstructed mesh, and the texture coordinates of each vertex may be used to obtain the color value of the vertex from the texture map.

According to embodiments, the mesh reconstructed from the mesh reconstructor 916 and the texture map reconstructed from the texture map video decoder 919 are presented to the user through a rendering process in the mesh data renderer 920.

Referring to FIG. 14, the reception apparatus (decoder) may decode the mesh in an intra-frame or inter-frame manner. According to intra-decoding, the reception apparatus may receive a base mesh, displacement vectors (or displacements), and a texture map (or attribute map), and render mesh data based on the reconstructed mesh and reconstructed texture map. According to inter-decoding, the reception apparatus may receive a motion vector (or motion), the displacement vectors (or displacements), a texture map (or attribute map), and render mesh data based on the reconstructed mesh and the reconstructed texture map.

A mesh data transmission apparatus and method according to embodiments may pre-process mesh data, encode the preprocessed mesh data, and transmit a bitstream containing the encoded mesh data. A point mesh data reception apparatus and method according to embodiments may receive a bitstream containing mesh data and decode the mesh data. The mesh data transmission/reception method/apparatus according to embodiments may be referred to as a method/apparatus according to embodiments. The mesh data transmission/reception method/apparatus may also be referred to as a 3D data transmission/reception method/apparatus or point cloud data transmission/reception method/apparatus.

As described above, the V-Mesh method transforms displacement information generated during an encoding process into video format and then compresses the displacement information by using the existing 2D video codec. The compressed displacement information is reconstructed by performing a reverse process of the 2D video codec. In more detail, the V-DMC encoder (or encoder or encoding device) may calculate a displacement vector, which is a difference between a mesh reconstructed from a base mesh and a mesh fitted in a pre-processing step, and perform lifting transformation, quantization, and image packing on the calculated displacement vector, and then encode the displacement vector into a displacement vector bitstream. In this case, the V-DMC decoder (or decoder or decoding device) performs the reverse process of the V-DMC encoder (e.g., displacement vector decoding, image unpacking, dequantization, and lifting inverse transform) to reconstruct the displacement vector.

As described above, the encoder on the transmitting side performs image packing on the displacement data, and the decoder on the receiving side performs image unpacking on the displacement data. In the present disclosure, the displacement data may be a displacement vector or a displacement vector transform coefficient. The displacement vector transform coefficient may be called a transform coefficient.

Currently, displacement data in V-DMC is packed into a 2D image.

That is, displacement data, for example, transform coefficients, is configured as one block per 256 (=$16 \times 16$)

units, and each block may be packed into a 2D image in z-scan order. In this case, the horizontal number of blocks is fixed to 16, but the vertical number of blocks may be determined according to the number of vertices of the subdivided base mesh. Within one block, the transform coefficients may be aligned with the Moulton code and packed. The packed images may be generated as displacement videos for each GoF unit, and the displacement videos may be encoded using the existing video compression codec. However, slices of the video codec during encoding are not considered, and thus processing by LoD is not possible. This prevents partial/scalable access to displacement data on the receiving side.

The present disclosure proposes an MCTS/subpicture based on displacement data packing method for efficient partial/scalable access. In more detail, the present disclosure may pack each subdivision level () of a displacement vector into rectangular tiles/slices and then configure and encode/decode the displacement vector into MCTS/subpictures. In this case, when compressed into P or B frames, each LoD needs to have the same MCTS/subpicture area in GoF units. The present disclosure proposes a packing/unpacking method of displacement data that may satisfy these constraints.

Thus, the present disclosure relates to V-DMC, which is a method of compressing 3D dynamic mesh data based on the existing 2D video codec, and describes a device and method for encoding/decoding in displacement vector units in displacement vector transformation and quantization steps, and syntax and semantics information related thereto.

In the present disclosure, geometry information (also referred to as geometry or geometry data), which is one of the elements that constitute a mesh, includes vertices (or points), edges, and polygons. Here, a vertex defines a position in 3D space, an edge represents connectivity between vertices, and a polygon, which is a combination of edges and vertices, defines the surface of the mesh. In other words, each vertex that constitutes the mesh represents a position in 3D space, expressed as, for example, x, y, z coordinates (i.e., canonical coordinates). The polygon may be a triangle or a quadrilateral. In other words, geometry forms the skeleton of a 3D model, defines the shape of a model, and is visually represented when rendered.

In the present disclosure, the terms "vertex" and "point" may be used interchangeably. That is, a vertex has coordinates in a 3D space, and a polygon such as a triangle or quadrilateral may be formed by connecting multiple vertices. In addition, the term "V-DMC" referred to in the present disclosure may also be referred to as "V-mesh." The two terms are used interchangeably.

The displacement information may be acquired based on subdivided meshes (or sub-meshes). That is, the difference in position of each vertex between a fitted subdivision mesh and a subdivided reconstructed base mesh is calculated, wherein the fitted subdivided mesh is generated by performing a fitting procedure to make the input mesh and sub-mesh similar to each other, and the subdivided reconstructed base mesh is generated by subdividing the reconstructed base mesh. In the present disclosure, the difference in vertex position is referred to as a displacement vector. In the term displacement vector is used interchangeably with displacement or displacement information or displacement data. Also, the terms displacement video may be used interchangeably with displacement vector video or displacement vector transform coefficient video, and the term displacement vector may be used interchangeably with displacement vector transform coefficients or displacement vector coefficients.

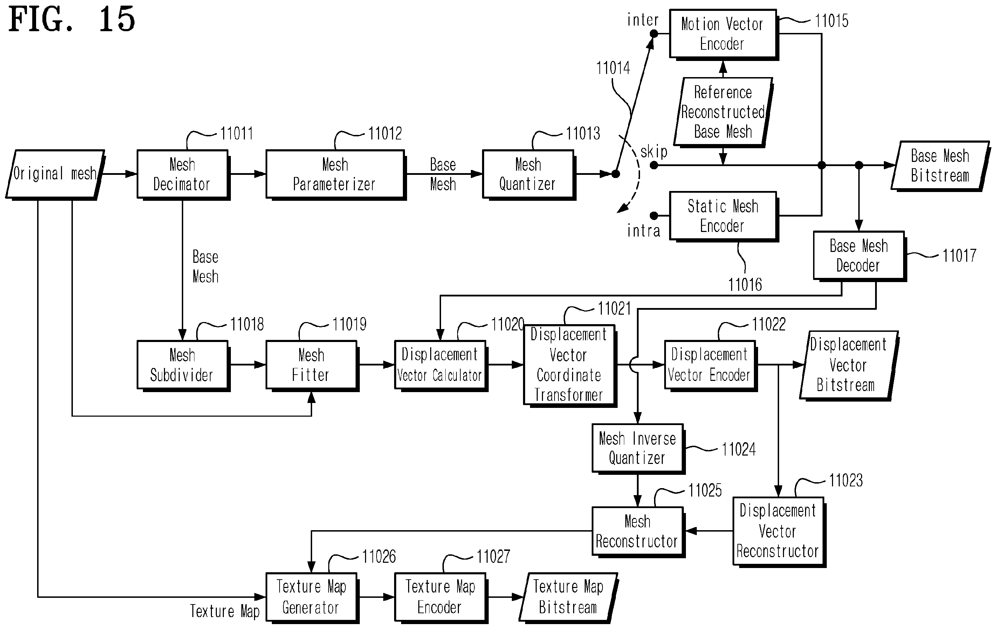

FIG. 15 illustrates a transmission apparatus according to the embodiments. The transmission apparatus of FIG. 15 may be referred to as a mesh data transmission apparatus, an encoder, an encoder of a transmission apparatus, a V-Mesh encoder, or a dynamic mesh encoder.

FIG. 15 corresponds to the transmission device 100 or mesh video encoder 102 of FIG. 1, the encoder (pre-processor and encoder) of FIG. 2, 6, or 7, the transmission apparatus of FIG. 13, and/or the corresponding transmission encoding apparatus. Each component of FIG. 15 corresponds to hardware, software, a processor, and/or a combination thereof. In FIG. 15, the order in which the blocks are executed may be changed. Some blocks may be omitted, and some blocks may be newly added.

In the present disclosure, the transmitting operation process for compression and transmission of dynamic mesh data using the V-Mesh compression technique may be performed as illustrated in FIG. 15. The transmission apparatus of FIG. 15 may support both an intra-frame encoding (or intra encoding or intra-screen encoding) process and/or an inter-frame encoding (or inter encoding or inter-screen encoding) process.

In FIG. 15, the mesh decimator 11011 simplifies the input original mesh using a mesh simplification algorithm to generate a base mesh (also referred to as a simplified base mesh or simplified mesh). The mesh simplification may be performed based on the number of target vertices or the number of target polygons constituting the mesh. For example, decimation or the like may be used as a mesh simplification algorithm for simplifying the original mesh. Specifically, the decimation may be a process of selecting vertices to be removed from the original mesh based on a certain reference point, and then removing the selected vertices and triangles connected to the selected vertices.

In other words, the mesh decimator 11011 may simplify the input mesh to a target number of vertices or a target number of faces. The simplification may be performed using various methods, such as triangle collapse and edge collapse.

According to embodiments, the base mesh simplified by the mesh decimator 11011 is provided to the mesh parameterizer 11012 and the mesh subdivider 11018.

The mesh parameterizer 11012 performs an operation of mapping a 3D surface to a texture domain for the decimated mesh. That is, the mesh parameterizer 11012 generates texture coordinate information and texture connectivity information related to the input mesh. In one embodiment, the mesh parameterizer 11012 may perform parameterization using a UV Atlas tool. In this operation, mapping information indicating a position to which each vertex of the decimated mesh may be mapped to in the 2D image is generated. The mapping information is expressed and stored as texture coordinates, and the final base mesh is generated through this operation. In other words, the mesh parameterizer 11012 performs parameterization to generate texture coordinates (UV coordinates) and texture connectivity information per vertex of the input mesh (i.e., the decimated mesh or decimated base mesh).

The final base mesh (also referred to as a base mesh with a texture map) generated by the parameterizer 11012 is input to the mesh quantizer 11013 to be quantized. According to embodiments, the mesh quantizer 11013 may quantize the mesh information (e.g., geometry information (x, y, z) and/or texture coordinates (u,v), normal information (nx, ny, nz), etc.) in floating point form to fixed-point form. That is, the mesh quantizer 11013 may quantize the vertex coordinates and texture coordinates of the base mesh. In some embodiments, quantization of a specific component may be skipped.

The mesh subdivider 11018 subdivides the base mesh obtained through decimation by the mesh decimator 11011. The mesh subdivider 11018 may perform mesh subdivision on the base mesh to generate additional vertices. Depending on the subdivision method, vertex connectivity information including the additional vertices, texture coordinates, and connectivity information about the texture coordinates may be generated. In this case, the geometry information connectivity information, texture coordinate connectivity information, and texture coordinates may be generated through implicit derivation depending on the subdivision method. According to embodiments, the mesh subdivider 11018 may perform the subdivision using a method such as mid-edge, Loop, or Catmul&Clark.

In the present disclosure, levels and LoD may be defined in a subdivision process of a base mesh as described with reference to FIG. 8. In this case, subdivision of the base mesh is performed in the mesh subdivider 11018 as an example.

In more detail, mesh subdivision in the mesh subdivider 11018 may be performed n times by user parameters or an agreement of an encoder (i.e., transmission device)/decoder (i.e., reception device). According to embodiments, vertices of the

base mesh may be defined as vertices of level 0 ($R_0$), vertices newly generated by performing subdivision #1 may be defined as vertices of level 1 ($R_1$), ... vertices newly generated by performing subdivision #n may be defined as vertices of level n ($R_n$). For convenience of explanation, the present disclosure may refer to vertices at level 0 ($R_0$) as level 0 vertices, vertices at level 1 ($R_1$) as level 1 vertices, ..., and vertices at level n ($R_n$) as level n vertices. Level 0 may be called the 0th level ($R_0$), level 1 may be called the first level ($R_1$), ... level n may be called the nth level ($R_n$).

According to embodiments, LoD0, LoD1, ... LoDn may be defined according to Expression 1 below.

$$[\text{Expression 1}]$$
$$\text{LoD0} = R_0$$
$$\text{LoD1} = R_0 + R_1 = \text{LoD0} + R_1$$
$$\dots$$
$$\text{LoDn} = R_0 + R_1 +, \dots, + R_n = R_0 \cup R_1 \cup, \dots, \cup R_n = \text{LoDn-1} + R_n$$

That is, the base mesh includes vertices for LoD0. The first subdivision mesh generated by subdividing the base mesh once includes vertices for LoD1. That is, LoD1 includes the vertices of the base mesh (i.e., $R_0$ vertices) and the vertices of newly generated level 1 by subdividing the base mesh (i.e., $R_1$ vertices). The second subdivision mesh generated by further subdividing the first subdivision mesh includes vertices for LoD2. That is, LoD2 includes vertices of the base mesh (i.e., $R_0$ vertices), vertices of a newly generated level 1 by subdividing the base mesh (i.e., $R_1$ vertices), and vertices of a newly generated level 2 by subdividing the first subdivision mesh (i.e., $R_2$ vertices).

As such, LoD represents a level of detail of mesh data content, and as the LoD (or level) index increases, a distance between vertices becomes closer and the level of detail increases. That is, as the LoD value decreases, the detail of the mesh data content decreases, and as the LoD value increases, the detail of the mesh data content increases.

According to embodiments, a mesh fitter 11019 may perform fitting by adjusting vertex positions such that the mesh subdivided in the mesh subdivider 11018 is similar to the original mesh, thereby generating a fitted subdivision (subdivided) mesh.

In the present disclosure, the mesh decimator 11011, the mesh parameterizer 11012, the mesh subdivider 11018, and the mesh fitter 11019 may be referred to as a pre-processor. In this case, the mesh decimator 11011, the mesh parameterizer 11012, the mesh subdivider 11018, and the mesh fitter 11019 may be omitted, and when the corresponding process is omitted, the original mesh is output to the mesh quantizer 11013. According to embodiments, the pre-processor may further include a displacement vector calculator 11020. In this case, coordinate information of the original mesh may be applied as input to the displacement vector calculator 11020, and according to embodiments, the displacement vector encoding process (i.e., the displacement vector calculator 11020, the displacement vector coordinate system transformer 11021, and the displacement vector encoder 11022 may be omitted.

According to embodiments, base mesh the quantized by the mesh quantizer 11013 may be output to a motion vector encoder 11015 or a static mesh encoder 11016 through a switching unit 11014.

According to embodiments, the base mesh is output to the motion vector encoder 11015 through the switching unit 11014 when inter encoding (or when the type of the current base mesh is inter type) is performed on the corresponding mesh frame, and is output to the static mesh encoder 11016 through the switching unit 11014 when intra encoding (or when the type of the current base mesh is intra type) is performed on the corresponding mesh frame. The motion vector encoder 11015 may be referred to as a motion encoder.

In one example, when intra encoding (intra-frame encoding) is performed on the mesh frame, the base mesh may be compressed by the static mesh encoder 11016. In this case, the connectivity information, vertex geometry information, vertex texture information, normal information, and the like related to the base mesh may be encoded. That is, vertex coordinates, vertex connectivity information, texture coordinates, texture connectivity information, and the like related to the mesh may be encoded by the static mesh encoder 11016. The base mesh bitstream generated through the encoding is transmitted to the multiplexer (not shown).

In another example, when inter encoding (inter-frame encoding) is performed on the mesh frame, the motion vector encoder 11015 may receive a base mesh and a reference reconstructed base mesh (or a reconstructed quantized reference base mesh) as input, calculate a motion vector between the two meshes, and encode the value thereof. Further, the motion vector encoder 11015 may perform connectivity information-based prediction using the previously encoded/-decoded motion vector as a predictor, and perform entropy encoding on a motion vector difference (also referred to as a residual motion vector), which is obtained by subtracting the predicted motion vector from the current motion vector. The motion vector bitstream generated through the encoding is transmitted as the base mesh bitstream to the multiplexer (not shown). That is, in the case of intra-frame encoding, the static mesh bitstream is input to the multiplexer as the base mesh bitstream.

According to embodiments, when the type of the current base mesh is a skip type among intra/inter/skip, a reference base mesh may be used as the current base mesh, and in this case, encoding of a separate static mesh or motion vector may be omitted.

In FIG. 15, a base mesh decoder 11017 may receive the base mesh encoded by the static mesh encoder 11016 or the motion vector encoded by the motion vector encoder 11015 or the reference base mesh to generate a reconstructed base mesh.

According to embodiments, the base mesh decoder 11017 performs reconstruction of the base mesh depending on the encoding type of the current mesh or the type of the current base mesh (inter encoding or intra encoding or skip). For example, the base mesh decoder 11017 may perform static mesh decoding on the base mesh encoded by the static mesh encoder 11016 to reconstruct the base mesh. In this case, quantization may be applied before static mesh decoding, and inverse quantization may be applied after static mesh decoding. That is, when intra encoding is performed, the current base mesh may be reconstructed by performing inverse quantization on the quantized base mesh through the mesh quantizer 11013. As another example, the base mesh decoder 11017 may reconstruct the base mesh based on the reconstructed quantized reference base mesh and the motion vector encoded by the motion vector encoder 11015. That is, when inter encoding is performed, the current base mesh may be generated by decoding the motion vectors by using the motion vector decoding method and then applying (i.e., adding) the decoded motion vectors to the referenced reconstructed base mesh. In this case, when the motion vector is not quantized, the motion vector reconstruction process may be omitted and the current base mesh may be reconstructed using the motion vector calculated by the motion vector encoder 11015. As another example, when the current base mesh type is skip, the reference base mesh may be the reconstructed base mesh. The reconstructed base mesh is output to the displacement vector calculator 11020 and a mesh inverse quantizer 11024.

According to embodiments, the displacement vector calculator 11020 may perform mesh subdivision on the reconstructed base mesh. The displacement vector calculator 11020 may calculate a displacement vector, which is a difference value in vertex positions between the subdivided reconstructed base mesh and the fitted subdivision (or subdivided) mesh generated by the mesh fitter 11019. In this case, the displacement vector may be calculated as many times as the number of vertices of the subdivided mesh. That is, the displacement vector of the number of vertices of the subdivided mesh may be calculated through the displacement vector calculator 11020.

According to embodiments, a displacement vector coordinate system transformer 11021 may output the vertex displacement vector calculated in a 3D Cartesian coordinate system (i.e., (x, y, z) space) (or canonical coordinate system) without change, or may transform the vertex displacement vector into a local coordinate system (i.e., normal, tangential, and bi-tangential coordinate systems) based on the normal vector of each vertex. In this case, the normal vector may be calculated for each subdivided vertex based on the geometry information and connection information of the surrounding vertices.

According to embodiments, among normal, tangential, and bi-tangential components, only the normal component may be encoded. This may be obtained by always encoding only the normal component when coordinate transformation is applied according to an agreement between the encoder/decoder or by determining the normal component, signaling a 1-bit flag (onlyNormFlag), and transmitting the 1-bit flag to the receiving side.

In this case, the normal vector may be calculated for each subdivided vertex based on the geometry information and/ connection information of the surrounding vertices, and the like.

Whether or not to perform displacement vector coordinate system transformation may be determined by an agreement between the encoder/decoder, or whether or not to perform displacement vector coordinate system transformation may be determined by transmitting a flag (applyLocalCoord or asps_vmc_ext_displacement_coordinate_system) in units such as sequence, GOF, frame, and sub-mesh.

That is, whether or not the displacement vector coordinate system is transformed by the displacement vector coordinate system transformer 11021 may be determined by an encoder (i.e., transmission device)/decoder (i.e., reception device) agreement, or whether or not the displacement vector coordinate system is transformed may be determined by transmitting, to the reception device, a flag (applyLocalCoord or asps_vmc_ext_displacement_coordinate_system), which is information for identifying whether or not the displacement vector coordinate system is transformed by signaling the flag in signaling information (e.g., atlas sequence parameter set, ASPS). For example, when the value of the displacement vector coordinate system transformation flag (applyLocalCoord or asps_vmc_ext_displacement_coordinate_system) syntax (or field) is 0, the canonical coordinate system is used without change, and when it is 1, the flag indicates that transformation is performed to the local coordinate system.

According to embodiments, a displacement vector in a canonical coordinate system or a displacement vector converted into a local coordinate system in the displacement vector coordinate system transformer 11021 is encoded into a displacement vector bitstream (or displacement vector video bitstream) in a displacement vector encoder 11022. According to an embodiment, the displacement vector encoder 11022 may encode a displacement vector in a canonical coordinate system or a displacement vector transformed in a local coordinate system into a displacement vector bitstream by using a 2D video encoder such as H.264, HEVC, or VVC.

That is, the displacement vector encoder 11022 may perform encoding on a displacement vector or a displacement vector transform coefficient (or displacement vector coefficient). In the present disclosure, the displacement vector encoder 11022 may perform encoding through a 2D video encoder (i.e., a video codec-based encoder) such as H.264, HEVC, or VVC, a zero run length encoder, an arithmetic encoder, and the like. For example, when the encoding method is video codec-based encoding, the displacement vector encoder 11022 may pack and encode the displacement vector or displacement vector transform coefficient into a frame. That is, in the displacement vector encoder 11022, the displacement vector transform coefficients may be packed into a 2D image and then encoded using a 2D video codec (i.e., a video compression codec), or zero run-length encoded, or arithmetic encoded to generate a displacement vector video bitstream.

The displacement vector encoding method of the displacement vector encoder 11022 may be determined as a specific encoding method by an encoder/decoder agreement, or the encoding method determined by the encoder may be signaled as a flag or index (displacement_method) and transmitted to the reception device. In the present disclosure, the displacement vector encoding method may vary. According to embodiments, one of {video codec-based encoding method and zero run-length encoding method}, {zero run-length encoding method and arithmetic encoding method}, {video codec-based encoding method and arithmetic encoding method}, video codec-based encoding method, zero run-length encoding method, and arithmetic encoding method may be determined through information (e.g., displacement_method flag) or an index for identifying a displacement vector encoding method. A detailed description of the method of encoding displacement vectors or displacement vector transform coefficients into frames based on a video codec and the arithmetic encoding method in the displacement vector encoder 11022 will be given below.

According to embodiments, the displacement vector encoding method may be determined according to a profile defined in an encoder/decoder, an index (profile_toolset_idc) indicating profile information may be signaled and transmitted to a decoder of a reception device, and the decoder of the reception device may determine a displacement vector decoding method according to profile_toolset_idc.

According to embodiments, a displacement vector video bitstream encoded and generated by the displacement vector encoder 11022 is transmitted to a multiplexer (not shown). According to embodiments, the encoding selection method of the displacement vector encoder 11022 may use a displacement vector encoder agreed in the encoder (i.e., the transmitting side)/decoder (i.e., the receiving side), or may analyze the characteristics of the displacement vector in the encoder of the transmitting side and transmit the type of the selected displacement vector encoder to the decoder of the receiving side.

According to embodiments, a displacement vector reconstructor 11023 may reconstruct the displacement vector by performing the reverse process of displacement vector encoding on the displacement vector or displacement vector transform coefficient encoded by the displacement vector encoder 11022. That is, the displacement vector reconstructor 11023 may perform displacement vector reverse packing (or unpacking) depending on the method of encoding the displacement vector, for example, when encoded based on a video codec. The displacement vector reconstructor 11023 may further perform inverse quantization and inverse transformation processes or the like depending on whether quantization and transformation processes are performed during the displacement vector encoding process.

According to embodiments, the mesh inverse quantizer 11024 may inversely quantize vertex coordinates or texture coordinates of the reconstructed base mesh in the reverse process of quantization. That is, the mesh inverse quantizer 11024 receives reconstructed geometry information (x, y, z) and/or texture coordinates (u, v) and/or normal information (nx, ny, nz) of the reconstructed base mesh and performs inverse quantization. When the quantization process is omitted in the mesh quantizer 11013, the inverse quantization process is also omitted in the mesh inverse quantizer 11024.

According to embodiments, a mesh reconstructor 11025 may reconstruct a mesh based on a reconstructed displacement vector output from the displacement vector reconstructor 11023 and a reconstructed base mesh (or an inverse quantized reconstructed base mesh) output from the mesh inverse quantizer 11024. In more detail, the mesh reconstructor 11025 performs subdivision on the reconstructed base mesh output from the mesh inverse quantizer 11024 to generate subdivided vertices, position information, texture coordinates, and connection information. By adding the displacement vector reconstructed by the displacement vector reconstructor 11023 to the detailed position information, a reconstructed deformed mesh (i.e., reconstructed vertex position information) may be generated. According to embodiments, the mesh reconstructed in the mesh reconstructor 11025 (or reconstructed mesh or reconstructed deformed mesh) has reconstructed vertices, connection information between vertices, texture coordinates, and connection information between texture coordinates. The reconstructed mesh (or reconstructed mesh or reconstructed deformed mesh) generated by the mesh reconstructor 11025 is provided to a texture map generator 11026.

According to embodiments, the texture map generator 11026 may regenerate a texture map of the current mesh based on the texture map (or attribute map) of the original mesh and the mesh reconstructed by the mesh reconstructor 11025. That is, the texture map generator 11026 may generate a texture map of the reconstructed mesh through a relationship between the texture coordinates and connection information of the reconstructed mesh and the original mesh and the texture map of the original mesh.

According to embodiments, the texture map generator 11026 may assign color information per vertex of the texture map of the original mesh to the texture coordinates of the reconstructed base mesh (or the reconstructed deformed mesh). According to embodiments, the texture map generator 11026 may generate a texture map (or texture map video) by grouping the regenerated texture maps for each frame into GoF units.

The texture map generated in the texture map generator 11026 may be encoded by a texture map encoder 11027. That is, the texture map encoder 11027 stacks the texture map generated through the texture map generator 11026 in the frame order of the mesh to form a texture map video and encodes the texture map video in a 2D video encoder. For example, the texture map encoder 11027 may encode a texture map by using a 2D video codec-based encoder, a zero run length encoder, an entropy coding-based arithmetic encoder, or the like. The texture map encoder 11027 may further perform color space transformation of the texture map. For example, when the color space of the texture map is RGB444, encoding may be performed after transformation to a color space such as YUV420 or YUV444. Then, the texture map substream (or texture map video bitstream) generated through texture map encoding is transmitted to a multiplexer (not shown).

According to embodiments, the type of texture map encoder 11027 may include a video encoder (e.g., VVC or HEVC) and an entropy coding-based encoder. The selection method of the texture map encoder 11027 may use a texture map encoder agreed in the encoder (i.e., transmitting side)/decoder (i.e., receiving side), or may transmit the type of texture map encoder, selected in the encoder of the transmitting side, to the decoder of the receiving side.

According to embodiments, a multiplexer (not shown) may multiplex an input base mesh bitstream, displacement vector bitstream, and texture map bitstream into one bitstream and then transmit the bitstreams to the reception device. Alternatively, the base mesh bitstream, the displacement vector bitstream, and the texture map bitstream may be encapsulated into a file/segment and transmitted to the reception device.

According to embodiments, the multiplexed bitstream in the multiplexer may be transmitted over a network or stored in a digital storage medium. Here, the network may include a broadcasting network and/or a communication network, and the digital storage medium may include various storage media such as USB, SD, CD, DVD, Blu-ray, HDD, or SSD.

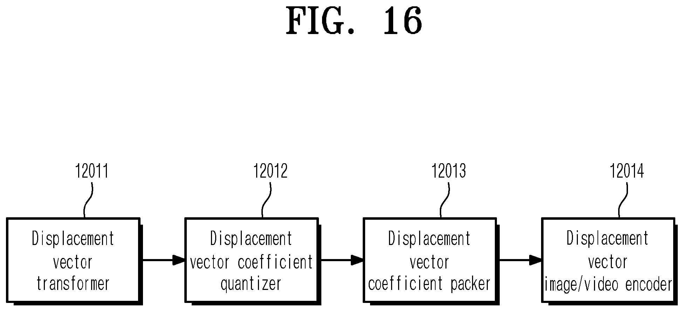

FIG. 16 is a block diagram showing an example of a displacement vector encoder according to embodiments. In FIG. 16, the displacement vector encoder 11022 may include a displacement vector transformer 12011, a displacement vector coefficient quantizer 12012, a Displacement vector coefficient packer 12013, and a displacement vector image/-video encoder 12014. Each component of FIG. 16 corresponds to hardware, software, a processor, and/or a combination thereof. In FIG. 16, the execution order of each block may be changed, some blocks may be omitted, and some blocks may be newly added. In the present disclosure, a displacement vector encoder performs displacement vector transform coefficient image packing for each video image format and then encodes the image-packed displacement vector transform coefficient by using a 2D video codec.

In more detail, the displacement vector transformer 12011 may perform linear lifting transformation, butterfly lifting transformation, and wavelet transformation on the displacement vector of the (x,y,z) or (n, t, bt) coordinate system to transform the displacement vector of the (x,y,z) or (n, t, bt) coordinate system into a displacement vector transform coefficient. In the (n, t, bt) coordinate system, n stands for normal, t stands for tangential, and bt stands for bi-tangential. That is, the displacement vector of the (x,y,z) or (n, t, bt) coordinate system may be transformed through the displacement vector transformer 12011.

For example, when lifting transformation is performed, if a vertex $R_k$ of a kth subdivision level is predicted, prediction of a displacement vector of the kth subdivision level may be performed through the subdivision vertex displacement vector of Rt (t<k or t<=k) as a predictor. According to embodiments, when performing prediction of a displacement vector, an average or distance-based weighted average prediction may be performed on n points close to the current vertex based on connection information among vertices with a lower level of detail than the current vertex. According to embodiments, prediction may be performed based on the displacement vectors of n vertices used to generate the current vertex in the mesh subdivision step. When lifting transformation is performed, a process of updating the displacement vector of the vertex used in prediction may be performed through a residual signal generated by prediction.

According to embodiments, the displacement vector quantizer 12012 may perform quantization on a displacement vector value transformed through the displacement vector transformer 12011, i.e., a displacement vector or a displacement vector transform coefficient. In the present disclosure, the displacement vector transform coefficient is used interchangeably with a displacement vector coefficient with the same meaning. According to embodiments, the displacement vector transform coefficient may be quantized through different quantization parameters for respective axes, and a quantization rate may be determined for each LoD level by deriving a quantization parameter or a scaling parameter according to an encoder/decoder agreement.

According to embodiments, the Displacement vector coefficient packer 12013 may pack the quantized displacement vector transform coefficient into a 2D image of size WxH. That is, when displacement vector transform coefficients are encoded using a video codec-based encoding method in the displacement vector encoder 11022, a process of packing the displacement vector transform coefficients into a frame as a 2D image is performed in the Displacement vector coefficient packer 12013. In other words, the Displacement vector coefficient packer 12013 may pack the displacement vector transform coefficients into a 2D image, and the displacement vector image/video encoder 12014 may encode the packed 2D images by using a video compression codec.

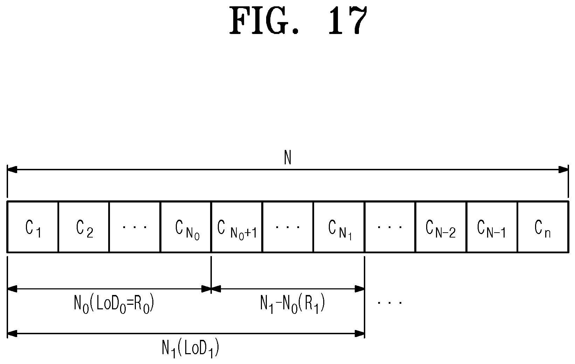

FIG. 17 is a diagram showing an example of a displacement vector transform coefficient structure according to embodiments. In FIG. 17, assuming that the total number of displacement vector transform coefficients is N, the number of displacement vector transform coefficients included in LoD0 is N0 (LoD0 = $R_0$), and the number of displacement vector transform coefficients included in LoD1 is N1 (LoD1), the number of displacement vector transform coefficients of level 0 ($R_0$) is N0, and the number of displacement vector transform coefficients of level 1 ($R_1$) is N1-N0. That is, the number of displacement vector transform coefficients included in LoD1 (N1) is the sum of the number of displacement vector transform coefficients of level 0 ($R_0$) (N0) and the number of displacement vector transform coefficients of level 1 ($R_1$) (N1-N0).

According to embodiments, the Displacement vector coefficient packer 12013 may pack N displacement vector transform coefficients (e.g., N quantized displacement vector transform coefficients) into an image of size W×H. In the present disclosure, W×H may be the size of a frame in which displacement vector transform coefficients are packed into a 2D image.

That is, lifting transformation is performed from a vertex of LoD of a high layer, and the displacement vector transform coefficient of the low LoD is stored in a front side, and the displacement vector transform coefficient of the high LoD is stored in a rear side, as shown in FIG. 17.

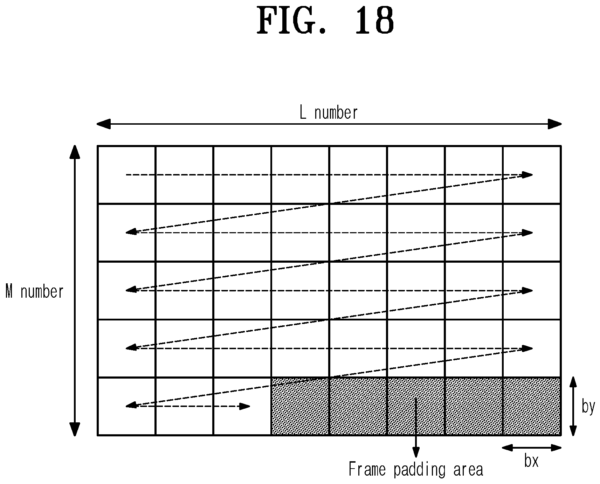

FIG. 18 is a diagram showing an example of packing displacement vector transform coefficients according to embodiments. That is, the displacement vector transform coefficients in the 1D form of FIG. 17 may be packed as a 2D image as in FIG. 18.

According to embodiments, the Displacement vector coefficient packer 12013 may configure displacement vector transform coefficients (or transform coefficient levels) of a 1D vector or scalar into blocks of size bx*by and pack each block according to a scanning order agreed in an encoder/decoder, such as a z-scan order, a zig-zag scanning order, or a 2D Moulton code order. That is, L*M displacement vector transform coefficient blocks may be block-packed into an image of size (bx*L)×(by*M) according to the order defined in the encoder/decoder. Here, L*M is the number of blocks with size bx*by, and bx and by may each be 16. That is, the displacement vector transform coefficients are configured in one block per 256 (16*16) units, and each block may be packed in z-scan order or zig-zag scan order. In other words, displacement vector transform coefficients within a block may be packed according to z-scan order, zig-zag scanning order, 2D Moulton code order, or the like. In summary, the size bx*by may be configured as one block, and the displacement vector transform coefficients may be configured as L×M blocks determined according to the number N of displacement vector transform coefficients. In this case, packing may be performed into a 2D image of size W×H according to a 2D Molton code, zig-zag scan order, or the like.

When the displacement vector transform coefficients of all levels are packed into a 2D image in one frame, packing may be performed sequentially in the scanning order starting from a displacement vector transform coefficient block of level 0 (Ra). In this case, when the total size of the displacement vector transform coefficients is less than L*M, padding is performed as in FIG. 18 to have a size of (bx*L)×(by*M). That is, when the total number of displacement vector transform coefficients is less than (bx*L)×(by*M), padding may be performed to have a size of (bx*L)×(by*M) to fill a displacement vector image. FIG. 18 shows an example in which padding is performed on five blocks. Here, padding means filling the corresponding block with meaningless values (e.g., 0). As another example, when displacement vector transform coefficients of a plurality of levels are packed into a single frame as a 2D image, packing may be performed sequentially in the scanning order starting from the displacement vector transform coefficient block of a low level. As another example, a 2D image may be packed by performing packing and padding in the reverse order of FIG. 18.

According to embodiments, L and M may be determined according to the number (N) of displacement vector transform coefficients, or L (or M) is defined by an agreement of the encoder/decoder, and then M (or L) may be derived depending on the number (N) of displacement vector transform coefficients according to Expression 2 below. Expression 2 below shows an example of deriving M when L is defined according to the agreement of the encoder/decoder.

[Expression 2]

$$blockNum = round(\frac{N + bx * by - 1}{bx * by})$$
$$M = round((blockNum + L - 1)/L)$$

In Expression 2 below, the round function is a function that rounds the number in parentheses to the nearest integer.

According to embodiments, the packing method of the displacement vector transform coefficients of the Displacement vector coefficient packer 12013 may be determined by an agreement in the encoder/decoder, or the packing method performed in the Displacement vector coefficient packer 12013 may be transmitted to the decoder of the reception device.

According to embodiments, the displacement vector transform coefficients of all levels may be packed into one image (i.e., one frame) and encoding may be performed in the displacement vector image/video encoder 12014, or the displacement vector transform coefficients may be packed into each image (i.e., each frame) for each subdivision level (R) and encoding may be performed respectively. Alternatively, displacement vector transform coefficients of a specific level may be packed into one image, and displacement vector transform coefficients of a plurality of different levels may be packed into another image.

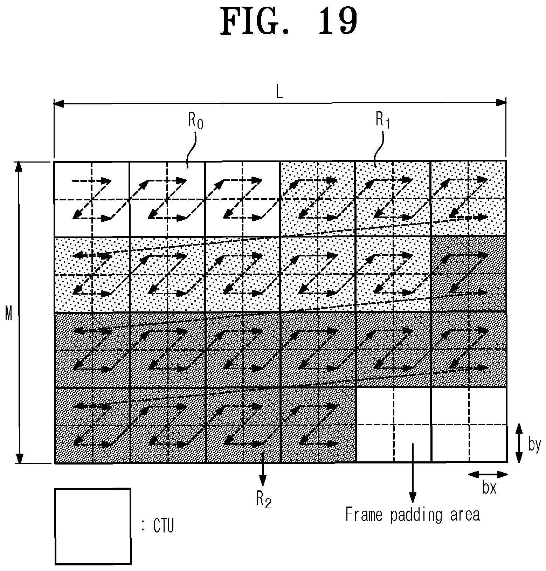

FIG. 19 is a diagram showing an example of packing displacement vector transform coefficient blocks for each LoD according to embodiments. According to embodiments, packing of displacement vector transform coefficient blocks (bx×by) may be performed as shown in FIG. 19 according to the size of a coding tree unit (CTU) of a 2D video encoder, which is encoded for each subdivision level (R), i.e., each LoD level. In this case, padding may be performed to fit the size of the CTU for each level of subdivision (i.e., for each LoD). Padding may be performed with the median value of an image or the last displacement vector transform coefficient value. In FIG. 19, the CTU is used in a process of dividing a video frame into coding tree units, and is a unit used particularly when encoding is performed by dividing the video frame into a tree structure.

According to an embodiment, FIG. 19 shows an example in which displacement vector transform coefficients of three subdivision levels ($R_0$-$R_2$) are packed into one image. That is, this is an example in which the displacement vector transform coefficients $R_0$, $R_1$, and $R_2$ are packed into one frame. In this case, when the number of displacement vector transform coefficients $R_0$, $R_1$, and $R_2$ is less than the size of the frame, a padding area may exist.

When packing displacement vector transform coefficients of each level into one or more frames as in FIG. 19, the displacement vector transform coefficients may be packed into blocks of size bx×by.

In this case, the bx*by displacement vector transform coefficients within one displacement vector transform coefficient block may be packed according to a zig-zag scan order, or may be packed according to a 2D Moulton code order as shown in (a) and (b) of FIG. 20.

According to embodiments, displacement vectors for each subdivision level may be packed into rectangular areas to support partial decoding up to a specific LoD level. In this case, padding may be performed to fit the rectangular area for each level of subdivision. In the present disclosure, the rectangular area is referred to as a packing unit or a packing unit by subdivision level.

(a) and (b) of FIG. 20 are diagrams showing examples of a packing method of displacement vector transform coefficients within a displacement vector transform coefficient block according to embodiments.

(a) of FIG. 20 shows an example of packing 16 displacement vector transform coefficients (C1 to C16) in the x-y Moulton code order within one displacement vector transform coefficient block when bx=by=4. (b) of FIG. 20 shows an example of packing 16 displacement vector transform coefficients (C1-C16) in the y-x Moulton code order within one displacement vector transform coefficient block when bx=by=4.

According to embodiments, the size of a frame into which displacement vector transform coefficients are packed may be obtained as (bx×L)×(by×M) according to bx and by parameters which determine the width and height of a block, respectively, and L and M parameters which determine the number of blocks included in a row and column of the frame, respectively. The L and M parameters may be determined according to an agreement in the encoder/decoder, or M (or L) may be derived based on the number of displacement vector transform coefficients after L (or M) is defined by the agreement in the encoder/decoder (see Equation 2), or may be derived based on the level.

According to embodiments, to support partial decoding of displacement vectors up to a specific LoD level in the decoder of the reception device, displacement vectors for each subdivision level may be configured in packing units, and packing and encoding may be performed. In the present disclosure, a packing unit may be an MCTS or a subpicture. In the present disclosure, a packing unit may include one or more CTUs or one or more bx*by blocks. In particular, according to an embodiment of the present disclosure, the packing unit corresponding to each subdivision level is a rectangular shape (or rectangular area). In this case, all packing units may have the same width, or some packing units may have different widths. The packing units may all have the same height or some packing units may have different heights.

(a) and (b) of FIG. 21 are diagrams showing another example of packing displacement vector transform coefficient blocks by subdivision level according to embodiments. In this case, an image into which the subdivision levels are packed may be called a displacement vector frame. That is, (a) and (b) of FIG. 21 show examples in which displacement vector transform coefficients of four subdivision levels ($R_0$-$R_3$) are grouped into packing units and then packed as one image (or one displacement vector frame).

(a) of FIG. 21 shows an example in which each subdivision level is configured in packing units (e.g., MCTS), and each subdivision level is packed in order from the upper left to the lower right. (b) of FIG. 21 shows an example in which each subdivision level is configured in packing units (e.g., MCTS), and each subdivision level is packed in the reverse order of (a) of FIG. 21 (i.e., from the bottom right to the top left).

In the present disclosure, when L is the width and M is the height in the displacement vector frame, i.e., the image, the widths of two or more packing units in (a) and (b) of FIG. 21 may not be the same. That is, the width (i.e. width size) of each subdivision level may not be the same. For example, packing units corresponding to $R_0$ and $R_1$ have the same height but have different widths. That is, the width of the packing unit corresponding to $R_0$ is less than the width of the packing unit corresponding to $R_1$. In this case, two or more of the packing units may have different heights. (a) and (b) of FIG. 21 show examples in which the heights of the packing units are all different.

(a) and (b) of FIG. 22 are diagrams showing another example of packing displacement vector transform coefficient blocks by subdivision level according to embodiments. In this case, an image into which the subdivision levels are packed may be called a displacement vector frame. That is, (a) and (b) of FIG. 22 show examples in which displacement vector transform coefficients of four subdivision levels ($R_0$-$R_3$) are grouped into packing units and then packed as one image (or one displacement vector frame).

(a) of FIG. 22 shows an example in which each subdivision level is configured in packing units (e.g., MCTS), and each subdivision level is packed in order from the upper left to the lower right. (b) of FIG. 22 shows an example in which each subdivision level is configured in packing units (e.g., MCTS), and each subdivision level is packed in the reverse order of (a) of FIG. 22 (i.e., from the bottom right to the top left).

In the present disclosure, when L is the width and M is the height in the displacement vector frame, that is, the widths of all packing units in (a) and (b) of FIG. 22 are all the same. That is, the width (i.e. width size) of each subdivision level may be the same. For example, the width of the packing unit corresponding to $R_0$ is the same as the width of the packing unit corresponding to $R_1$. In this case, two or more of the packing units may have different heights. (a) and (b) of FIG. 22 show examples in which the heights of the packing units are all different.

In this case, identification information for identifying whether packing of subdivision levels configured in packing units is performed in order from the upper left to the lower right of the displacement vector frame or conversely from the lower right to the upper left of the displacement vector frame may be signaled as a 1-bit flag (e.g., sps_packing_method or asps_vdmc_ext_packing_method) and transmitted to the decoder of the reception device. That is, displacement vectors of each subdivision level may be packed into a displacement vector frame as in (a) of FIG. 21/(a)of FIG. 22 or (b) of FIG. 21/(b) of FIG. 22 according to a 1-bit flag (e.g., sps_packing_method or asps_vdmc_ext_packing_method) indicating a packing order of the subdivision levels configured in packing units. As seen from the present disclosure, when a value of a 1-bit flag (e.g., sps_packing_method or asps_vdmc_ext_packing_method) is 0, packing is performed in order from the upper left to the lower right of the displacement vector frame as in (a) of FIG. 21/(a) of FIG. 22, and ) when the value of the 1-bit flag (e.g., sps_packing_method or asps_vdmc_ext_packing_method) is 1, packing is performed in order from the lower right to the upper left of the displacement vector frame as in (b) of FIG. 21/(b) of FIG. 22. This is one example and the opposite may apply. In the present disclosure, a packing order such as (a) of FIG. 21/(a) of FIG. 22 is referred to as forward order, and a packing order such as (b) of FIG. 21/(b) of FIG. 22 is referred to as reverse order. In the present disclosure, a 1-bit flag (e.g., sps_packing_method or asps_vdmc_ext_packing_method) is referred to as information for identifying whether or not reverse packing is performed or as information for identifying whether or not reverse packing is performed.

<u>When each level of subdivision is configured and encoded in a packing unit</u>

According to embodiments, information for each subdivision level to be configured in packing units (e.g., MCTS) and information for extracting one or more packing units (e.g., MCTS) of a specific subdivision level or LoD level from a decoder of a reception device (e.g., MCTS EIS) may be included and transmitted in a displacement vector bitstream.

In this case, when the packing unit is MCTS, the MCTS and MCTS EIS information may be defined according to H.265 Annex D.

The following is a detailed explanation of when the packing unit is MCTS and when the packing is a subpicture.

<u>When each level of subdivision is configured and encoded in MCTS</u>

The following description based on a packing unit being MCTS, but this is an example and may be applied to other packing units as well.

For example, when there are N subdivision levels (0, ...N-1), to extract and decode the displacement vector of the 0th, ...N-2th specific subdivision level (or LoD level) in the decoder of the reception device, the encoder of the transmission device may signal an MCTS EIS index (e.g., regionIdx) for each subdivision level or LoD level through a high level such as SPS of the VDMC standard and transmit the index to the decoder of the reception device. Here, the encoder of the transmission device may correspond to the Displacement vector coefficient packer 12013.

According to embodiments of the present disclosure, MCTS index (e.g., MCTSIdx) signaling may be omitted and the MCTS EIS index may be implicitly derived according to an encoder/decoder agreement.

According to an embodiment, when there are N subdivision levels, the MCTS EIS index for an i-th subdivision level (e.g., regionIdx[i]) may be derived as a specific value agreed in the encoder/decoder.

In the present disclosure, the MCTS EIS index (regionIdx[i]) for each subdivision level (or LoD level) may be derived based on the reverse packing identification information (asps_vdmc_ext_packing_method) for identifying whether reverse packing is performed in Expression 3 below.

[Expression 3]

$$regionIdx[i] = asps\_vdmc\_ext\_packing\_method \; ? \; N - i - 1 : i$$

<u>When each level of subdivision is configured and encoded in subpicture</u>

The following description based on a packing unit being a subpicture, but this is an example and may be applied to other packing units as well.

For example, when there are N subdivision levels (0, ...N-1), to extract and decode the displacement vector of the 0th, ...N-2th specific subdivision level in the decoder of the reception device, the encoder of the transmission device may signal a subpicture id (e.g., regionIdx) for each subdivision level through a high level such as SPS of the VDMC standard and transmit the index to the decoder of the reception device.

According to embodiments of the present disclosure, signaling of the subpicture id may be omitted and the subpicture id may be implicitly derived according to the encoder/decoder agreement.

According to an embodiment, when there are N subdivision levels, the subpicture id (e.g., regionIdx[i]) for an i-th subdivision level may be derived as a specific value agreed in the encoder/decoder.

In the present disclosure, the MCTS EIS index (regionIdx[i]) for each subdivision level (or LoD level) may be derived based on information (asps_vdmc_ext_packing_method) for identifying whether reverse packing is performed in Expression 4 below.

[Expression 4]

$$regionIdx[i] = asps\_vdmc\_ext\_packing\_method \; ? \; N - i - 1 : i$$

According to embodiments, when a 3D displacement vector (such as xyz or ntb) is encoded through a 420-color format, the 3D displacement vector may be packed into a brightness component as in FIG. 23 or 24. In FIGS. 23 and 24, each element may be x, y, z or n, t, b. For example, when each element is one of x, y, and z, x is a first element, y is a second element, and z is a third element, according to an embodiment. As another example, when each element is one of n, t, and b, n is the first element, t is the second element, and b is the third element, according to an embodiment.

FIG. 23 is a diagram showing an example in which a 3D displacement vector for each subdivision level is configured in one packing unit (e.g., MCTS or subpicture) according to embodiments. That is, in FIG. 23, displacement vector transform coefficients of the first to third elements corresponding to the $R_2$ subdivision level are packed into a first packing unit (e.g., MCTS or subpicture), displacement vector transform coefficients of the first to third elements corresponding to the $R_1$ subdivision level are packed into a second packing unit (e.g., MCTS or subpicture), and displacement vector transform coefficients of the first to third elements corresponding to the $R_0$ subdivision level are packed into a third packing unit (e.g., MCTS or subpicture).

FIG. 24 is a diagram showing an example in which a 3D displacement vector is configured in MCTS (or subpicture) for each element at each subdivision level according to embodiments.

That is, in FIG. 24, displacement vector transform coefficients of the first element corresponding to the $R_2$ subdivision level are packed into a first packing unit (e.g., MCTS or subpicture), displacement vector transform coefficients of the second element corresponding to the $R_2$ subdivision level are packed into a second packing unit (e.g., MCTS or subpicture), and displacement vector transform coefficients of the third element corresponding to the $R_2$ subdivision level are packed into a third packing unit (e.g., MCTS or subpicture). The same packing rule is applied to the $R_1$ and $R_0$ subdivision levels, and thus detailed explanations are omitted.

According to embodiments, the 3D displacement vector for each subdivision level may be configured and encoded as one MCTS (or subpicture) as in FIG. 23 or configured or encoded as an MCTS (or subpicture) for each element for each subdivision level as in FIG. 24.

In this case, when a packing unit is configured in MCTS for each element for each subdivision level as in FIG. 24, to decode a 3D displacement vector of a specific subdivision level (or LoD level) in the decoder of the reception device, according to the present disclosure, MCTS EIS may be configured and the corresponding index may be signaled or may be derived according to an agreement of the encoder/decoder.

In the present disclosure, when the MCTS EIS index is derived according to an agreement of the encoder/decoder, an MCTS EIS index (regionIdx[i]) for each subdivision level (or LoD level) may be derived according to information (asps_vdmc_ext_packing_method) for identifying whether to perform the reverse packing according to Expression 5 below.

[Expression 5]

$$regionIdx[i] = asps\_vdmc\_ext\_packing\_method\ ?\ N - i - 1 : i$$

When the packing unit includes subpictures for each element for each subdivision level as in FIG. 24, to decode a 3D displacement vector of a specific segmentation level (or LoD level) in the decoder of the reception device, according to the present disclosure, a subpicture id for each element of each subdivision level may be signaled or derived through the same method according to the agreement of the encoder/decoder.

In the present disclosure, when the subpicture id is derived according to an agreement of the encoder/decoder, a subpicture id (regionIdx[i]) for each subdivision level (or LoD level) may be derived according to information (asps_vdmc_ext_packing_method) for identifying whether to perform the reverse packing according to Expression 6 below.

[Expression 6]

regionIdx[i][0] = asps_vdmc_ext_packing_method ? N-3i-1: 3i -> Subpicture id of the first element for the i-th subdivision level

regionIdx[i][1] = asps_vdmc_ext_packing_method ? N-3i-2: 3i+1 -> Subpicture id of the second element for the i-th subdivision level

regionIdx[i][2] = asps_vdmc_ext_packing_method ? N-3i-3: 3i+2 -> Subpicture id of the third element for the i-th subdivision level

According to embodiments, the encoder of the transmission device may signal additional syntax to inform the decoder of the reception device of a start position at which packing is performed for each subdivision level.

There may be various methods of signaling the start position in the present disclosure. According to the present disclosure, one of the methods of signaling the start position is to signal information for identifying the start position of packing of displacement vectors for each subdivision level for the entire frame in units of the size of ctu (start_posW_in_ctu, start_posH_in_ctu).

In this case, information for identifying the packing start position for each packing unit may vary depending on whether the packing units have the same width and/or the same height.

For example, when the width of the packing unit for each subdivision level is the same as in (a) and (b) of FIG. 25, the decoder of the reception device may determine the start position by parsing information (e.g., start_posH_in_ctu) indicating the start position of packing for each subdivision level. As another example, when the height of the packing unit for each subdivision level is the same, the decoder of the reception device may determine the start position by parsing information (e.g., start_posW_in_ctu) indicating the start position of the packing for each subdivision level.

(a) and (b) of FIG. 25 are diagrams showing another example of packing displacement vector transform coefficient blocks by subdivision level according to embodiments. That is, (a) and (b) of FIG. 25 show examples indicating the start position (start_posH_in_ctu) of each packing unit when the packing units are configured as in (a) and (b) of FIG. 22.

In other words, when the width (or height) of each subdivision level is the same, as in any one of (a) and (b) of FIG. 22, and (a) and (b) of FIG. 25, the decoder of the reception device may determine the start position of each packing unit by parsing information for identifying the packing start position of each subdivision level (start_posH_in_ctu, when the width is the same (or start_posW_in_ctu, when the height is the same)).

In more detail, when the widths of each subdivision level are the same, as in any one of (a) and (b) of FIG. 22, and (a) and (b) of FIG. 25, start_posH_in_ctu[i] may be a variable indicating how many CTUs the i-th subdivision level is away from the start position of the frame in the height direction, as defined according to the reverse packing identification information (e.g., asps_vdmc_ext_packing_method).

In the present disclosure, in accordance with the agreement of the encoder/decoder, when the start position of a higher subdivision level is always greater than that of a lower subdivision level, i.e., when start_posH_in_ctu[n] <start_posH_in_ctu[m] (n<m), to parse the start position of each subdivision level, the transmitting side may transmit the differential start position from the previous subdivision level.

According to embodiments, when the encoder of the transmission device transmits the differential start position, the decoder of the reception device may calculate the differential start position through the following embodiment.

```
for(i=1; i<lodCount; i++){
  start_posH_in_ctu[i] -= start_posH_in_ctu{i-1]
}
```

According to the present disclosure, the decoder of the reception device may determine the start position by parsing information (e.g., start_posH_in_ctu (or start_posW_in_ctu)) indicating the start position of the reverse packing of each subdivision level.

In this case, start_posH_in_ctu may be parsed as in (a) or (b) of FIG. 25 depending on information (e.g., asps_vdmc_ext_packing_method) for identifying whether to perform reverse packing.

According to embodiments, start_posH_in_ctu[0] may be implicitly derived as 0.

When asps_vdmc_ext_packing_method=1, that is, when encoded in reverse packing order, a relative position packed based on a lower right position of the frame (frame_height-1) may be parsed.

According to another embodiment, when the heights of each subdivision level are the same, the packing start position may be determined in a similar manner as above by transmitting start_posW_in_ctu[i].

As shown in (a) and (b) of FIG. 26, the width and height for each subdivision level may not be the same.

(a) and (b) of FIG. 26 are diagrams showing another example of packing displacement vector transform coefficient blocks by subdivision level according to embodiments. That is, (a) and (b) of FIG. 26 show examples indicating the start position (start_posH_in_ctu, start_posW_in_ctu) of each packing unit when the packing units are configured as in (a) and (b) of FIG. 22.

In other words, when the width and height of each subdivision level are different, as in any one of (a) and (b) of FIG. 21, and (a) and (b) of FIG. 26, the decoder of the reception device may determine the start position of each packing unit by parsing information for identifying the packing start position of each subdivision level (start_posH_in_ctu, start_pos-W_in_ctu, when the height is the same).

In more detail, when the widths of each subdivision level are the same, as in any one of (a) and (b) of FIG. 22, and (a) and (b) of FIG. 25, start_posH_in_ctu[i] may be a variable indicating how many CTUs the i-th subdivision level is away from the start position in the height direction, as defined according to the reverse packing identification information (e.g., asps_vdmc_ext_packing_method). start_posW_in_ctu[i] may be a variable indicating how many CTUs the i-th subdivision level is located in the width direction of the frame from the start position defined by the reverse packing identification information (e.g., asps_vdmc_ext_packing_method).

According to embodiments, start_posW_in_ctu and start_posH_in_ctu may be signaled as in the following embodiments depending on the reverse packing identification information (asps_vdmc_ext_packing_method).

In this case, signaling for start_posW_in_ctu[0] and start_posH_in_ctu[0] may be omitted and implicitly derived as 0 in the encoder/decoder.

When asps_vdmc_ext_packing_method=1, that is, when encoded in reverse packing order, a relative position packed based on a lower right position of the frame (frame_width-1, frame_height-1) may be signaled.

According to embodiments, in accordance with the agreement of the encoder/decoder, when the start position of a higher subdivision level is always greater than that of a lower subdivision level, i.e., when start_posH_in_ctu[n] <start_posH_in_ctu[m] (n<m), to parse the start position of each subdivision level, the transmitting side may transmit the differential start position from the previous subdivision level.

According to embodiments, when the encoder of the transmission device transmits the differential start position, the decoder of the reception device may calculate the differential start position through the following embodiment.

```
for(i=1; i<lodCount; i++){
start_posH_in_ctu[i] -= start_posH_in_ctu{i-1]
}
```

Thus far, image packing of displacement vector transform coefficients when encoding/decoding displacement vectors or displacement vector transform coefficients based on a video codec has been described.

Displacement vector encoding may be performed as in FIG. 27 or 28 when the displacement vector or displacement vector transform coefficient is encoded through an arithmetic encoder.

FIG. 27 is a block diagram showing another example of a displacement vector encoder according to embodiments.

FIG. 28 is a block diagram showing another example of a displacement vector encoder according to embodiments.

The description of the displacement vector transformer 13011 of FIG. 27 and the displacement vector transformer 14011 of FIG. 28 refers to the description of the displacement vector transformer 12011 of FIG. 16 and is omitted here to avoid repeated description.

In FIG. 27, displacement vector transform coefficient prediction is performed before displacement vector transform coefficient quantization, and in FIG. 28, displacement vector transform coefficient quantization is performed before displacement vector transform coefficient prediction.

According to embodiments, when the current mesh is a mesh that performs inter prediction, the displacement vector transform coefficient predictor 13013 of FIG. 27 may use the displacement vector transform coefficient of the reconstructed reference frame as a predictor, and the displacement vector transform coefficient predictor 14014 of FIG. 28 may use the displacement vector transform coefficient quantized in the displacement vector transform coefficient quantizer 14012 as a predictor, such that prediction may be performed through the following embodiment.

```
for(size_t v=0; v<N; v++){
for(size_t d=0; d<dim; d++){
dispCoeff[v][d] = curdispCoeff[v][d] - refdispCoeff[v][d]
}
}
```

According to embodiments, after prediction is performed as in FIG. 27, the quantized displacement vector transform coefficient is encoded in the displacement vector encoder 13015. As shown in FIG. 28, the displacement vector transform coefficient for which prediction is performed after quantization are encoded in the displacement vector encoder 14015.

FIG. 29 shows a reception device according to embodiments. In the present disclosure, the reception device of FIG. 29 may be referred to as a mesh data reception device, a decoder, a decoder of the reception device, a V-Mesh decoder, or a dynamic mesh decoder.

FIG. 29 corresponds to the reception device 110 or mesh video decoder 113 of FIG. 1, the decoder of FIG. 11 or 12, the reception device of FIG. 14 and/or the reception decoding device corresponding thereto. Each component of FIG. 29 corresponds to hardware, software, a processor, and/or a combination thereof. The receiving (decoding) operation of FIG. 29 may follow the reverse process of the corresponding process of the transmitting (encoding) operation of FIG. 15. In FIG. 29, the execution order of each block may be changed, some blocks may be omitted, and some blocks may be newly added.

FIG. 29 may largely include a base mesh decoder, a displacement information decoder, and a texture map decoder. According to embodiments, the base mesh decoder may include a switching unit 15011, a motion vector decoder 15012, a static mesh decoder 15013, a base mesh reconstructor 15014, a mesh subdivider 15015, and a mesh reconstructor 15016. According to embodiments, the displacement information decoder may include a displacement vector decoder 15017 and a displacement vector coordinate system inverse transformer 15020.

According to embodiments, a bitstream of mesh data received by a receiver (not shown) may be file/segment decapsulated and then demultiplexed into a base mesh bitstream, a displacement vector bitstream, and a texture map bitstream by a demultiplexer (not shown). When inter encoding is applied to the current mesh, the base mesh bitstream may be a motion vector bitstream.

According to embodiments, the base mesh bitstream is provided to the motion vector decoder 15012 through a switching unit 15011 or the static mesh decoder 15013.

For example, when inter encoding is applied to the current mesh, the base mesh bitstream, i.e., the motion vector bitstream, is received, demultiplexed, and then output to the motion vector decoder 15012 through the switching unit 15011. As another example, when intra encoding is applied to the current mesh, the base mesh bitstream is received, demultiplexed, and then output to the static mesh decoder 15013 through the switching unit 15011. Here, the motion vector decoder 15012 may be referred to as a motion decoder.

According to embodiments, the motion vector decoder 15012 may perform decoding on a motion vector bitstream on a vertex-by-vertex basis or a subgroup basis.

According to embodiments, the motion vector decoder 15012 may reconstruct a final motion vector by adding a differential motion vector (i.e., a residual motion vector) decoded from the bitstream by using a previously decoded motion vector as a predictor. That is, the motion vector decoder 15012 may decode a differential motion vector (or residual motion vector) in units of vertices or subgroups (or subblocks) through the motion vector bitstream, and perform prediction based on connection information by using a previously decoded motion vector as a predictor to decode the motion vector by adding the prediction result to the residual motion vector.

According to embodiments, the static mesh decoder 15013 may decode the base mesh bitstream to reconstruct connection information, vertex geometry information, texture coordinates (i.e., attribute geometry information), normal information, and the like of the base mesh.

According to embodiments, the base mesh reconstructor 15014 may reconstruct the current base mesh based on the decoded motion vector or the decoded base mesh. For example, when inter encoding is applied to the current mesh (i.e., the type of the current base mesh is inter type), the base mesh reconstructor 15014 may generate (i.e., reconstruct) a reconstructed base mesh (i.e., the current base mesh) by adding the decoded (or reconstructed) motion vector to the reference base mesh and then performing inverse quantization. As another example, when intra encoding is applied to the current mesh (i.e., the type of the current base mesh is intra type), the base mesh reconstructor 15014 may perform inverse quantization on the decoded (or reconstructed) base mesh through a static mesh decoder 15012 to generate a reconstructed base mesh (i.e., the current base mesh). In some embodiments, the dequantization process may be omitted.

According to embodiments, when the type of the current base mesh is a skip type among intra/inter/skip, reconstruction of the reference base mesh to the current base mesh may be performed.

According to embodiments, the mesh subdivider 15015 may perform subdivision on the base mesh to generate additional vertices. According to the present disclosure, the geometry information connection information, the texture coordinates connection information, and the texture coordinates may be implicitly derived and generated according to a subdivision method.

According to embodiments, the mesh subdivider 15015 may perform subdivision through methods such as mid-edge, Loop, and Catmul&Clark.

According to embodiments, mesh subdivision in the mesh subdivider 15015 may be performed n times by user parameters or an agreement of the encoder/decoder. According to embodiments, vertices of the base mesh may be defined as vertices of level 0 ($R_0$), vertices newly generated by performing subdivision #1 may be defined as vertices of level 1 ($R_1$), ... vertices newly generated by performing subdivision #n may be defined as vertices of level n ($R_n$). Level 0 may be called the 0th level ($R_0$), level 1 may be called the first level ($R_1$), ... level n may be called the nth level ($R_n$).

According to embodiments, LoD0, LoD1, ... LoDn may be defined according to Expression 1 described above.

That is, the base mesh includes vertices for LoD0. The first subdivision mesh generated by subdividing the base mesh once includes vertices for LoD1. That is, LoD1 includes the vertices of the base mesh (i.e., $R_0$ vertices) and the vertices of newly generated level 1 by subdividing the base mesh (i.e., $R_1$ vertices). The second subdivision mesh generated by further subdividing the first subdivision mesh includes vertices for LoD2. That is, LoD2 includes vertices of the base mesh (i.e., $R_0$ vertices), vertices of a newly generated level 1 by subdividing the base mesh (i.e., $R_1$ vertices), and vertices of a newly generated level 2 by subdividing the first subdivision mesh (i.e., $R_2$ vertices).

According to embodiments, the mesh subdivision or the number of mesh subdivisions in the mesh subdivider 15015 may be determined based on the quality of the reconstructed mesh (or target LoD).

According to embodiments, the displacement vector decoder 15017 may perform decoding based on a video codec as a video bitstream, zero run-length decoding, or arithmetic decoding on the demultiplexed displacement vector bitstream. According to the present disclosure, the displacement vector decoder may be used interchangeably with the displacement vector transform decoder.

According to embodiments, the displacement vector decoder 15017 may reconstruct the displacement vector by decoding the displacement vector in a reverse process of the displacement vector encoding method of the transmitting side.

According to embodiments, the displacement vector coordinate system inverse transformer 15020 may perform a process of inversely transforming the displacement vector decoded by the displacement vector decoder 15017 into a Cartesian (or canonical) coordinate system (x, y, z) when the displacement vector is a value of a local coordinate system (n, t, bt). The output of the displacement vector coordinate system inverse transformer 15020 is provided to the mesh reconstructor 15016.

That is, in the encoder of the transmission device, the vertex displacement vector calculated in the (x,y,z) space may be transformed to a (normal, tangential, bi-tangential) coordinate system (or local coordinate system) based on the normal vector of each vertex. In this case, the normal vector may be calculated for each subdivided vertex based on the geometry information and connection information of the surrounding vertices.

According to embodiments, the mesh reconstructor 15016 reconstructs the mesh based on the mesh reconstructed subdivided by the mesh subdivider 15015 and the reconstructed displacement vector output from the displacement vector coordinate system inverse transformer 15020. That is, the mesh reconstructor 15016 calculates the vertex position information of the reconstructed mesh by adding a reconstructed displacement vector to the vertices generated through the subdivision process in the mesh subdivider 15015.

According to embodiments, the received and demultiplexed texture map bitstream is input to a texture map decoder 15021. According to embodiments, the texture map decoder 15021 may decode a texture map through a 2D scalable decoder. That is, the texture map decoder 15021 may reconstruct the texture map by applying 2D scalable decoding to the texture map.

As such, when the base mesh bitstream, displacement vector bitstream, and texture map bitstream encoded by the dynamic mesh encoder of the transmission device are transmitted, the decoder of the reception device goes through the process of decoding each bitstream to reconstruct the mesh. First, the base mesh is decoded by a motion vector or static mesh decoder depending on an inter or intra frame, and then the geometry information is reconstructed along with the decoded displacement vector information through subdivision.

FIG. 30 is a detailed block diagram showing an example of the motion vector decoder 15012 according to embodiments. The motion vector decoder 15012 of FIG. 30 may include a motion component decoder 16011, a motion vector predictor 16012, and a motion vector buffer 16013.

According to embodiments, the motion vector decoder 15012 may perform decoding on a motion vector bitstream on a vertex-by-vertex basis or a subgroup basis.

According to embodiments, the motion component decoder 16011 decodes a differential motion vector (or residual motion vector) (i.e., a motion component) in units of vertices or subgroups (or subblocks) through a motion vector bitstream. The motion vector predictor 16012 may perform prediction based on connection information by using a previously decoded motion vector stored in the motion vector buffer 16013 as a predictor, and then decode the motion vector by adding the prediction result to the residual motion vector decoded by the motion component decoder 16011.

FIG. 31 is a detailed block diagram showing an example of the displacement vector coordinate system inverse transformer 15020 according to embodiments.

FIG. 32 is a detailed block diagram showing another example of the displacement vector coordinate system inverse transformer 15020 according to embodiments.

In more detail, the displacement vector coordinate system inverse transformer 15020 may parse the coordinate system transform flag (applyLocalCoord or asps_vmc_ext_displacement_coordinate_system) included in the signaling information in units of sequences, GoFs, frames, or sub-mesh, and when the value is 1, the displacement vector coordinate system inverse transformer 15020 may perform inverse transformation of the inverse quantized (or inversely transformed) reconstructed displacement vector from the local coordinate system (n, t, b) to the canonical coordinate system (x, y, z).

A normal vector per vertex may be calculated based on the reconstructed vertex position information of the reconstructed base mesh, and a normal value of a newly generated vertex may be assigned by interpolating the vertex normal vector of the calculated reconstructed base mesh for the vertex additionally generated through the subdivision process (see FIG. 31).

In this case, in the case of interpolation, interpolation may be performed by averaging or distance-based weighting the normal information of the base mesh used for subdivision. Alternatively, the normal information of the base mesh may be used without change for the subdivided vertices on the same plane.

According to embodiments, after performing subdivision on the reconstructed base mesh, normal vectors may be calculated for vertices generated through the mesh subdivider 15015 and vertices of the base mesh (see FIG. 32).

Through the calculated normal vector per vertex, the tangential and bi-tangential vectors orthogonal to the normal vector may be calculated and the displacement vector coordinate system inverse transformation may be performed. $disp_n(0)$, $disp_n(1)$, and $disp_n(2)$ in Expression 7 below refer to the results of normal, tangential, and bitangential components obtained by performing inverse transformation and inverse quantization.

[Expression 7]

$$\overrightarrow{disp_{xyz}} = disp_n[0] * \vec{n} + disp_n[1] * \vec{t} + disp_n[2] * \vec{b}$$

According to embodiments, coordinate system inverse transformation may always be performed without flag transmission.

FIG. 33 is a block diagram showing an example of a displacement vector decoder according to embodiments. In FIG. 33, the displacement vector decoder 15017 may include a video high level information rewriter 19011, a video decoder 19012, a displacement vector transform coefficient reverse packer 19013, a displacement vector transform coefficient inverse quantizer 19014, and a displacement vector inverse transformer 19015. Each component of FIG. 33 corresponds to hardware, software, a processor, and/or a combination thereof. In FIG. 33, the execution order of each block may be changed, some blocks may be omitted, and some blocks may be newly added.

According to an embodiment, when a displacement vector (or displacement vector transform coefficient) is encoded and received through a 2D video encoder, the displacement vector decoder 15017 may reconstruct the displacement vector through the displacement vector decoding process of FIG. 33.

According to embodiments, when displacement vectors (or displacement vector transform coefficients) are packed into a 2D image in an encoder of a transmission device and then encoded using a 2D video codec (i.e., a video compression codec) to support partial decoding of displacement vectors up to a specific LoD level in the displacement vector decoder 15017 of a reception device, displacement vectors (or displacement vector transform coefficients) for each subdivision level may be configured in packing units as in FIGS. 21 to 28, and encoding may be performed.

In the present disclosure, a packing unit may be an MCTS or a subpicture. In the present disclosure, a packing unit may include one or more CTUs or one or more bx*by blocks. In particular, according to an embodiment of the present disclosure, the packing unit corresponding to each subdivision level is a rectangular shape (i.e., rectangular area). In this case, the packing units may all have the same width, as in any one of (a) and (b) of FIG. 22 and (a) and (b) of FIG. 25, or some of the packing units may have different widths, as in any one of (a) and (b) of FIG. 21 and (a) and (b) of FIG. 26. The packing units may all have the same height or some packing units may have different heights.

According to embodiments, when a displacement vector bitstream is encoded through MCTS in a displacement vector encoder of a transmission device, an EIS SEI message parsed through the displacement vector bitstream according to a target LoD level to be reconstructed in a displacement vector decoder of a reception device may be selected to perform the video high level information rewriter 19011.

According to embodiments, the video high-level rewriting process of the video high level information rewriter 19011 may be performed in the video decoder 19012.

According to embodiments the video high level information rewriter 19011 may perform rewriting according to the MCTS from which the following information (or signaling information) of the displacement vector video is extracted based on the parsed EIS SEI message.

That is, the slice addresses of VPS, SPS, PPS, and SH may be rewritten with information parsed by EIS SEI.

The corresponding EIS SEI is defined according to SERIES H: AUDIOVISUAL AND MULTIMEDIA SYSTEMS Infrastructure of audiovisual services - Coding of moving video D.2.43 Motion-constrained tile sets extraction information sets SEI message syntax.

According to embodiments, when a displacement vector bitstream is encoded through a subpicture, SPS, PPS, and the like may be rewritten through the video high level information rewriter 19011.

The corresponding process is defined according to SERIES H: AUDIOVISUAL AND MULTIMEDIA SYSTEMS Infrastructure of audiovisual services - Coding of moving video, Versatile video coding, clause C.7.

According to embodiments, the video decoder 19012 receives as input a displacement vector bitstream output from the video high level information rewriter 19011 and performs decoding on a displacement vector coefficient image/video through a 2D video codec. The reconstructed displacement vector coefficient video reconstructed through the video decoder 19012 may perform displacement vector coefficient assignment corresponding to each vertex of the reconstructed mesh by performing displacement vector coefficient reverse packing (or unpacking) for each frame in the displacement vector coefficient reverse packer 19013.

According to embodiments, the displacement vector coefficient reverse packer 19013 parses information (e.g., asps_vdmc_ext_lod_packing_method) indicating a packing method of displacement vectors for each subdivision level, and when the packing method indicates that the packing is in a rectangular area, it indicates a case in which the transmitting side has encoded the information such that partial decoding is possible through a packing unit (e.g., MCTS or subpicture).

The following describes a process of reconstructing a displacement vector (or a displacement vector transform coefficient) by performing displacement vector decoding (e.g., one or more of video high level information rewriting, displacement vector transform coefficient reverse packing, displacement vector transform coefficient inverse quantization, and displacement vector inverse transform) on a displacement vector bitstream encoded through MCTS when the packing unit is MCTS.

FIG. 34 is a diagram showing an example of a displacement vector frame in which displacement data is packed by subdivision level according to embodiments.

Embodiment 1

The following describes a first embodiment in which a displacement vector is reconstructed from a displacement vector bitstream encoded via MCTS. That is, when a displacement vector frame is configured as in FIG. 34, the frame for each subdivision level may be reconstructed through MCTS decoding for each subdivision level.

In this case, to decode the displacement vector of $LoD_k$, MCTS of the subdivision level 0, ... k may be decoded.

For example, to decode the displacement vector corresponding to $LoD_1$, MCTS corresponding to $R_0$ and $R_1$ may be decoded as shown in FIG. 35. FIG. 35 is a diagram showing an example of an MCTS configuration for each subdivision level according to embodiments.

When a target level is the last LoD level, the entire displacement vector frame may be decoded.

When there are N subdivision levels (0, ...N-1), the displacement vector up to a specific LoD level may be partially decoded by parsing information (e.g., MCTS EIS index) indicating which MCTS the displacement vector of the 0th, ...N-2th subdivision level is packed and encoded with and decoding the displacement vector frame of each specific subdivision level.

According to embodiments, the displacement vector decoder may omit parsing of the MCTS EIS index (regionIdx) and perform decoding with the MCTS EIS index defined according to the agreement of the encoder/decoder.

According to an embodiment, when there are N subdivision levels, the MCTS EIS index for an i-th subdivision level may be derived as a specific value agreed in the decoder.

According to embodiments, the MCTS EIS index for the i-th subdivision level may be derived as i.

As shown in Expression 8 below, the MCTS EIS index (regionIdx[i]) for each subdivision level may be derived based on the identification information (e.g., asps_vdmc_ext_packing_method) for whether to perform reverse packing.

[Expression 8]

$$regionIdx[i] = asps\_vdmc\_ext\_packing\_method\ ?\ N - i - 1 : i$$

Embodiment 2

The following describes a second embodiment in which a displacement vector is reconstructed from a displacement vector bitstream encoded via MCTS.

That is, when each LoD level is encoded in MCTS, a decoder may decode one MCTS for decoding a displacement vector of a specific LoD, and ultimately decode (or reconstruct) one target LoD displacement vector frame.

When there are N LoD levels (0, ...N-1), the displacement vector decoder may parse the MCTS EIS index (regionIdx) corresponding to the 0th, ...N-2nd LoD level and partially decode the displacement vector up to a specific LoD level as in (a) and (b) of FIG. 36. (a) and (b) of FIG. 36 are diagrams showing examples of displacement vector MCTS decoding according to a target LoD. (a) of FIG. 36 shows an example of displacement vector MCTS decoding when the target LoD is 0, and (b) of FIG. 36 shows an example of displacement vector MCTS decoding when the target LoD is 1.

According to embodiments, the displacement vector decoder may omit parsing of the MCTS EIS index and perform decoding with the MCTS EIS index defined according to the agreement of the encoder/decoder.

According to an embodiment, when there are N LoD levels, the MCTS EIS index for an i-th LoD level may be derived as a specific value agreed in the decoder.

According to embodiments, the MCTS EIS index for the i-th LoD level may be derived as i.

As shown in Expression 9 below, the MCTS EIS index (regionIdx[i]) for each LoD level may be derived based on the identification information (asps_vdmc_ext_packing_method) for whether to perform reverse packing.

[Expression 9]

$$regionIdx[i] = asps\_vdmc\_ext\_packing\_method\ ?\ N - i - 1 : i$$

The following describes a process of reconstructing a displacement vector (or a displacement vector transform coefficient) by performing displacement vector decoding (e.g., one or more of video high level information rewriting, displacement vector transform coefficient reverse packing, displacement vector transform coefficient inverse quantization, and displacement vector inverse transform) on a displacement vector bitstream encoded through a subpicture when the packing unit is the subpicture.

Embodiment 1

The following describes a first embodiment in which a displacement vector is reconstructed from a displacement vector bitstream encoded via a subpicture.

That is, the displacement vector decoder decodes a subpicture of each subdivision level into each subdivision level frame.

In this case, to decode the displacement vector of $LoD_k$, a subpicture of the subdivision level 0, ... k may be decoded.

For example, to decode the displacement vector corresponding to $LoD_1$, a subpicture corresponding to $R_0$ and $R_1$ may be decoded as shown in FIG. 37. FIG. 37 is a diagram showing an example of a subpicture configuration for each subdivision level according to embodiments.

When a target level is the last LoD level, the entire displacement vector frame may be decoded.

When there are N subdivision levels (0, ...N-1), the displacement vector decoder may partially decode the displacement vector up to a specific LoD level by parsing the subpicture ID (regionIdx) corresponding to the 0th, ...N-2nd subdivision level and decoding each subdivision level frame corresponding to the subpicture ID.

In this case, to decode the k-th subdivision level displacement vector provided as input to the video high level information rewriter 19011, a single frame bitstream may be output according to SERIES H: AUDIOVISUAL AND MULTIMEDIA SYSTEMS Infrastructure of audiovisual services - Coding of moving video, Versatile video coding, clause C.7 with the subpicture ID of regionIdx[k] as input.

According to embodiments, the displacement vector decoder may omit parsing of the subpicture ID and perform decoding with the subpicture ID defined according to the agreement of the encoder/decoder.

According to an embodiment, when there are N subdivision levels, the subpicture ID for an i-th subdivision level may be derived as a specific value agreed in the decoder.

According to embodiments, the subpicture ID for the i-th subdivision level may be derived as i.

As shown in Expression 10 below, the subpicture ID (regionIdx[i]) for each subdivision level may be derived based on the identification information (e.g., asps_vdmc_ext_packing_method) for whether to perform reverse packing.

[Expression 10]

$$regionIdx[i] = asps\_vdmc\_ext\_packing\_method \: ? \: N - i - 1 : i$$

Embodiment 2

The following describes a second embodiment in which a displacement vector is reconstructed from a displacement vector bitstream encoded via a subpicture. That is, the displacement vector decoder may decode a displacement vector subpicture of a subdivision level corresponding to the target LoD into one frame, as in (a) and (b) of FIG. 38. (a) and (b) of FIG. 38 are diagrams showing examples of displacement vector subpicture decoding according to a target LoD. (a) of FIG. 38 shows an example of displacement vector MCTS decoding when the target LoD is 0, and (b) of FIG. 38 shows an example of displacement vector subpicture decoding when the target LoD is 1.

In this case, to decode the displacement vector of $LoD_k$, a subpicture of the subdivision level 0, ... k may be decoded.

For example, to decode the displacement vector corresponding to $LoD_1$, a subpicture corresponding to $R_0$ and $R_1$ may be decoded.

When a target level is the last LoD level, the entire displacement vector frame may be decoded.

For example, when there are N subdivision levels (0, ...N-1), the displacement vector decoder may partially decode the displacement vector up to a specific LoD level by parsing the subpicture ID (regionIdx) corresponding to the 0th, ...N-2nd subdivision level.

In this case, to decode the k-th LoD level displacement vector provided as input to the video high level information rewriter 19011, a single frame bitstream may be output according to SERIES H: AUDIOVISUAL AND MULTIMEDIA SYSTEMS Infrastructure of audiovisual services - Coding of moving video, Versatile video coding, clause C.7 with the subpicture ID for the k subdivision levels as input.

According to embodiments, the displacement vector decoder may omit parsing of the subpicture ID and perform decoding with the subpicture ID defined according to the agreement of the encoder/decoder.

According to an embodiment, when there are N subdivision levels, the subpicture ID for an i-th subdivision level may be derived as a specific value agreed in the decoder.

According to embodiments, the subpicture ID for the i-th LoD level may be derived as i.

As shown in Expression 11 below, the subpicture ID (regionIdx[i]) for each subdivision level may be derived based on the identification information (e.g., asps_vdmc_ext_packing_method) for whether to perform reverse packing.

[Expression 11]

$$regionIdx[i] \; = \; asps\_vdmc\_ext\_packing\_method \; ? \; N - i - 1 : i$$

According to embodiments, when the displacement vector encoder encodes a 3D displacement vector (such as xyz or ntb) through a 420-color format, the 3D displacement vector may be packed into a brightness component as in FIG. 23 or 24.

In this case, as shown in FIG. 23, the 3D displacement vector for each subdivision level may be configured and encoded in one packing unit (e.g., MCTS or subpicture), or as shown in FIG. 24, each element for each subdivision level may be configured and encoded in a packing unit (e.g., MCTS or subpicture).

According to embodiments, when a 3D displacement vector for each subdivision level or a displacement vector for each element is configured via MCTS, the operation of the video high level information rewriter 19011 may be performed by parsing an MCTS EIS index for decoding a displacement vector of a specific LoD level as input.

According to embodiments, when a 3D displacement vector for each subdivision level is configured and encoded in one subpicture through a subpicture, for example, to decode a displacement vector of a specific LoD level, the video high level information rewriter 19011 may perform parsing of the subpicture IDs of 0, ... k to decode the displacement vector of the kth LoD level by parsing the subpicture IDs for each subdivision level, thereby decoding a displacement vector frame.

As shown in FIG. 23, when the 3D displacement vector for each subdivision level is configured in one packing unit (e.g., MCTS or subpicture), the displacement vector decoder may parse the MCTS EIS index (or subpicture id) to decode the 3D displacement vector of a specific subdivision level (or LoD level) or derive the MCTS EIS index (or subpicture id) by the agreement of the encoder/decoder.

For example, when the MCTS EIS index (or subpicture ID) is derived by the agreement of the encoder/decoder, the MCTS EIS index (or subpicture ID) (regionIdx[i]) may be derived together with the information identifying whether the reverse packing is performed (e.g., asps_vdmc_ext_packing_method) according to Expression 12 below.

[Expression 12]

$$regionIdx[i] \; = \; asps\_vdmc\_ext\_packing\_method \; ? \; N - i - 1 : i$$

According to embodiments, the MCTS EIS index (or subpicture ID) of the i-th subdivision level (or LoD level) may be derived as i.

As shown in FIG. 24, when each element is configured in MCTS for each subdivision level, the displacement vector decoder may parse the MCTS EIS index for decoding the 3D displacement vector of a specific subdivision level (or LoD level) or derive the MCTS EIS index according to the agreement of the encoder/decoder.

When the MCTS EIS index is derived according to an agreement of the encoder/decoder, an MCTS EIS index (regionIdx[i]) for each subdivision level (or LoD level) may be derived according to information (e.g., asps_vdmc_ext_packing_method) for identifying whether to perform the reverse packing according to Expression 13 below.

[Expression 13]

$$regionIdx[i] \; = \; asps\_vdmc\_ext\_packing\_method \; ? \; N - i - 1 : i$$

According to embodiments, the MCTS EIS index (or subpicture ID) of the i-th subdivision level (or LoD level) may be derived as i.

As shown in FIG. 24, when each element is configured in a subpicture for each subdivision level, the displacement vector decoder may parse the subpicture ID for each element of each subdivision level or derive the subpicture ID through the same method according to the agreement of the encoder/decoder.

When the subpicture id is derived according to an agreement of the encoder/decoder, a subpicture ID (regionIdx [i]) for each subdivision level may be derived according to information (e.g., asps_vdmc_ext_packing_method) for identifying whether to perform the reverse packing according to Expression 14 below.

[Expression 14]

regionIdx[i][0] = asps_vdmc_ext_packing_method ? N-3i-1: 3i -> Subpicture id of the first element for the i-th subdivision level

regionIdx[i][1] = asps_vdmc_ext_packing_method ? N-3i-2: 3i+1 -> Subpicture id of the second element for the i-th subdivision level

regionIdx[i][2] = asps_vdmc_ext_packing_method ? N-3i-3: 3i+2 -> Subpicture id of the third element for the i-th subdivision level

According to embodiments, a subpicture ID (regionIdx[i]) for each subdivision level may be derived according to Expression 15 below.

[Expression 15]

regionIdx[i][0]=3i -> Subpicture id of the first element for the i-th subdivision level

regionIdx[i][1]=3i+1 -> Subpicture id of the second element for the i-th subdivision level

regionIdx[i][2]=3i+2 -> Subpicture id of the third element for the i-th subdivision level

According to embodiments, the displacement vector decoder may parse additional syntax to determine the start position at which the reverse packing is to be performed for each subdivision level.

According to embodiments, the method of signaling the reverse packing start position in the present disclosure may vary. According to an embodiment of the present disclosure, the start position of the reverse packing of the displacement vector for each subdivision level for the entire frame may be signaled in units of the size of ctu (start_posW_in_ctu, start_posH_in_ctu).

Embodiment 1

In the first embodiment, as shown in FIG. 25, when the widths of the packing units in which displacement vectors for each subdivision level are packed are the same, the displacement vector decoder may determine the start position by parsing the start position information (start_posH_in_ctu) to indicate the start position of the reverse packing for each subdivision level. When the heights of the packing units in which the displacement vectors for each subdivision level are packed are the same, the displacement vector decoder may determine the start position of each packing unit by parsing the start position information (start_posW_in_ctu) for identifying the start position of the reverse packing for each subdivision level.

According to the present disclosure, start_posH_in_ctu[i] may be a variable indicating how many CTUs the i-th subdivision level is located in the height direction of the frame from the start position defined by the reverse packing identification information (e.g., asps_vdmc_ext_packing_method).

According to embodiments, in accordance with the agreement of the encoder/decoder, when the start position of a higher subdivision level is always greater than that of a lower subdivision level, i.e., when start_posH_in_ctu[n] <start_posH_in_ctu[m] (n<m), to parse the start position of each subdivision level, the transmitting side may transmit the differential start position from the previous subdivision level.

The displacement vector decoder of the receiving device may calculate the reverse packing start height information for each subdivision level based on the parsed information as in the following embodiment when receiving the differential start position.

```
for(i=1; i<lodCount; i++){
start_posH_in_ctu[i] += start_posH_in_ctu{i-1]
}
```

That is, the displacement vector decoder of the reception device may determine the start position by parsing information (start_posH_in_ctu (or start_posW_in_ctu)) identifying the start position of the reverse packing of each subdivision level.

According to the present disclosure, start_posH_in_ctu may be parsed as in the following embodiment according to the reverse packing identification information (asps_vdmc_ext_packing_method) (see FIG. 25).

According to embodiments, start_posH_in_ctu[0] may be implicitly derived as 0.

According to embodiments, when asps_vdmc_ext_packing_method=1, that is, when encoded in reverse packing order, a relative position packed based on a lower right position of the frame (frame_height-1) may be parsed.

According to embodiment, when the heights of each subdivision level are the same, the reverse packing start position may be determined in a similar manner as above by parsing start_posW_in_ctu[i].

Embodiment 2

In the second embodiment, as shown in FIG. 26, when the widths and heights of the packing units in which displacement vectors for each subdivision level are packed are different, the displacement vector decoder may determine the start position of reverse packing by parsing the start position information (start_posH_in_ctu, start_posH_in_ctu) to indicate the start position of the reverse packing for each subdivision level.

According to the present disclosure, start_posH_in_ctu[i] may be a variable indicating how many CTUs the i-th subdivision level is located in the height direction of the frame from the start position defined by the reverse packing identification information (e.g., asps_vdmc_ext_packing_method).

According to the present disclosure, start_posW_in_ctu[i] may be a variable indicating how many CTUs the i-th subdivision level is located in the width direction of the frame from the start position defined by the reverse packing identification information (e.g., asps_vdmc_ext_packing_method).

According to embodiments, start_posW_in_ctu and start_posH_in_ctu may be parsed as in the following embodiments depending on the reverse packing identification information (e.g., asps_vdmc_ext_packing_method).

In this case, start_posW_in_ctu[0]=0, start_posH_in_ctu[0]=0 may be implicitly derived.

When asps_vdmc_ext_packing_method=1, that is, when encoded in reverse packing order, a relative position packed based on a lower right position of the frame (frame_width-1, frame_height-1) may be parsed.

In accordance with the agreement of the encoder/decoder, when the start position of a higher subdivision level is always greater than that of a lower subdivision level, i.e., when start_posH_in_ctu[n]<start_posH_in_ctu[m] (n<m), to parse the start position of each subdivision level, the transmitting side may transmit the differential start position from the previous subdivision level.

The displacement vector decoder may calculate the reverse packing start height information for each subdivision level based on the parsed information as in the following embodiment when receiving the differential start position.

```
for(i=1; i<lodCount; i++){
start_posH_in_ctu[i] += start_posH_in_ctu{i-1]
}
```

The displacement vector transform coefficient reverse packer 19013 may determine the inverse packing start position for each subdivision level as described above.

The displacement vector transform coefficient reverse packer 19013 may perform reverse packing for each frame on the reconstructed displacement vector transform coefficient video reconstructed through the video decoder 19012 to assign displacement vector transform coefficient corresponding to each vertex of the reconstructed mesh.

According to embodiments, the displacement vector transform coefficient reverse packer 19013 may perform reverse packing according to a scanning order defined by an agreement of an encoder/decoder (i.e., a z-scan order, a zig-zag scanning order, a 2D Moulton code order, or the like) from a reconstructed displacement vector transform coefficient image corresponding to the current mesh frame or a scanning order parsed in an high level unit (sequence, frame, or the like) (i.e., a z-scan order, a zig-zag scanning order, a 2D Moulton code order, or the like). In this case, the transform coefficient block packed in a specific scanning order in units of bx×by and the displacement vector transform coefficient packed in a specific order within one block may derive the displacement vector transform coefficient of the kth vertex according to the agreement of the encoder/decoder or the sizes bx, by and L, M of the parsed block and the scanning order.

FIG. 39 is a diagram showing examples of a method of packing displacement vector coefficients within a displacement vector coefficient block according to embodiments. (a) of FIG. 39 shows an example of packing 16 displacement vector coefficients (C1-C16) in the y-x Moulton code order within one displacement vector coefficient block when bx=by=4. (b) of FIG. 39 shows an example of packing 16 displacement vector coefficients (C1-C16) in the y-x Moulton code order within one displacement vector coefficient block when bx=by=4.

The following is a description of the operation of the displacement vector transform coefficient reverse packer 19013 when the displacement vector frame for each LoD level is decoded (displacement vector transform coefficient reverse packing unit: when the displacement vector frame for each LoD level is decoded).

According to embodiments, when each subdivision level is packed with the same width, reverse packing is performed as follows according to the start position (start_posH_in_ctu) of the displacement vector for each subdivision level (embodiment with bx=by=blockSize). In this case, the CTU size of the video encoder used when encoding the displacement vector may be parsed and determined. When blockSize and ctuSize are the same, parsing of ctuSize may be omitted and ctuSize=blockSize may be derived.

The following is a description of the operation of the displacement vector transform coefficient reverse packer 19013 when the displacement vector frame for each subdivision level is decoded (displacement vector transform coefficient reverse packing unit: when the displacement vector frame for each subdivision level is decoded).

According to the embodiments, when each subdivision level is decoded into each frame, the reverse packing start position may be the upper left or lower right position depending on whether reverse packing is performed. In this case, the embodiments in which reverse packing is performed are as follows. In this case, the CTU size of the video encoder used when encoding the displacement vector may be parsed and determined. When blockSize and ctuSize are the same, parsing of ctuSize may be omitted and ctuSize=blockSize may be derived.

The following is a description of a case in which a displacement vector is decoded through a 2D video decoder.

That is, the displacement vector transform coefficient assigned to each vertex through the displacement vector transform coefficient reverse packer 19013 is inversely quantized through the displacement vector transform coefficient inverse quantizer 19014.

According to embodiments, the quantization parameters (QP) for each axis may be transmitted in units of sequences or frames, and when only the displacement vector of the normal component is encoded/decoded (onlyNorm-Flag=1), a quantization rate may be determined by parsing only the quantization parameters for the normal component.

According to embodiments, the transform coefficient may be quantized through different quantization parameters for each axis on the transmitting side, and the displacement vector transform coefficient inverse quantizer 19014 may determine the quantization rate for each LoD level by deriving a quantization parameter or a scaling parameter according to the agreement of the encoder/decoder.

According to embodiments, the displacement vector inverse transformer 19015 performs an inverse transformation of the transformation performed in the encoder of the transmission device on the inverse quantized displacement vector transform coefficients to calculate reconstructed displacement vectors. According to embodiments, lifting inverse transformation, wavelet inverse transformation, and the like may be performed. When lifting inverse transformation is performed in the displacement vector inverse transformer 19015, a process of updating the displacement vector of the vertex used for prediction in the encoder may be performed through the parsed residual signal.

In more detail, the displacement vector inverse transformer 19015 may performs inverse transformation of displacement vector transform coefficients or inverse quantized displacement vector transform coefficients assigned to each vertex through the displacement vector transform coefficient reverse packer 19013. Depending on the embodiment, the transformation may be applied as a linear lifting transformation, a butterfly lifting transformation, a wavelet transformation, or the like. For example, when a value of asps_vmc_ext_transform_method signaled via signaling information (ASPS) is 1, it may indicate that Linear_Lifting is used as the transformation method.

When lifting inverse transformation is performed, if a vertex Rk of a kth subdivision level is predicted, prediction of a displacement vector of the kth subdivision level may be performed through the subdivision vertex displacement vector of Rt (t<k or t<=k) as a predictor.

According to embodiments, when performing prediction of a displacement vector, an average or distance-based weighted average prediction may be performed on n points close to the current vertex based on connection information among vertices with a lower level of detail than the current vertex.

According to embodiments, prediction may be performed based on the displacement vectors of n vertices used to generate the current vertex in the mesh subdivision operation.

When lifting inverse transformation is performed, a process of updating the displacement vector of the vertex used for prediction in the encoder may be performed through the parsed residual signal, as described below.

```
for(size_t v=0; v<N; v++){
  for(size_t d=0; d<dim; d++){
  curdispCoeff[v][d] = dispCoeff[v][d] + refdispCoeff[v][d]
  }
}
```

When the displacement vector or displacement vector transformation coefficient is encoded through an arithmetic encoder on the transmitting side, displacement vector decoding may be performed as in FIG. 40 or 41.

FIG. 40 is a block diagram showing another example of a displacement vector decoder according to embodiments.

FIG. 41 is a block diagram showing another example of a displacement vector decoder according to embodiments.

In FIG. 40, displacement vector transform coefficient inverse quantization is performed before displacement vector transform coefficient prediction in FIG. 28, and in FIG. 41, displacement vector transform coefficient prediction is performed before displacement vector transform coefficient inverse quantization.

That is, when the current mesh frame type is an inter prediction frame and has a 1-to-1 mapping relationship with the reference mesh, prediction of the current displacement vector transform coefficient as in FIG. 40 or the quantized transform coefficient as in FIG. 41 may be performed based on the reconstructed displacement vector transform coefficient or the quantized transform coefficient of the reference mesh.

According to the reference structure of the mesh, the reconstructed displacement vector transform coefficient level of the reference mesh may be stored and used for prediction.

When the current mesh frame type is an inter prediction frame or does not have a 1-to-1 mapping relationship with the reference mesh, the displacement vector transform coefficient predictor of FIGS. 40 and 41 may be omitted.

According to embodiments, the displacement vector transform coefficient (curdispLevel) may be obtained by adding the reconstructed residual displacement vector transform coefficient (dispLevel) to the predicted displacement vector transform coefficient (refDispLevel).

In FIG. 40, the displacement vector transform coefficient (refDispLevel) predicted by a displacement vector transform coefficient predictor 20014 is added to the residual displacement vector transform coefficient (dispLevel) inversely quantized by the displacement vector transform coefficient inverse quantizer 20012 to obtain the displacement vector transform coefficient (curdispLevel), and the displacement vector transform coefficient is output to the displacement vector inverse transformer 20015.

In FIG. 41, the displacement vector transform coefficient (refDispLevel) predicted by the Displacement vector coefficient packer 12013 is added to the residual displacement vector transform coefficient (dispLevel) decoded by the transform coefficient decoder 20011 to obtain the displacement vector transform coefficient (curdispLevel), and the displacement vector transform coefficient is output to the displacement vector inverse transformer 20015.

When performing inverse quantization in FIGS. 40 and 41, the quantization parameter (QP) for each axis may be transmitted in units of sequence or frame, and when only the displacement vector of the normal component is encoded/decoded (onlyNormFlag=1), the quantization rate may be determined by parsing only the quantization parameter for the normal component.

According to embodiments, the transform coefficient may be quantized through different quantization parameters for respective axes, and a quantization rate may be determined for each LoD level by deriving a quantization parameter or a scaling parameter according to an encoder/decoder agreement.

In FIGS. 40 and 41, the displacement vector inverse transformer 20015 or 21015 performs inverse transformation on the displacement vector transform coefficients for which inverse quantization has been performed to reconstruct the displacement vector. Transformation may be performed by lifting transform, wavelet transform, and the like depending on the embodiment.

When lifting transformation is performed, if a vertex Rk of a kth subdivision level is predicted, prediction of a displacement vector of the kth subdivision level may be performed through the subdivision vertex displacement vector of Rt (t<k or t<=k) as a predictor. According to an embodiment, when performing prediction of a displacement vector, an average or distance-based weighted average prediction may be performed on n points close to the current vertex based on connection information among vertices with a lower level of detail than the current vertex. According to an embodiment, prediction may be performed based on the displacement vectors of n vertices used to generate the current vertex in the mesh subdivision step. When lifting inverse transformation is performed, a process of updating the displacement vector of the vertex used for prediction in the decoder may be performed through the parsed residual signal.

According to embodiments, signaling information in a transmission device (or an encoder of the transmission device) may be generated in a metadata processor (not shown, may be referred to as a metadata generator, or the like) and provided to corresponding blocks in the transmission device and/or a reception device (or a decoder of the reception), and a metadata parser (not shown) of the reception device may parse the received signaling information and provide it to the corresponding blocks. According to embodiments, each block of the reception device may perform each operation based on signaling information.

FIG. 42 is a diagram showing an example of the structure of an atlas sequence parameter set (ASPS) among signaling information in a bitstream according to embodiments. In particular, FIG. 42 is a diagram showing an example of the atlas sequence parameter set extension RBSP syntax and semantics structure. That is, ASPS may be extended from the atlas sequence parameters to include more parameters regarding displacement vector encoding.

In FIG. 42, asp_vdmc_ext_packing_method indicates a packing order method of displacement vector coefficients. For example, when this value is 0, it may indicate that the displacement vector coefficients are packed in positive order (e.g., from the top left to the bottom right), and when this value is 1, it may indicate that the displacement vector coefficients are packed in negative order (e.g., from the bottom right to the top left). For example, when asps_vdmc_ext_packing_method=1, i.e., encoding is performed in reverse packing order, the relative packing position relative to the lower right position of the frame may be signaled.

asps_vdmc_ext_lod_packing_method is a variable that indicates the displacement vector packing method for each subdivision level.

FIG. 43 is a table showing examples of a displacement vector packing method (asps_vdmc_ext_lod_packing_method) according to embodiments.

For example, when a value of asps_vdmc_ext_lod_packing_method is 0, the displacement vector transform coefficients of all subdivision levels are packed together, when the value is 1, the packing is performed based on CTU (i.e., only the displacement vector of one subdivision level of the CTU is packed by considering the CTU boundary), and when the value is 2, the displacement vector transform coefficients of each subdivision level are packed into a rectangular area according to the start position information for each subdivision level (start_poisH_in_CTU[i] and/or start_poisW_in_CTU [i]).

asps_vdmc_ext_log2_block_size is a variable that indicates the size of the block in which the displacement vector is to be packed.

asps_vdmc_ext_log2_ctu_size_minus4 is a variable that represents the CTU size used when the displacement vector frame is compressed with a 2D video codec, which means log2(CTUSize)-4. That is, CTUSize=64. Parsing may be omitted when the encoder/decoder agrees that the CTU size is equal to asps_vdmc_ext_log2_block_size.

start_posH_in_CTU[i] is a variable indicating how many CTUs the packing start position of the i-th subdivision level differs in the height direction from the (reverse) packing start position in the displacement vector frame.

start_posW_in_CTU[i] is a variable indicating how many CTUs the packing start position of the i-th subdivision level differs in the width direction from the (reverse) packing start position in the displacement vector frame.

regionIdx[i] is a variable representing the MCTS EIS index (or subpicture id) of the i-th subdivision level (or LoD level).

FIG. 44 is a flowchart showing an example of a transmitting method according to embodiments. A transmitting method according to embodiments may include encoding mesh data (S31011) and transmitting a bitstream including the encoded mesh data (S31012). According to an embodiment, the bitstream transmitted in operation S31012 includes a base mesh bitstream, a displacement vector bitstream, and a texture map bitstream.

According to embodiments, the encoding of the mesh data (S31011) may include a process of encoding a base mesh, a process of encoding a displacement vector or displacement vector transform coefficients, and a process of encoding a texture map.

That is, in the process of encoding the base mesh, the original mesh to be transmitted is first simplified and mesh parameterized to generate the base mesh. The generated base mesh is quantized, and in the case of an inter frame, the motion vector is encoded by calculating the motion vector from the previously referenced reconstructed base mesh, and in the case of an intra frame, the motion vector is encoded through static mesh encoding and transmitted as a base mesh bitstream.

In the process of encoding the displacement vector (or displacement information), the displacement vector is calculated between the mesh data obtained by subdividing and fitting the simplified mesh through mesh simplification and the mesh data reconstructed from the previously encoded base mesh. To efficiently encode the calculated displacement vector, the displacement vector coordinate system is transformed into a local coordinate system, the displacement vector in the local coordinate system is transformed and quantized into a displacement vector transform coefficient, and then encoded into a displacement vector bitstream and transmitted.

The following describes in more detail the process of performing displacement vector transform coefficient image packing for each video image format during the displacement vector encoding process.

As described above, the quantized displacement vector transform coefficients are packed into a 2D image of size W×H in the Displacement vector coefficient packer 12013. In this case, to support partial decoding of displacement vectors up to a specific LoD level in the decoder of the reception device, displacement vectors for each subdivision level may be configured in packing units, and packing may be performed. In this case, a packing unit may be an MCTS or a subpicture. In the present disclosure, a packing unit may include one or more CTUs or one or more bx*by blocks. In particular, according to an embodiment of the present disclosure, the packing unit corresponding to each subdivision level is a rectangular shape (or rectangular area). In this case, all packing units may have the same width, or some packing units may have different widths. The packing units may all have the same height or some packing units may have different heights. In this case, the process of configuring displacement vectors (or displacement vector transform systems) for each subdivision level into packing units and packing and encoding the displacement vectors into an image will be described with reference to the descriptions of FIGS. 15 to 28, and will be omitted here to avoid repeated description.

According to the present disclosure, information (e.g., ASPS) such as information for identifying whether the packing method is reverse packing from the lower right to the upper left (asps_vdmc_ext_packing_method) and/or information for identifying the packing start position of the displacement vector for each subdivision level for the entire frame (start_posW_in_ctu and/or start_posH_in_ctu) may be signaled as shown in FIG. 42. Then, the 2D image packed through the Displacement vector coefficient packer 12013 is encoded through a 2D video encoder such as H.264, HEVC, or VVC in the displacement vector image/video encoder 12014 to be generated in a displacement vector bitstream.

Finally, in the process of encoding the texture map, a new texture map having color information corresponding to the texture coordinates of the reconstructed mesh is generated through a texture map generator 11026, and the generated texture map is encoded through the texture map encoder (i.e., a 2D video encoder) 11027 and transmitted in a texture bitstream.

In operation S31012 of transmitting a bitstream including the mesh data, the base mesh bitstream, displacement vector bitstream, and texture bitstream generated as described above in operation S31011 of encoding the mesh data are generated into one bitstream through a multiplexer, and transmitted to a reception device through a transmitter.

FIG. 45 is a flowchart showing an example of a receiving method according to embodiments. The receiving method according to embodiments may include operation S32011 of receiving a bitstream including mesh data and operation S32012 of decoding the mesh data included in the bitstream. According to an embodiment, operation S32011 of receiving the bitstream including the mesh data includes receiving a bitstream including a base mesh bitstream, a displacement vector bitstream, and a texture map bitstream. Operation S32011 of receiving the bitstream including the mesh data includes receiving signaling information including an atlas sequence parameter set (ASPS). In this case, the signaling information may be included in the bitstream and received and may also be called metadata.

According to embodiments, operation S32012 of decoding the mesh data may include a process of decoding a base mesh bitstream, a process of decoding a displacement vector bitstream, and a process of decoding a texture map bitstream.

That is, in operation S32011 of receiving a bitstream including mesh data, the received bitstream is demultiplexed into a base mesh bitstream, a displacement vector bitstream, and a texture map bitstream through a demultiplexer, and then a process of decoding each of the bitstreams is performed.

First, in the process of decoding the base mesh bitstream, the base mesh bitstream is decoded through a motion vector encoder 15012 for inter frames and through the static mesh decoder 15013 for intra frames. The decoded base mesh undergoes mesh subdivision through the base mesh reconstructor 15014.

In the process of decoding the displacement vector bitstream, the displacement vector bitstream is decoded in the reverse order of encoding through the displacement vector decoder 15017, inverse quantization and inverse transformation are performed, and the displacement vector coordinate system inverse transformer 15020 is inversely transformed to a coordinate system and then reconstructed into mesh geometry information along with the base mesh data.

In this case, the process of partially decoding the displacement vector bitstream based on the reverse packing identification information (asps_vdmc_ext_packing_method) and/or start position information (start_posW_in_ctu and/or start_posH_in_ctu) included in the signaling information (e.g., ASPS) in the displacement vector decoder 15017 is described with reference to FIGS. 29 to 41, and a detailed description thereof is omitted here to avoid repeated description.

In the process of decoding the texture map bitstream, the received texture map bitstream is decoded through the texture map decoder 15021. The decoded texture map, together with the geometry information reconstructed in the mesh reconstructor 15016, generates the final reconstructed mesh.

As described above, the present disclosure describes a displacement vector packing/unpacking method and high level signaling for supporting partial decoding of displacement vectors by LoD. In the present disclosure, there is an effect that enables decoding of a specific LoD area in a decoder by configuring each subdivision level () of a displacement vector into a rectangular packing unit (e.g., MCTS/sub-picture) and performing encoding/decoding. This allows for efficient partial access or scalable processing.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception apparatus including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations may be made in the present disclosure without departing from the spirit and scope of the disclosure. Thus, it is intended that the present disclosure cover the modifications and variations of the present disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the 3D data transmission/reception apparatus and system. It will be apparent to those skilled in the art that various changes or modifications may be made to the embodiments within the scope of the embodiments. Thus, it is intended that the embodiments cover modifications and variations provided they come within the scope of the appended claims and their equivalents.

**Claims**

1. A decoding method comprising:

   receiving a bitstream including mesh data; and
   decoding the mesh data.

2. The method of claim 1, wherein the decoding of the mesh data includes:

   base mesh processing for reconstructing a base mesh from a base mesh bitstream included in the bitstream;
   displacement information processing for reconstructing displacement information from a displacement vector bitstream included in the bitstream;
   reconstruction processing for reconstructing a mesh based on the base mesh and the displacement information; and
   texture map processing for reconstructing a texture map from a texture map bitstream included in the bitstream.

3. The method of claim 2, wherein the displacement information processing includes:

   decoding the displacement vector bitstream into the displacement information; and
   performing reverse packing on at least one packing unit in which some of the decoded displacement information is packed based on a target level of the mesh to be reconstructed.

4. The method of claim 3, wherein the at least one packing unit is configured in a rectangular area, and widths of the at least one packing unit are all the same.

5. The method of claim 3, wherein the bitstream includes information for identifying a start position of the at least one packing unit or information for identifying an order of the reverse packing.

6. A decoding device comprising:

   a receiver configured to receive a bitstream including mesh data; and
   a decoder configured to decode the mesh data.

7. The device of claim 6, wherein the decoder includes:

   a base mesh processor configured to reconstruct a base mesh from a base mesh bitstream included in the bitstream;
   a displacement information processor configured to reconstruct displacement information from a displacement vector bitstream included in the bitstream;
   a reconstructor configured to reconstruct a mesh based on the base mesh and the displacement information; and
   a texture map processor configured to reconstruct a texture map from a texture map bitstream included in the bitstream.

8. The device of claim 7, wherein the displacement information processor includes:

   a displacement information decoder configured to decode the displacement vector bitstream into the displacement information; and
   a displacement information reverse packer configured to perform reverse packing on at least one packing unit in which some of the decoded displacement information is packed based on a target level of the mesh to be reconstructed.

9. The device of claim 8, wherein the at least one packing unit is configured in a rectangular area, and widths of the at least one packing unit are all the same.

10. The device of claim 8, wherein the bitstream includes information for identifying a start position of the at least one packing unit or information for identifying an order of the reverse packing.

11. An encoding method comprising:

encoding mesh data; and
transmitting a bitstream including the encoded mesh data.

12. The method of claim 11, wherein the encoding includes:

base mesh processing for generating a base mesh bitstream by encoding a base mesh generated by simplifying an original mesh;
displacement information processing for generating a displacement vector bitstream by encoding displacement information generated based on the base mesh;
mesh reconstructing for reconstructing a mesh based on the encoded base mesh and the encoded displacement information; and
texture map processing for generating a texture map bitstream by encoding a texture map generated based on the original mesh and the reconstructed mesh.

13. The method of claim 12, wherein the displacement information processing includes:

configuring a packing unit for each subdivision level and performing packing with the packing unit for displacement information for each subdivision level; and
encoding displacement information packed into the packing unit.

14. The method of claim 13, wherein the packing unit is configured in a rectangular area, and widths of respective packing units are the same.

15. The method of claim 13, wherein the bitstream includes information for identifying a start position of the at least one packing unit or information for identifying an order of the packing.

# FIG. 1

TRANSMISSION DEVICE — 100

- Dynamic Mesh Video Acquisition — 101
- Dynamic Mesh Video Encoder — 102
- File/Segment Encapsulation Module — 103
- Transmitter (Communication Module) — 104

(Compressed) Bitstream

RECEPTION DEVICE — 110

- Renderer — 114
- Dynamic Mesh Video Decoder — 113
- File/Segment Decapsulation Module — 112
- Receiver (Communication Module) — 111

Feedback Information

# FIG. 2

Feedback

Static of dynamic
Mesh M(i)

Attribute map
A(i)

Pre-processing

Base mesh
m(i)

Displacements
d(i)

Encoder

Compressed bitstream
b(i)

200

201

# FIG. 3

EP 4 787 862 A1

# FIG. 4

vertex

original       1st subdivision
result       2nd subdivision
result

# FIG. 5

300

Fitted
subdiv. mesh → Compute Local
Coordinates
System
(Optional)

Recon.
Base → Subdivision → Subdivided
mesh                  recon. Base
mesh

→ Compute
Displacements → Displacements
$(d_x, d_y, d_z)$ or $(d_n, d_t, d_b)$

EP 4 787 862 A1

**FIG. 6**

Input Mesh → Pre Processing (200)

base mesh m(i) → Quantization (411) → Static Mesh Encoder (412) → Compressed base mesh bitstream

(201)

Static Mesh Decoder (413) → Inverse Quant. (414) → Recon base mesh m'(i) (415)

Fitted subdiv mesh → Compute Displacements (415)

displacements d(i) → Forward Linear Lifting (416)

Lifting coefficients e(i) → Quantization (417)

Quantized Lifting coefficients e'(i) → Image Packing (418)

Image Packing (419) → Video Encoding (419) → Compressed displacements bitstream

Video Encoding → Video Decoding (420) → Image Unpacking (421)

Image Unpacking → Inverse Quant. (422) → Inverse Linear Lifting (423)

Recon displacements d'(i) → Reconstruct deformed mesh (424)

Recon deformed mesh DM'(i) (426) → Attribute Transfer (425)

Input Attribute map A(i) → Attribute Transfer (425)

Generate attribute map A'(i)

Attribute Transfer → Push-Pull Padding (426) → Color Space conversion (427) → Video Encoding (428) → Compressed attribute bitstream

MUX (430) → Compressed bitstream

50

# FIG. 7

FIG. 8

Prediction process:

$$\text{Signal}(v) \leftarrow \text{Signal}(v) - \frac{1}{2}(\text{Signal}(v_1) + \text{Signal}(v_2))$$

Update process:

$$\text{Signal}(v_1) \leftarrow \text{Signal}(v_1) + \frac{1}{8}\text{Signal}(v)$$

$$\text{Signal}(v_2) \leftarrow \text{Signal}(v_2) + \frac{1}{8}\text{Signal}(v)$$

EP 4 787 862 A1

# FIG. 9

Lifting coefficients

n = # of vertex of the subdivied base mesh

| C$_0$ | C$_1$ | C$_2$ | C$_3$ | C$_4$ | C$_5$ | ... | C$_{n-3}$ | C$_{n-2}$ | C$_{n-1}$ |

Low frequency(LoD$_0$)　　　　High frequency

Packing

16개

h개

16

16

16

16

C$_0$ → C$_1$　　C$_4$ → C$_5$　↗ ...

C$_2$ → C$_3$　　→　→　　...

→ ...

→ ...

⋮ ⋮ ⋮ ⋮ ⋱

→ 2D Morton code

# FIG. 10

Recon. deformed mesh =
Input Mesh                    Subdivided recon. base mesh + Recon. displacements

Texture Domain  3D Domain        3D Domain    Texture Domain

Input Attribute map                              Generated Attribute map

# FIG. 11

Intra frame decoding (610)

- DEMUX (611)
  - Compressed bitstream → DEMUX
  - → Patch information
  - Mesh sub-stream → Static Mesh Decoder (612) → Recon. quantized base mesh → Inverse Quantization (620) → Recon. base mesh → Reconstruct Deformed mesh (630) → Decoded mesh
  - Displacements sub-stream → Video Decoding (613) → Image Unpacking (614) → Inverse Quantization (615) → Inverse Linear Lifting (616) → Recon. displacements → Reconstruct Deformed mesh (630)
  - Attribute map sub-stream → Video Decoding (617) → Color format/space conversion (640) → Decoded Attribute map

EP 4 787 862 A1

# FIG. 12

# FIG. 13

EP 4 787 862 A1

# FIG. 14

FIG. 15

# FIG. 16

```
     12011              12012              12013              12014
 ┌──────────────┐  ┌──────────────┐  ┌──────────────┐  ┌──────────────┐
 │ Displacement │  │ Displacement │  │ Displacement │  │ Displacement │
 │    vector    │→ │vector coeffic│→ │    vector    │→ │    vector    │
 │ transformer  │  │ient quantizer│  │coefficient   │  │image/video   │
 │              │  │              │  │packer        │  │encoder       │
 └──────────────┘  └──────────────┘  └──────────────┘  └──────────────┘
```

# FIG. 17

$$N$$

| $C_1$ | $C_2$ | $\cdots$ | $C_{N_0}$ | $C_{N_0+1}$ | $\cdots$ | $C_{N_1}$ | $\cdots$ | $C_{N-2}$ | $C_{N-1}$ | $C_n$ |

$$N_0(LoD_0=R_0)$$

$$N_1-N_0(R_1)$$ $\cdots$

$$N_1(LoD_1)$$

# FIG. 18

# FIG. 19

# FIG. 20

Example of x-y Morton code packing
when bx=by=4

Example of y-x Morton code packing
when bx=by=4

# FIG. 21

*sps_packing_method* = 0

(a)

*sps_packing_method* = 1

(b)

$\square$ : MCTS (or subpicture)

$\square$ : CTU

# FIG. 22

*sps_packing_method* = 0

(a)

*sps_packing_method* = 1

(b)

: MCTS (or subpicture)

: CTU

# FIG. 23

First MCTS
(or subpicture)

R₂ (First element)

R₂ (Second element)

R₂ (Third element)

Second MCTS
(or subpicture)

R₁ (First element)

R₁ (Second element)

R₁ (Third element)

Third MCTS
(or subpicture)

R₀ (First element)

R₀ (Second element)

R₀ (Third element)

# FIG. 24

First MCTS
(or subpicture)

R₂ (First element)

Second MCTS
(or subpicture)

R₁ (First element)

Third MCTS
(or subpicture)

R₀ (First element)

Fourth MCTS
(or subpicture)

R₂ (Second element)

Fifth MCTS
(or subpicture)

R₁ (Second element)

Sixth MCTS
(or subpicture)

R₀ (Second element)

Seventh MCTS
(or subpicture)

R₂ (Third element)

Eighth MCTS
(or subpicture)

R₁ (Third element)

Ninth MCTS
(or subpicture)

R₀ (Third element)

# FIG. 25

$asps\_vdmc\_ext\_packing\_method = 0$

$start\_posH\_in\_ctu[0] = h_0$

$start\_posH\_in\_ctu[1] = h_1$

$start\_posH\_in\_ctu[2] = h_2$

$R_0$

$R_1$

$R_2$

(a)

$asps\_vdmc\_ext\_packing\_method = 1$

$R_2$

$R_1$

$R_0$

$start\_posH\_in\_ctu[2] = h_2$

$start\_posH\_in\_ctu[1] = h_1$

$start\_posH\_in\_ctu[0] = h_0$

(b)

# FIG. 26

$start\_posW\_in\_ctu[1] = w_1,$
$start\_posH\_in\_ctu[1] = h_1$

$start\_posW\_in\_ctu[0] = w_0,$
$start\_posH\_in\_ctu[0] = h_0$

$start\_posW\_in\_ctu[2] = w_2,$
$start\_posH\_in\_ctu[2] = h_2$

$start\_posW\_in\_ctu[3] = w_3,$
$start\_posH\_in\_ctu[3] = h_3$

$asps\_vdmc\_ext\_packing\_method = 0$

R0    R1

R2

R3

(a)

$asps\_vdmc\_ext\_packing\_method = 1$

R3

R2

R1    R0

$start\_posW\_in\_ctu[3] = w_3,$
$start\_posH\_in\_ctu[3] = h_3$

$start\_posW\_in\_ctu[2] = w_2,$
$start\_posH\_in\_ctu[2] = h_2$

$start\_posW\_in\_ctu[0] = w_0,$
$start\_posH\_in\_ctu[0] = h_0$

$start\_posW\_in\_ctu[1] = w_1,$
$start\_posH\_in\_ctu[1] = h_1$

(b)

# FIG. 27

# FIG. 28

Displacement vector transform coefficient buffer — 14013

Displacement vector transformer — 14011

Displacement vector transform coefficient quantizer — 14012

Displacement vector transform coefficient predictor — 14014

Displacement vector encoder — 14015

# FIG. 29

# FIG. 30

16011 — Motion component decoder

16012 — Motion vector predictor

16013 — Motion vector buffer

# FIG. 31

17011            17012            17013

Reconstructed vertex information → | Reconstructed base mesh normal calculator | → | Reconstructed base mesh normal subdivider | → | Subdivision vertex normal interpolator | →

# FIG. 32

```
              18011                        18012

Reconstructed    ┌─────────────────┐      ┌─────────────────┐
   vertex     ──▶│  Reconstructed  │──▶   │   Subdivision   │──▶
 information      │    base mesh    │      │     vertex      │
                  │ normal subdivider│      │ normal calculator│
                  └─────────────────┘      └─────────────────┘
```

# FIG. 33

EP 4 787 862 A1

```
Displacement        19011              19012              19013              19014              19015
vector      ──►  Video high level ──► Video        ──► Displacement  ──► Displacement  ──► Displacement
bitstream        information           decoder          vector transform    vector transform    vector inverse
                 rewriter                               coefficient         coefficient         transformer
                                                        reverse packer      inverse quantizer
```

# FIG. 34

Displacement vector frame

# FIG. 35

# FIG. 36

(a)

(b)

# FIG. 37

# FIG. 38

(a)

(b)

# FIG. 39

Frame padding area

Example of y-x Morton code packing

Example of x-y Morton code packing

EP 4 787 862 A1

# FIG. 40

```
                                              20013
                                        ┌──────────────┐
                                        │ Displacement │
                                        │vector transform│
                                        │ coefficient  │
                                        │   buffer     │
                                        └──────┬───────┘
                                               │
                                               ▼
┌──────────────┐   ┌──────────────┐   ┌──────────────┐   ┌──────────────┐
│  Transform   │   │ Displacement │   │ Displacement │   │ Displacement │
│ coefficient  │──▶│vector transform│─▶│vector transform│─▶│   vector     │
│   decoder    │   │ coefficient  │   │ coefficient  │   │inverse transformer│
│              │   │inverse quantizer│  │  predictor   │   │              │
└──────────────┘   └──────────────┘   └──────────────┘   └──────────────┘
      20011             20012             20014             20015
```

# FIG. 41

21012

Displacement
vector transform
coefficient
buffer

| Transform coefficient decoder | Displacement vector transform coefficient predictor | Displacement vector transform coefficient buffer inverse quantizer | Displacement vector inverse transformer |

21011        21013        21014        21015

# FIG. 42

| asps_vdmc_extension( ) { | Descriptor |
|---|---|
|    asps_vdmc_ext_subdivision_method | u(3) |
|    if(asps_vdmc_ext_subdivision_method != 0) | |
|      asps_vdmc_ext_subdivision_iteration_count | u(8) |
|    ... | |
|    asps_vdmc_ext_packing_method | u(1) |
|    asps_vdmc_ext_lod_packing_method | u(2) |
|    asps_vdmc_ext_log2_block_size | u(3) |
|    asps_vdmc_ext_log2_ctu_size_minus4 | u(2) |
|    if(asps_vdmc_ext_lod_packing_method==rectangular_packing){ | |
|      for(i=0; i<asps_vdmc_ext_subdivision_iteration_count; i++){ | |
|        start_posH_in_CTU[i] | ue(v) |
|        start_posW_in_CTU[i] | ue(v) |
|        regionIdx[i] | u(2) or ue(v) |
|      } | |
|    ... | |
| } | |

# FIG. 43

| asps_vdmc_ext_lod_packing_method | Displacement vector packing method |
|---|---|
| 0 | Per-frame packing |
| 1 | CTU-based packing |
| 2 | Rectangular region packing |
| 3 | reserved |

# FIG. 44

| Encode mesh data | S31011 |

↓

| Transmit bitstream including mesh data | S31012 |

# FIG. 45

| | |
|---|---|
| Receive bitstream including mesh data | ~S32011 |

| | |
|---|---|
| Decode mesh data | ~S32012 |

# EP 4 787 862 A1

## INTERNATIONAL SEARCH REPORT

International application No.

**PCT/KR2024/014876**

### A. CLASSIFICATION OF SUBJECT MATTER

**H04N 19/597**(2014.01)i; **H04N 19/30**(2014.01)i; **H04N 19/119**(2014.01)i

According to International Patent Classification (IPC) or to both national classification and IPC

### B. FIELDS SEARCHED

Minimum documentation searched (classification system followed by classification symbols)

H04N 19/597(2014.01); G06T 17/20(2006.01); G06T 9/00(2006.01); H04N 19/132(2014.01); H04N 19/184(2014.01); H04N 19/54(2014.01); H04N 19/70(2014.01); H04N 21/234(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메쉬(mesh), 비트스트림(bitstream), 기본(base), 변위(displacement), 벡터(vector), 텍스처(texture)

### C. DOCUMENTS CONSIDERED TO BE RELEVANT

| Category* | Citation of document, with indication, where appropriate, of the relevant passages | Relevant to claim No. |
|---|---|---|
| X | WO 2023-172098 A1 (LG ELECTRONICS INC.) 14 September 2023 (2023-09-14) See paragraphs [0431] and [0661]; claims 10-11; and figure 57. | 1,6,11 |
| Y | | 2-5,7-10,12-15 |
| Y | MPEG 3D Graphics Coding. V-DMC codec description. N0570. ISO/IEC JTC 1/SC 29/WG 7. Antalya, TR. pp. 1-30, 17 July 2023. See pages 3-9; and figures 2 and 10. | 2-5,7-10,12-15 |
| X | KR 10-1815979 B1 (SAMSUNG ELECTRONICS CO., LTD.) 08 January 2018 (2018-01-08) See claim 20. | 1,6,11 |
| X | KR 10-2023-0051201 A (TENCENT AMERICA LLC) 17 April 2023 (2023-04-17) See claim 1. | 1,6,11 |
| X | WO 2022-191543 A1 (HYUNDAI MOTOR COMPANY et al.) 15 September 2022 (2022-09-15) See claim 1. | 1,6,11 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 January 2025** | **17 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014876**

| Patent document cited in search report | | | Publication date (day/month/year) | Patent family member(s) | | | Publication date (day/month/year) |
|---|---|---|---|---|---|---|---|
| WO | 2023-172098 | A1 | 14 September 2023 | KR | 10-2024-0144967 | A | 04 October 2024 |
| KR | 10-1815979 | B1 | 08 January 2018 | KR | 10-2012-0085134 | A | 31 July 2012 |
| | | | | US | 2012-0188241 | A1 | 26 July 2012 |
| | | | | US | 2015-0002511 | A1 | 01 January 2015 |
| | | | | US | 8860719 | B2 | 14 October 2014 |
| | | | | US | 9607434 | B2 | 28 March 2017 |
| KR | 10-2023-0051201 | A | 17 April 2023 | CN | 116711305 | A | 05 September 2023 |
| | | | | EP | 4205081 | A1 | 05 July 2023 |
| | | | | JP | 2024-516057 | A | 12 April 2024 |
| | | | | US | 11922664 | B2 | 05 March 2024 |
| | | | | US | 2023-0105452 | A1 | 06 April 2023 |
| | | | | WO | 2023-059975 | A1 | 13 April 2023 |
| WO | 2022-191543 | A1 | 15 September 2022 | CN | 116965034 | A | 27 October 2023 |
| | | | | KR | 10-2022-0126225 | A | 15 September 2022 |
| | | | | US | 2023-0410374 | A1 | 21 December 2023 |

Form PCT/ISA/210 (patent family annex) (July 2022)